# EUROPÄISCHE PATENTSCHRIFT

(11) **EP 1 646 810 B1**
(45) Veröffentlichungstag und Bekanntmachung des Hinweises auf die Patenterteilung: **25.04.2007**
(21) Anmeldenummer: 04740367.0
(22) Anmeldetag: 28.06.2004
(51) Int. Cl.: F16H 3/66, F16D 25/10

(54) **MEHRSTUFEN-AUTOMATGETRIEBE MIT DREI PLANETENRADSÄTZEN**
AUTOMATIC MULTI-STEP GEAR BOX PROVIDED WITH THREE PLANETARY WHEELSETS
BOITE DE VITESSES AUTOMATIQUE A PLUSIEURS ETAGES COMPORTANT TROIS TRAINS PLANETAIRES

(30) Priorität: 23.07.2003 DE 10333435
(43) Veröffentlichungstag der Anmeldung: 19.04.2006
(73) Patentinhaber: ZF FRIEDRICHSHAFEN AG, 88038 Friedrichshafen (DE)
(72) Erfinder: TIESLER, Peter, 88074 Meckenbeuren (DE); ZIEMER, Peter, 88069 Tettnang (DE)
(86) Internationale Anmeldenummer: PCT/EP2004/006966
(87) Internationale Veröffentlichungsnummer: WO 2005/019692

(56) Entgegenhaltungen:
- EP-A- 0 605 953
- DE-A- 19 912 480
- US-A- 5 232 411
- US-A- 5 533 945
- US-A- 5 647 816

## Beschreibung

Die vorliegende Erfindung betrifft ein Mehrstufen-Automatgetriebe mit mindestens drei Einzel-Planetenradsätzen und mindestens fünf Schaltelementen, nach dem Oberbegriff des Patentanspruchs 1, bzw. des Patentanspruchs 2.

Automatgetriebe mit mehreren, ohne Gruppenschaltung schaltbaren Gängen sind vielfältig bekannt. Aus der DE 199 12 480 A1 beispielsweise ist ein gattungsgemäßes Automatgetriebe mit drei Einsteg-Planetenradsätzen sowie drei Bremsen und zwei Kupplungen zum Schalten von sechs Vorwärtsgängen und einem Rückwärtsgang bekannt, das für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Die einzelnen Gänge werden durch selektives Schließen von jeweils zwei der sechs Schaltelemente erzielt, sodaß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Dabei ist eine Antriebswelle des Automatgetriebes ständig mit einem Sonnenrad des zweiten Planetenradsatzes verbunden. Weiterhin ist die Antriebswelle über die erste Kupplung mit einem Sonnenrad des ersten Planetenradsatzes und/oder über die zweite Kupplung mit einem Steg des ersten Planetenradsatzes verbindbar. Zusätzlich oder alternativ ist das Sonnenrad des ersten Planetenradsatzes über die erste Bremse mit einem Gehäuse des Automatgetriebes und/oder der Steg des ersten Planetenradsatzes über die zweite Bremse mit dem Gehäuse und/oder ein Sonnenrad des dritten Planetenradsatzes über die dritte Bremse mit dem Gehäuse verbindbar.

Für die kinematische Kopplung der einzelnen Planetenradsätze miteinander offenbart die DE 199 12 480 A1 zwei verschiedene Versionen. In der ersten Version ist vorgesehen, daß eine Abtriebswelle des Automatgetriebes ständig mit einem Steg des dritten Planetenradsatzes und einem Hohlrad des ersten Planetenradsatzes verbunden ist, und daß der Steg des ersten Planetenradsatzes ständig mit einem Hohlrad des zweiten Planetenradsatzes und ein Steg des zweiten Planetenradsatzes ständig mit einem Hohlrad des dritten Planetenradsatzes verbunden ist. Die Antriebs- und die Abtriebswelle können dabei sowohl koaxial zueinander auf gegenüberliegenden Seiten des Getriebegehäuses angeordnet sein, als auch achsparallel auf derselben Seite des Getriebegehäuses. In der zweiten Version ist vorgesehen, daß die Abtriebswelle ständig mit dem Steg des zweiten Planetenradsatzes und dem Hohlrad des ersten Planetenradsatzes verbunden ist, daß der Steg des ersten Planetenradsatzes ständig mit dem Hohlrad des dritten Planetenradsatzes verbunden ist, und daß das Hohlrad des zweiten Planetenradsatzes ständig mit dem Steg des dritten Planetenradsatzes verbunden ist. Eine derartige Ausbildung ist besonders für eine koaxiale Anordnung von An- und Abtriebswellen geeignet.

Hinsichtlich der räumlichen Anordnung der Planetenradsätze schlägt die DE 199 12 480 A1 vor, die drei Planetenradsätze koaxial in Reihe nebeneinander anzuordnen, wobei der zweite Planetenradsatz axial zwischen dem ersten und dritten Planetenradsatz angeordnet ist. Hinsichtlich der räumlichen Anordnung der einzelnen Schaltelemente relativ zueinander und relativ zu den Planetenradsätzen schlägt die DE 199 12 480 A1 vor, die erste und zweite Bremse stets unmittelbar nebeneinander anzuordnen, wobei die zweite Bremse stets unmittelbar axial an den ersten Planetenradsatz angrenzt, und die dritte Bremse stets auf der dem ersten Planetenradsatzes abgewandten Seite des dritten Planetenradsatzes anzuordnen, sowie die beiden Kupplungen stets unmittelbar nebeneinander anzuordnen. In einer ersten Anordnungsvariante sind beide Kupplungen auf der dem dritten Planetenradsatz abgewandten Seite des ersten Planetenradsatzes angeordnet, wobei die erste Kupplung axial unmittelbar an die erste Bremse angrenzt und näher am ersten Planetenradsatz angeordnet ist als die zweite Kupplung. In Verbindung mit einer nicht koaxialen Lage von Antriebs- und Abtriebswelle wird in einer zweiten Anordnungsvariante vorgeschlagen, daß beide Kupplungen auf der dem ersten Planetenradsatz abgewandten Seite des dritten Planetenradsatzes angeordnet sind, wobei die zweite Kupplung näher am dritten Planetenradsatz angeordnet ist als die erste Kupplung und axial an ein mit der Abtriebswelle wirkverbundenes Abtriebsstirnrad angrenzt, welches wiederum auf der dem dritten Planetenradsatz abgewandten Seite der dritten Bremse angeordnet ist.

Der vorliegenden Erfindung liegt die Aufgabe zugrunde, für das aus dem Stand der Technik der DE 199 12 480 A1 bekannte Automatgetriebe alternative Bauteilanordnungen darzustellen, mit möglichst kompaktem Getriebeaufbau. Vorzugsweise soll das Automatgetriebe in einem Kraftfahrzeug mit nicht koaxial zueinander angeordneter Antriebs- und Abtriebswelle Anwendung finden können, durch vergleichsweise einfache Modifikationen möglichst aber auch bei koaxialer Antriebs- und Abtriebswelle einsetzbar sein.

Erfindungsgemäß gelöst wird die Aufgabe durch ein Mehrstufen-Automatgetriebe mit den Merkmalen des Patentanspruchs 1 bzw. 2. Vorteilhafte Ausgestaltungen und Weiterbildungen der Erfindung ergeben sich aus den Unteransprüchen.

Ausgehend vom gattungsgemäßen Stand der Technik der DE 199 12 480 A1, weist das erfindungsgemäße Mehrstufen-Automatgetriebe mindestens drei gekoppelte Einzel-Planetenradsätze auf, die koaxial zueinander und räumlich gesehen nebeneinander angeordnet sind, wobei der zweite Planetenradsatz räumlich gesehen stets zwischen dem ersten und dritten Planetenradsatz angeordnet ist. Weiterhin weist das erfindungsgemäße Automatgetriebe mindestens fünf Schaltelemente auf. Ein Sonnenrad des dritten Planetenradsatzes ist über das als Bremse ausgebildete erste Schaltelement an einem Getriebegehäuse des Automatgetriebes festsetzbar. Eine Antriebswelle des Automatgetriebes ist ständig mit einem Sonnenrad des zweiten Planetenradsatzes verbunden. Weiterhin ist die Antriebswelle über das als Kupplung ausgebildete zweite Schaltelement mit einem Sonnenrad des ersten Planetenradsatzes und zusätzlich oder alternativ über das als Kupplung ausgebildete fünfte Schaltelement mit einem Steg des ersten Planetenradsatzes verbindbar. Alternativ ist das Sonnenrad des ersten Planetenradsatzes über das als Bremse ausgebildete dritte Schaltelement und/oder der Steg des ersten Planetenradsatzes über das als Bremse ausgebildete vierte Schaltelement an dem Getriebegehäuse festsetzbar. Sind also das zweite und fünfte Schaltelement gleichzeitig betätigt, so sind Sonnenrad und Steg des ersten Planetenradsatzes miteinander verbunden.

Eine Abtriebswelle des Mehrstufen-Automatgetriebes ist ständig mit einem Hohlrad des ersten Planetenradsatzes wirkverbunden, wobei das Hohlrad des ersten Planetenradsatzes zusätzlich ständig entweder mit einem Steg des dritten Planetenradsatzes oder einem Steg des zweiten Planetenradsatzes verbunden ist.

Wie bei der gattungsgemäßen DE 199 12 480 A1 ist der Steg des ersten Planetenradsatzes (je nach Radsatzkonzept) zusätzlich entweder ständig mit dem Hohlrad des zweiten Planetenradsatzes oder ständig mit dem Hohlrad des dritten Planetenradsatzes verbunden. Falls Hohlrad des ersten Planetenradsatzes und Steg des dritten Planetenradsatzes und Abtriebswelle miteinander gekoppelt sind, ist der Steg des zweiten Planetenradsatzes ständig mit einem Hohlrad des dritten Planetenradsatzes und der Steg des ersten Planetenradsatzes ständig mit einem Hohlrad des zweiten Planetenradsatzes verbunden. Falls Hohlrad des ersten Planetenradsatzes und Steg des zweiten Planetenradsatzes und Abtriebswelle miteinander gekoppelt sind, ist der Steg des dritten Planetenradsatzes ständig mit dem Hohlrad des zweiten Planetenradsatzes und der Steg des ersten Planetenradsatzes ständig mit dem Hohlrad des dritten Planetenradsatzes verbunden.

Gemäß der Erfindung sind das zweite Schaltelement, über das die Antriebswelle mit dem Sonnenrad des ersten Planetenradsatzes verbindbar ist, und das fünfte Schaltelement, über das die Antriebswelle mit dem Steg des ersten Planetenradsatzes verbindbar ist, zu einer Baugruppe zusammengefaßt, die räumlich gesehen an den ersten Planetenradsatz angrenzt. Dabei weist diese Baugruppe zumindest je ein Lamellenpaket des zweiten und fünften Schaltelementes, einen für das zweite und fünfte Schaltelement gemeinsamen Lamellenträger zur Aufnahme von Außen- oder Belaglamellen der Lamellenpakete des zweiten und fünften Schaltelementes, sowie je eine Servoeinrichtung zur Betätigung der jeweiligen Lamellenpakete des zweiten bzw. fünften Schaltelementes auf. Die beiden Lamellenpakete (des zweiten und fünften Schaltelementes) dieser Baugruppe sind räumlich gesehen axial nebeneinander angeordnet. Einerseits ist dabei das Lamellenpaket des zweiten Schaltelementes näher am zweiten (mittleren) Planetenradsatz angeordnet als das Lamellenpaket des fünften Schaltelementes. Andererseits ist dabei ein Druckraum der Servoeinrichtung des fünften Schaltelementes näher am ersten bzw. zweiten Planetenradsatz angeordnet als ein Druckraum der Servoeinrichtung des zweiten Schaltelementes.

Die Lamellenpakete des zweiten und fünften Schaltelementes können einen zumindest ähnlichen oder auch einen deutlich unterschiedlichen Reibflächen-Durchmesser aufweisen. Zum einen kann also vorgesehen sein, daß die Lamellenpakete des zweiten und fünften Schaltelementes auf einem zumindest ähnlichen Durchmesser angeordnet sind, wobei dann das Lamellenpaket des zweiten Schaltelementes näher am ersten bzw. zweiten Planetenradsatz angeordnet ist als das Lamellenpaket des fünften Schaltelementes. In diesem Fall ist dann also das Lamellenpaket des zweiten Schaltelementes unmittelbar benachbart zum ersten Planetenradsatz angeordnet. In vorteilhafter Weise können hierbei für die Innen- und Außenlamellen (bzw. Belag- und Stahl-Lamellen) dieser beiden Lamellenpakete jeweils auch Gleichteile vorgesehen sein.

Zum anderen kann aber auch vorgesehen sein, daß das Lamellenpaket des zweiten Schaltelementes einen größeren Reibflächen-Durchmesser aufweist als das Lamellenpaket des fünften Schaltelementes, wobei dann das Lamellenpaket des zweiten Schaltelementes vorzugsweise in axialer Richtung gesehen zumindest teilweise radial oberhalb des ersten Planetenradsatzes angeordnet ist und das Lamellenpaket des fünften Schaltelementes in radialer Richtung gesehen zumindest teilweise axial neben dem ersten Planetenradsatz angeordnet ist. In diesem Fall sind dann also beide Lamellenpakete der aus dem zweiten und fünften Schaltelement bestehenden Baugruppe unmittelbar benachbart zum ersten Planetenradsatz angeordnet.

In einer vorteilhaften Ausgestaltung der Erfindung bildet der für das zweite und fünfte Schaltelement gemeinsame Lamellenträger einen Kupplungsraum, innerhalb dessen das Lamellenpaket und die Servoeinrichtung des fünften Schaltelementes angeordnet sind. Die Druckräume der beiden Servoeinrichtungen des zweiten und fünften Schaltelementes sind dabei durch eine Mantelfläche des für das zweite und fünfte Schaltelement gemeinsamen Lamellenträgers voneinander getrennt, wobei die Betätigungsrichtungen der Servoeinrichtungen des zweiten und fünften Schaltelementes beim Betätigen des jeweiligen Lamellenpaketes (also beim Schließen des jeweiligen Schaltelementes) entgegengesetzt zueinander sind. Dabei weist der Kolben der Servoeinrichtung des zweiten Schaltelementes dann einen auf das Lamellenpaket des zweiten Schaltelementes wirkenden Betätigungs-Stempel auf, der das Lamellenpaket des zweiten Schaltelementes in axialer Richtung radial vollständig übergreift. In diesem Fall grenzen die Druckräume der Servoeinrichtungen des zweiten und fünften Schaltelementes vorzugsweise beide unmittelbar an die Mantelfläche des für das zweite und fünfte Schaltelement gemeinsamen Lamellenträgers an. Zum dynamischen Druckausgleich des jeweiligen rotierenden Druckraumes vorgesehene Druckausgleichsräume der Servoeinrichtungen des zweiten und fünften Schaltelementes sind dann jeweils auf der Seite des jeweiligen Druckraumes angeordnet, die der Lamellenträger-Mantelfläche abgewandt ist.

In einer weiteren Ausgestaltung der Erfindung sind das dritte Schaltelement, über welches das Sonnenrad des ersten Planetenradsatzes an dem Getriebegehäuse festsetzbar ist, und/oder das vierte Schaltelement, über welches der Steg des ersten Planetenradsatzes (und das mit diesem Steg verbundene Hohlrad des zweiten oder dritten Planetenradsatzes) an dem Getriebegehäuse festsetzbar ist, räumlich gesehen in einem Bereich radial über den nebeneinander in Reihe angeordneten Planetenradsätzen angeordnet. Das dritte Schaltelement ist dabei vorzugsweise in axialer Richtung gesehen radial oberhalb des ersten und/oder zweiten (mittleren) Planetenradsatzes angeordnet. Entsprechend ist das vierte Schaltelement vorzugsweise in axialer Richtung gesehen radial oberhalb des zweiten (mittleren) und/oder dritten Planetenradsatzes angeordnet. Das dritte Schaltelement ist also vorzugsweise näher an der das zweite und fünfte Schaltelement umfassenden Baugruppe angeordnet als das vierte Schaltelement. Das dritte und vierte Schaltelement können dabei ebenfalls als vormontierbare Baugruppe zusammengefaßt sein, beispielsweise mit einem gemeinsamen getriebegehäusefesten Außenlamellenträger und axial nebeneinander angeordneten Lamellenpaketen, wobei in diesen gemeinsamen Außenlamellenträger auch die Servoeinrichtungen des dritten und vierten zumindest teilweise integriert sein können.

In einer weiteren Ausgestaltung der Erfindung ist das erste Schaltelement, über welches das Sonnenrad des dritten Planetenradsatzes an dem Getriebegehäuse festsetzbar ist, auf der Seite des dritten Planetenradsatzes angeordnet, die dem zweiten (bzw. fünften) Schaltelement gegenüber liegt.

Für die Anwendung mit zueinander nicht koaxialer Antriebs- und Abtriebswelle, insbesondere für Anwendungen mit achsparallel oder winklig zueinander angeordneter Antriebs- und Abtriebswelle, wird vorgeschlagen, das erste Schaltelement benachbart zu einer Außenwand des Getriebegehäuses und einen Stirntrieb oder Kettentrieb räumlich gesehen axial zwischen dem dritten Planetenradsatz und dem ersten Schaltelement anzuordnen. Dabei ist dann ein erstes Stirnrad des Stirntriebs bzw. ein erstes Kettenrad des Kettentriebs mit dem Hohlrad des ersten Planetenradsatzes und - je nach Radsatzkonzept - entweder dem Steg des dritten oder des zweiten Planetenradsatzes verbunden. Entsprechend ist dann ein weiteres Stirnrad des Stirntriebs bzw. ein zweites Kettenrad des Kettentriebs mit der Abtriebswelle des Automatgetriebes verbunden. In fertigungstechnisch günstiger Weise kann eine Servoeinrichtung und/oder ein Lamellenträger des als Bremse ausgebildeten ersten Schaltelementes in eine Außenwand bzw. einen gehäusefesten Deckel der Getriebegehäuses integriert sein.

In einer anderen Ausgestaltung der Stirntrieb- bzw. Kettentrieb-Anordnung kann aber auch vorgesehen sein, daß das erste Schaltelement zumindest teilweise axial neben dem dritten Planetenradsatz auf dessen dem zweiten Planetenradsatz gegenüberliegenden Seite angeordnet ist, und daß der Stirntrieb- bzw. Kettentrieb räumlich gesehen auf der anderen Seite des ersten Schaltelementes (also auf der dem dritten Planetenradsatz gegenüberliegenden Seite des ersten Schaltelementes) angeordnet ist. Dabei durchgreift dann eine mit dem Hohlrad des ersten Planetenradsatzes und dem Steg des dritten bzw. zweiten Planetenradsatzes verbundene Nabe des ersten Stirnrades des Stirntriebs bzw. des erstes Kettenrads des Kettentriebs das Sonnenrad des dritten Planetenradsatzes in axialer Richtung zentrisch. Bei einer derartigen Anordnung kann das als Bremse ausgebildete erste Schaltelement dabei räumlich gesehen neben dem ebenfalls als Bremse ausgebildeten vierten Schaltelement angeordnet sein, wobei dann vorzugsweise ein gleicher Lamellendurchmesser für dieser beiden Schaltelemente vorgesehen ist (Gleichteile-Konzept).

In einer weiteren Ausgestaltung der Stirntrieb- bzw. Kettentrieb-Anordnung kann auch vorgesehen sein, daß das erste Schaltelement räumlich gesehen zumindest weitgehend radial über dem dritten Planetenradsatz angeordnet ist, und daß der Stirntrieb- bzw. Kettentrieb räumlich gesehen auf der dem zweiten Planetenradsatz gegenüberliegenden Seite des dritten Planetenradsatzes axial an den dritten Planetenradsatz und das erste Schaltelement angrenzt.

Für die Anwendung mit koaxialer Antriebs- und Abtriebswelle wird vorgeschlagen, daß die Abtriebswelle des Automatgetriebes das neben dem dritten Planetenradsatz angeordnete erste Schaltelement und das Sonnenrad des dritten Planetenradsatzes in axialer Richtung zentrisch durchgreift und räumlich gesehen im Bereich axial zwischen dem zweiten und dritten Planetenradsatz mit den Steg des dritten bzw. zweiten Planetenradsatzes verbunden ist.

Durch die erfindungsgemäße Bauteilanordnung wird gegenüber dem Stand der Technik der DE 199 12 480 A1 ein deutlich kompakterer Getriebeaufbau mit vorteilhaft kurzer Baulänge erzielt. Hierdurch eignet sich die erfindungsgemäße Bauteilanordnung besonders für einen Einbau in ein Kraftfahrzeug mit Front-Quer-Antrieb (und zueinander achsparalleler Antriebs- und Abtriebswelle). Prinzipiell ist die erfindungsgemäße Bauteilanordnung jedoch auch für den Einbau in ein Kraftfahrzeug mit Standard-Antrieb (und zueinander koaxialer Antriebs- und Abtriebswelle) oder Front-Längs-Antrieb bzw. Heck-Längs-Antrieb (und zueinander winkliger Lage von Antriebs- und Abtriebswelle) geeignet.

Die vorgeschlagene räumliche Anordnung des zweiten und vierten Schaltelementes auf großem Durchmesser trägt der konzeptbedingt hohen thermischen bzw. statischen Belastung dieser beiden Schaltelemente besonders Rechnung. Die Anordnung des dritten und vierten (und gegebenenfalls auch ersten) Schaltelementes nebeneinander ermöglicht die Verwendung von Gleichteilen sowie eine einfache Fertigungs- und Montage-Technologie. Die vorgeschlagene Verschachtelung von dem fünften und dem zweiten Schaltelement ineinander ermöglicht einerseits eine gute konstruktive Ausgestaltung der Servoeinrichtungen dieser beiden rotierenden Schaltelemente inclusive dynamischem Druckausgleich, andererseits auch eine fertigungstechnisch günstige (und damit kostengünstige) funktionelle Mehrfachnutzung einzelner Bauteile und eine gute Vormontierbarkeit dieser Baugruppe (aus zweitem und fünften Schaltelement).

Durch diese kinematische Koppelung der einzelnen Radsatzelemente untereinander und mit der Antriebs- und Abtriebswelle über fünf Schaltelemente sind - wie beim Stand der Technik der DE 199 12 480 A1 - insgesamt sechs Vorwärtsgänge derart schaltbar, daß beim Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Die Erfindung wird im folgenden anhand der Figuren näher erläutert, wobei ähnliche Elemente auch mit ähnlichen Bezugszeichen versehen sind. Es zeigen
- Fig. 1: ein Getriebeschema gemäß dem Stand der Technik;
- Fig. 2: ein alternative Bauteilanordnung zu Fig. 1 gemäß dem Stand der Technik;
- Fig. 3: eine beispielhafte schematische Bauteilanordnung gemäß der Erfindung;
- Fig. 4: ein Schaltschema des Getriebes gemäß Fig. 3;
- Fig. 5: eine Detaillierung der schematischen Bauteilanordnung gemäß Fig. 3;
- Fig. 6: einen sektionalen Getriebeschnitt eines Getriebes gemäß Fig. 5, mit einer ersten beispielhaften Detailkonstruktion;
- Fig. 7: einen sektionalen Getriebeschnitt eines Getriebes gemäß Fig. 5, mit einer zweiten beispielhaften Detailkonstruktion;
- Fig. 8: einen sektionalen Getriebeschnitt eines beispielhaften Getriebes gemäß Fig. 5;
- Fig. 9: einen sektionalen Getriebeschnitt eines erfindungsgemäßen Getriebes, auf Basis des Getriebes gemäß Fig. 5, mit einer beispielhaften alternativen Stirnradstufen-Ausgestaltung;
- Fig. 10: einen sektionalen Getriebeschnitt mit einer dritten beispielhaften Detailkonstruktion;
- Fig. 11: einen sektionalen Getriebeschnitt mit einer vierten beispielhaften Detailkonstruktion;
- Fig. 12: einen sektionalen Getriebeschnitt mit einer fünften beispielhaften Detailkonstruktion; und
- Fig. 13: einen sektionalen Getriebeschnitt mit.einer sechsten beispielhaften Detailkonstruktion.

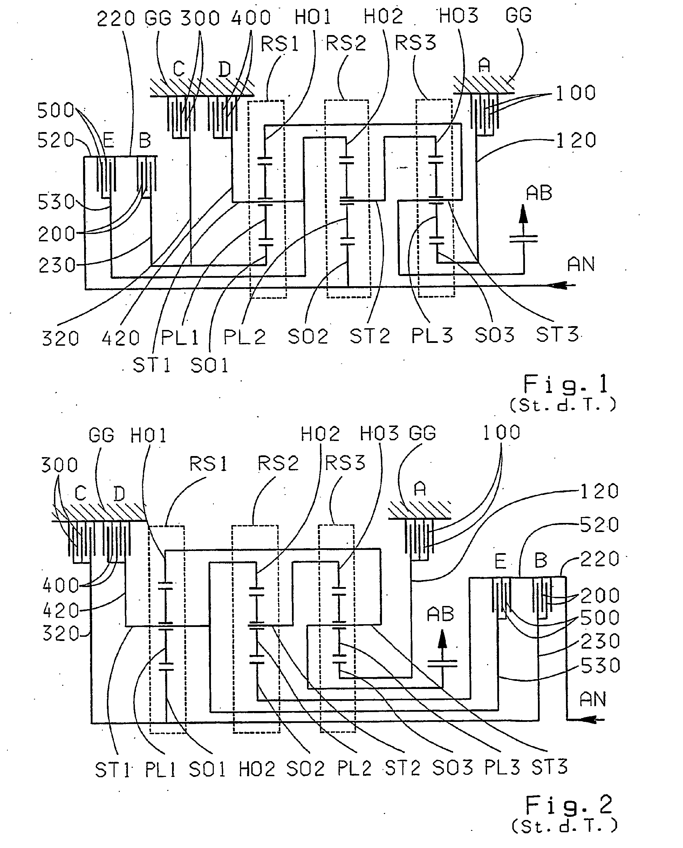

Zur Verdeutlichung der erfindungsgemäßen Bauteileanordnungen sind in Fig. 1 und Fig. 2 zunächst zwei verschiedene Bauteilanordnungen eines Getriebeschemas für ein Mehrstufen-Automatgetriebes mit nicht koaxialer Anordnung von Antiebs- und Abtriebswelle dargestellt, wie aus dem Stand der Technik der DE 199 12 480 A1 bekannt. Derartige Anordnungen können beispielsweise Anwendung in einem Kraftfahrzeug mit Front-Quer-Antrieb finden. Die mit AN bezeichnete Antriebswelle des Automatgetriebes ist einem (zur Vereinfachung hier nicht dargestellten) Antriebsmotor des Automatgetriebes wirkverbunden, beispielsweise über einen Drehmomentwandler oder eine Anfahrkupplung oder einen Torsionsdämpfer oder ein Zweimassenschwungrad oder eine starre Welle. Die mit AB bezeichnete Abtriebswelle des Automatgetriebes ist mit mindestens einer (zur Vereinfachung hier ebenfalls nicht dargestellten) Antriebsachse des Kraftfahrzeugs wirkverbunden. RS1, RS2 und RS3 bezeichnen drei gekoppelte Einfach-Planetenradsätze, die nebeneinander in Reihe in einem Getriebegehäuse GG des Automatgetriebes angeordnet sind. Alle drei Planetenradsätze RS1, RS2, RS3 weisen jeweils ein Sonnenrad SO1, SO2 und SO3, jeweils ein Hohlrad HO1, HO2 und HO3, sowie jeweils einen Steg ST1, ST2 und ST3 mit Planetenrädern PL1, PL2 und PL3, die jeweils mit Sonnen- und Hohlrad des entsprechenden Radsatzes kämmen, auf. Mit A bis E sind fünf Schaltelemente bezeichnet, wobei das erste, dritte und vierte Schaltelement A, C, D als Bremse und das zweite und fünfte Schaltelement B, E als Kupplung ausgeführt sind. Die jeweiligen Reibbeläge der fünf Schaltelemente A bis E sind als Lamellenpakete 100, 200, 300, 400 und 500 (jeweils mit Außen- und Innenlamellen bzw. Stahl- und Belaglamellen) angedeutet. Die jeweiligen Eingangselemente der fünf Schaltelemente A bis E sind mit 120, 220, 320, 420 und 520 bezeichnet, die jeweiligen Ausgangselemente der Kupplungen B und E mit 230 und 530. Die kinematische Anbindung der einzelnen Radsatzelemente und Schaltelemente relativ zueinander und relativ zu Antriebs- und Abtriebswelle AN, AB wurde bereits eingangs detailliert beschrieben, ebenso die räumliche Anordnung dieser Bauelemente.

Hervorzuheben ist in diesem Zusammenhang, daß die Lamellen 100 des (als Bremse ausgebildeten) ersten Schaltelementes A räumlich gesehen stets neben dem dritten Planetenradsatz RS3 angeordnet sind, daß die Lamellen 400 des (als Bremse ausgebildeten) vierten Schaltelementes D räumlich gesehen stets neben dem ersten Planetenradsatz RS1 angeordnet sind, daß die Lamellen 300 des (ebenfalls als Bremse ausgebildeten) dritten Schaltelementes C räumlich gesehen stets neben den Lamellen 400 des vierten Schaltelementes D (auf der dem dritten Planetenradsatz RS3 abgewandten Seite der Bremse D) angeordnet sind, daß die Lamellen 200 des (als Kupplung ausgebildeten) zweiten Schaltelementes B und die Lamellen 500 des (ebenfalls als Kupplung ausgebildeten) fünften Schaltelementes E stets nebeneinander angeordnet sind, und daß ein erstes Stirnrad STR1, welches abtriebsseitig mit der Abtriebswelle AB wirkverbunden ist, stets neben dem ersten Schaltelement A (auf der dem dritten Planetenradsatze RS3 abgewandten Seite der Bremse A) angeordnet ist.

Die beiden nebeneinander angeordneten Lamellenpakete 200, 500 der beiden Kupplungen B, E sind entweder - wie in Fig. 1 dargestellt - axial neben den Lamellen 300 der Bremse C angeordnet, und zwar auf der dem dritten Planetenradsatz RS3 abgewandten Seite des Lamellenpaketes 300, oder aber - wie in Fig. 2 dargestellt - neben dem Stirnrad STR1, und zwar auf der zur Bremse A gegenüberliegenden Seite des Stirnrads STR1.

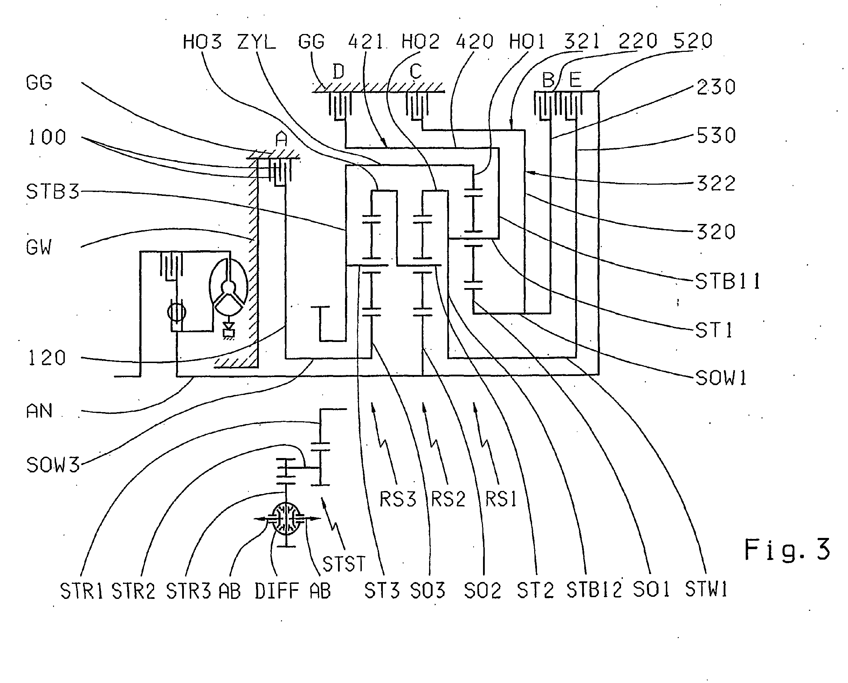

Anhand der Figuren 3 bis 13 werden im folgenden mehrere Beispiele und Detailkonstruktionen für eine erfindungsgemäße Bauteilanordnung erläutert.

Fig. 3 zeigt nun eine schematische Bauteilanordnung, beispielhaft für die erfindungsgemäße Lösung der Aufgabe. Ausgehend vom zuvor beschriebenen Stand der Technik der DE 199 12 480 A1 weist das erfindungsgemäße Mehrstufen-Automatgetriebe drei gekoppelte, koaxial zueinander in Reihe angeordnete Einzel-Planetenradsätze RS1, RS2, RS3 auf, wobei der zweite Planetenradsatz RS2 axial zwischen dem ersten und dritten Planetenradsatz RS1, RS3 angeordnet ist. Weiterhin weist das Automatgetriebe fünf Schaltelemente A bis E auf. Das erste, dritte und vierte Schaltelement A, C, D ist jeweils als Bremse (im Beispiel jeweils als Lamellenbremse) ausgebildet, das zweite und fünfte Schaltelement B, E jeweils als Kupplung (im Beispiel jeweils als Lamellenkupplung). Ein Sonnenrad SO3 des dritten Planetenradsatzes RS3 ist über die Bremse A an einem Getriebegehäuse GG des Automatgetriebes festsetzbar. Eine Antriebswelle AN des Automatgetriebes ist ständig mit einem Sonnenrad SO2 des zweiten Planetenradsatzes RS2 verbunden. Weiterhin ist die Antriebswelle AN über die Kupplung B mit einem Sonnenrad SO1 des ersten Planetenradsatzes RS1 und zusätzlich oder alternativ über die Kupplung E mit einem Steg ST1 des ersten Planetenradsatzes RS1 verbindbar. Alternativ ist das Sonnenrad SO1 des ersten Planetenradsatzes RS1 über die Bremse C und/oder der Steg ST1 des ersten Planetenradsatzes RS1 über die Bremse D an dem Getriebegehäuse GG festsetzbar.

Eine Abtriebswelle AB des Automatgetriebes ist über eine Stirnradstufe STST ständig mit einem Hohlrad HO1 des ersten Planetenradsatzes RS1 wirkverbunden, wobei dieses Hohlrad HO1 bei der dargestellten beispielhaften Koppelung der Radsatzelemente zusätzlich ständig mit einem Steg ST3 des dritten Planetenradsatzes RS3 verbunden ist. Weiterhin ist ein Steg ST2 des zweiten Planetenradsatzes RS2 ständig mit einem Hohlrad HO3 des dritten Planetenradsatzes RS3 verbunden, sowie der Steg ST1 des ersten Planetenradsatzes RS1 ständig mit einem Hohlrad HO2 des zweiten Planetenradsatzes RS2. Das entsprechende Verbindungselement zwischen dem Hohlrad HO1 des ersten Planetenradsatzes RS1 und dem Steg ST3 des dritten Planetenradsatzes RS3 ist als Zylinder ZYL ausgebildet. Dieser Zylinder ZYL ist einerseits mit dem Hohlrad HO1 über eine geeignete Wirkverbindung verbunden, beispielsweise über eine Schweißverbindung, und erstreckt sich in axialer Richtung von dem Hohlrad HO1 bis über das Hohlrad HO3 hinüber. Andererseits ist der Zylinder ZYL auf der dem zweiten Planetenradsatz RS2 abgewandten Seite des dritten Planetenradsatzes RS3 über eine geeignete Wirkverbindung mit einem Stegblech STB3 des Stegs ST3 verbunden, beispielsweise über ein Mitnahmeprofil. Der Zylinder ZYL übergreift den zweiten und dritten Planetenradsatz RS2, RS3 also vollständig.

Der erste Planetenradsatz RS1 wird in axialer Richtung von zwei Wellen zentrisch vollständig durchgriffen, nämlich von einer als Hohlwelle ausgebildeten Stegwelle STW1 und der radial innerhalb dieser Stegwelle STW1 geführten Antriebswelle AN. Dabei ist die Stegwelle STW1 auf der dem zweiten Planetenradsatz RS2 zugewandten Seite des ersten Planetenradsatzes RS1 mit einem Stegblech STB12 des Stegs ST1 des ersten Planetenradsatzes RS1, und auf der dem zweiten Planetenradsatz RS2 abgewandten Seite des ersten Planetenradsatzes RS1 mit einem Ausgangselement 530 der Kupplung E. Das Stegblech STB12 wiederum ist an seinem Außendurchmesser auch mit dem Hohlrad HO2 des zweiten Planetenradsatzes RS2 verbunden. Auf der dem zweiten Planetenradsatz RS2 abgewandten Seite des ersten Planetenradsatzes RS1 verläuft die Stegwelle STW1 radial innerhalb einer ebenfalls als Hohlwelle ausgebildeten Sonnenwelle SOW1. Diese Sonnenwelle SOW1 wiederum ist einerseits mit dem Sonnenrad SO1 des ersten Planetenradsatzes RS1 verbunden, andererseits auf der dem zweiten Planetenradsatz RS2 abgewandten Seite des ersten Planetenradsatzes RS1 mit einem Eingangselement 320 der Bremse C und einem Ausgangselement 230 der Kupplung B. Der Steg ST1 durchgreift den ersten Planetenradsatz RS1 in axialer Richtung und ist auf seiner dem zweiten Planetenradsatz RS2 abgewandten Seite mit einem Eingangselement 420 der Bremse D verbunden.

Die Antriebswelle AN durchgreift auch den zweiten (räumlich gesehen mittleren) Planetenradsatz RS2 und den dritten Planetenradsatz RS3 in axialer Richtung zentrisch.

Die Stirnradstufe STST grenzt auf der dem zweiten Planetenradsatz RS2 abgewandten Seite des Stegblechs STB3 an den dritten Planetenradsatz RS3 axial an. Dabei umfaßt die mehrrädrige Stirnradstufe STST ein erstes Stirnrad STR1, das ständig mit dem Stegblech STB3 des dritten Planetenradsatzes RS3 verbunden ist, ein zweites als Stufenzahnrad ausgebildetes Stirnrad STR2, dessen erste Verzahnung mit dem ersten Stirnrad STR1 kämmt, sowie ein drittes Stirnrad STR3, das mit einer zweiten Verzahnung des zweiten Stirnrades STR2 kämmt und über ein Differential DIFF mit der Abtriebswelle AB wirkverbunden ist. Selbstverständlich ist diese Ausgestaltung der Stirnradstufe STST als beispielhaft zu sehen. Der Fachmann wird diese Stirnradstufe STST beispielsweise auch durch einen Kettentrieb ersetzen, dessen erstes Kettenrad dann mit dem Stegblech STB3 des dritten Planetenradsatz RS3 verbunden ist, und dessen zweites Kettenrad dann (bei Bedarf über ein Differential) mit der Abtriebswelle AB verbunden ist.

Zentrisch innerhalb des ersten Stirnrades STR1 des Stirntriebs STST verläuft eine als Hohlwelle ausgebildete Sonnenwelle SOW3, die einerseits mit dem Sonnenrad SO3 des dritten Planetenradsatzes RS3 verbunden ist, andererseits auf der dem dritten Planetenradsatz RS3 abgewandten Seite des ersten Stirnrades STR1 mit einem Eingangselement 120 der Bremse A. Radial innerhalb dieser Sonnenwelle SOW3 verläuft wiederum die Antriebswelle AN.

Die Bremse A, über die das Sonnenrad SO3 des dritten Planetenradsatzes RS3 festsetzbar ist, ist räumlich gesehen auf der dem dritten Planetenradsatz RS3 abgewandten Seite der Stirnradstufe STST angeordnet. Dabei grenzt das als Innenlamellenträger ausgebildete Eingangselement 120 der Bremse A auf einer Seite axial an das erste Stirnrad STR1 der Stirnradstufe STST an, und auf der gegenüberliegenden Seite axial an eine verdrehfest mit dem Getriebegehäuse GG verbundenen Gehäusewand GW an. Selbstverständlich können Gehäusewand GW und Getriebegehäuse GG auch einstückig ausgeführt sein. Ein Lamellenpaket 100 der Bremse A mit Außenund Belaglamellen ist auf großem Durchmesser im Bereich des Innendurchmessers des Getriebegehäuses GG angeordnet. Ein Mitnahmeprofil für die Außenlamellen des Lamellenpaketes 100 kann in einfacher Weise in das Getriebegehäuse GG integriert sein. Selbstverständlich kann für die Bremse A aber auch ein separater Außenlamellenträger vorgesehen sein, der über geeignete Mittel mit dem Getriebegehäuse GG oder der getriebegehäusefesten Gehäusewand GW form-, kraft- oder stoffschlüssig verbunden ist. Eine hier zur Vereinfachung nicht dargestellte Servoeinrichtung der Bremse A zum Betätigen der Lamellen 100 kann räumlich gesehen zwischen Gehäusewand GW und dem Lamellenpaket 100 angeordnet sein, bei einer entsprechenden Ausbildung des Getriebegehäuses aber auch auf der Seite des Lamellenpaketes 100, die den ersten Stirnrad STR1 bzw. dem dritten Planetenradsatz RS3 zugewandt ist.

In dem in Fig. 3 dargestellten Beispiel durchdringt die zentrisch innerhalb des Eingangselementes 120 der Bremse A verlaufende Antriebswelle AN die Gehäusewand GW und wird somit an der Seite des Automatgetriebes nach außen geführt, an dem die Bremse A angeordnet ist, also nahe an der Stirnradstufe STST. Wie weiterhin in Fig. 3 ersichtlich, ist die Antriebswelle AN hier beispielhaft über einen Drehmomentwandler mit Überbrückungskupplung und Torsionsdämpfer an einen zur Vereinfachung nicht dargestellten Antriebsmotor des Automatgetriebes verbunden. Selbstverständlich kann der Drehmomentwandler auch durch ein geeignetes anderes Anfahrelement (beispielsweise eine Kupplung) ersetzt werden oder auch entfallen, wenn mindestens eines der getriebeinternen Schaltelemente als Anfahrschaltelement ausgelegt ist.

Wie in Fig. 3 weiterhin ersichtlich, sind die beiden Bremsen C, D räumlich gesehen nebeneinander in einem Bereich in axialer Richtung radial über den in Reihe angeordneten Planetenradsätzen angeordnet. Ein Lamellenpaket 400 mit Außen- und Belaglamellen der Bremse D ist dabei räumlich gesehen über dem dritten Planetenradsatz RS3 angeordnet, in axialer Richtung gesehen unmittelbar neben dem ersten Stirnrad STR1 der Stirnradstufe STST, auf einem großen Durchmesser im Bereich des Innendurchmessers des Getriebegehäuses GG. Ein Außenlamellenträger für die Außenlamellen des Lamellenpaketes 400 der Bremse D ist hierbei beispielhaft in das Getriebegehäuse GG integriert, kann aber selbstverständlich auch als separates Bauteil ausgeführt sein, welches dann über geeignete Mittel mit dem Getriebegehäuse verbunden ist. Ein als zylinderförmiger Innenlamellenträger ausgebildetes Eingangselement 420 der Bremse D erstreckt sich radial oberhalb des Zylinders ZYL in axialer Richtung über alle drei Planetenradsätze RS1, RS2, RS3 hinweg und ist mit einem ersten Stegblech STB11 des Stegs ST1 des ersten Planetenradsatzes RS1 verbunden, wobei dieses erste Stegblech STB11 auf der dem zweiten Planetenradsatzes RS2 abgewandten Seite des Stegs ST1 angeordnet ist. In dem dargestellten Beispiel übergreift der Innenlamellenträger (420) der Bremse D also alle drei Planetenradsätze RS1, RS2, RS3 in axialer Richtung vollständig. Je nach konstruktiver Ausgestaltung kann die räumliche Lage des Lamellenpaketes 400 der Bremse D jedoch auch axial in Richtung der zweiten Planetenradsatzes RS2 verschoben sein, sodaß der Innenlamellenträger (420) der Bremse D dann zumindest den ersten und zweiten Planetenradsatz RS1, RS2 in axialer Richtung vollständig übergreift.

Ein Lamellenpaket 300 mit Außen- und Belaglamellen der Bremse C ist benachbart zu dem Lamellenpaket 400 der Bremse D angeordnet, räumlich gesehen in etwa über dem zweiten Planetenradsatz RS2, ebenfalls auf einem großen Durchmesser im Bereich des Innendurchmessers des Getriebegehäuses GG. Ein Außenlamellenträger für die Außenlamellen des Lamellenpaketes 300 der Bremse C ist hierbei ebenfalls beispielhaft in das Getriebegehäuse GG integriert, kann aber selbstverständlich auch als separate getriebegehäusefestes Bauteil ausgeführt sein. Zur fertigungstechnischen Vereinfachung und kostengünstiger Gleichteileverwendung können für beide Bremsen C, D die gleichen Außen- und Belaglamellen vorgesehen sein. Ein als topfförmiger Innenlamellenträger ausgebildetes Eingangselement 320 der Bremse C weist einen zylindrischen Abschnitt 321 und einen scheibenförmigen Abschnitt 322 auf. Dieser zylindrische Abschnitt 321 erstreckt sich radial oberhalb eines zylinderförmigen Abschnitts 421 des Eingangselementes 420 der Bremse D in axialer Richtung über den ersten und zweiten Planetenradsatz RS1 und RS2 hinweg. Der scheibenförmige Abschnitt 322 schließt sich in diesem Bereich an den zylindrischen Abschnitt 321 an und erstreckt sich auf der dem zweiten Planetenradsatz RS2 abgewandten Seite des ersten Stegblechs STB11 radial nach innen bis zu der Sonnenwelle SOW1, mit der er verbunden ist. Wie bereits erwähnt, ist die Sonnenwelle SOW1 ihrerseits mit dem Sonnenrad SO1 des ersten Planetenradsatz RS1 verbunden. In dem dargestellten Beispiel übergreift der Innenlamellenträger (320) der Bremse C also die beiden Planetenradsätze RS1, RS2 vollständig. Je nach konstruktiver Ausgestaltung kann die räumliche Lage des Lamellenpaketes 300 der Bremse C jedoch auch axial verschoben sein, entweder in Richtung des ersten Planetenradsatzes RS1, sodaß der Innenlamellenträger (320) der Bremse C dann zumindest den ersten Planetenradsatz RS1 in axialer Richtung vollständig übergreift, oder aber in Richtung des dritten Planetenradsatzes RS3, sodaß der Innenlamellenträger (320) der Bremse C dann eventuell auch den dritten Planetenradsatz RS3 teilweise in axialer Richtung übergreift.

Auf konstruktive Einzelheiten zur Ausgestaltung von (in Fig. 3 zu Vereinfachung nicht dargestellten) Servoeinrichtungen der beiden Bremsen C, D zum Betätigen der jeweiligen Lamellen 300 bzw. 400 wird später noch im Detail eingegangen. Sinnvollerweise sind diese beiden Servoeinrichtungen entweder axial zwischen den beiden Lamellenpaketen 300, 400 angeordnet, oder aber die beiden Lamellenpaketen 300, 400 sind unmittelbar nebeneinander zwischen den beiden Servoeinrichtungen angeordnet. In diesen beiden Fällen weisen die Servoeinrichtungen der Bremsen C, D eine entgegengesetzte Betätigungsrichtung auf.

Die anderen zwei Schaltelemente B und E sind auf der dem zweiten Planetenradsatz RS2 abgewandten Seite des ersten Planetenradsatzes RS1 angeordnet, in dem in Fig. 3 dargestellten Beispiel auf zum (nicht dargestellten) Antriebsmotor entgegengesetzten Seite des Automatgetriebes. Zweckmäßigerweise sind beide Kupplungen B, E dabei als eine vormontierbare Baugruppe zusammengefaßt. Wie aus Fig. 3 ersichtlich, ist ein Lamellenpaket 200 mit Außen- und Belaglamellen der Kupplung B benachbart zum ersten Planetenradsatz RS1 angeordnet. Ein Lamellenpaket 500 mit Außen- und Belaglamellen der Kupplung E grenzt axial unmittelbar an das Lamellenpaket 200 der Kupplung B an, auf der dem Planetenradsatz RS1 gegenüberliegenden Seite des Lamellenpaketes 200. Die Lamellen 300 der Bremse C sind also näher an den Lamellen 200 der Kupplung B angeordnet als die Lamellen 400 der Bremse D.

Auf der dem Antriebsmotor gegenüberliegenden Seite des Automatgetriebes ist ein Eingangselement 520 der Kupplung E angeordnet, welches hier als Außenlamellenträger ausgebildet und mit der Antriebswelle AN verbunden ist. Ein ebenfalls als Außenlamellenträger ausgebildetes Eingangselement 220 der Kupplung B ist über das Eingangselement 520 der Kupplung E mit der Antriebswelle AN verbunden. Beide Außenlamellenträger (220, 520) können hierbei in vorteilhafter Weise als ein gemeinsamer Lamellenträger zusammengefaßt sein, was einerseits eine fertigungstechnische Vereinfachung und andererseits auch eine kostengünstige Gleichteileverwendung für die Außen- und Belaglamellen beider Kupplungen B, E ermöglicht.

Ein als Innenlamellenträger ausgebildetes Ausgangselement 230 der Kupplung B erstreckt sich - axial an den scheibenförmigen Abschnitt 322 des Innenlamellenträgers (320) der Bremse C angrenzend - radial nach innen bis zur Sonnenwelle SOW1 des ersten Planetenradsatzes RS1, mit der er verbunden ist. Zur Einsparung von Baulänge wird der Fachmann bedarfsweise den Innenlamellenträger (230) der Kupplung B und den scheibenförmigen Abschnitt 322 des Innenlamellenträgers (320) der Bremse C als gemeinsames Bauteil ausführen.

Ein ebenfalls als Innenlamellenträger ausgebildetes Ausgangselement 530 der Kupplung E erstreckt sich - axial zwischen dem scheibenförmigen Innenlamellenträger (230) der Kupplung B und dem scheibenförmigen Abschnitt des Außenlamellenträgers (520) der Kupplung E - radial nach innen bis zur Stegwelle STW1 des ersten Planetenradsatzes RS1, mit der er verbunden ist. Wie bereits erwähnt, durchgreift diese Stegwelle STW1 die Sonnenwelle SOW1 zentrisch und ist auf der dem zweiten Planetenradsatz RS2 benachbarten Seite des ersten Planetenradsatzes RS1 sowohl mit dem Steg ST1 des ersten Planetenradsatzes RS1 als auch mit dem Hohlrad HO2 des zweiten Planetenradsatzes RS2 verbunden.

Auf verschiedene sinnvolle räumliche Anordnungen und mögliche konstruktive Einzelheiten für (in Fig. 3 zur Vereinfachung nicht dargestellte) Servoeinrichtungen für beide Kupplungen B, E wird später noch im Detail eingegangen. Bei der in Fig. 3 dargestellten Anordnung ist es zweckmäßig, die Servoeinrichtung der Kupplung E innerhalb des Kupplungsraums anzuordnen, der durch den Außenlamellenträger (520) der Kupplung E gebildet wird.

Durch die in Fig. 3 dargestellte Bauteilanordnung wird ein räumlich gesehen insgesamt sehr kompakter, baulängensparender Getriebeaufbau erzielt. Die Lamellen 200 der thermisch hoch belasteten Kupplung B sind auf einen vorteilhaft großen Durchmesser angeordnet, ebenso die Lamellen 400 der statisch von allen fünf Schaltelementen am höchsten belasteten Bremse D. Zur Kosteneinsparung können für beide Bremsen C, D und für beide Kupplungen B, E gleiche Lamellentypen bzw. gleiche Lamellengrößen verwendet werden.

Da die Antriebswelle AN - wie zuvor erläutert - alle rotierenden Innenbauteile des Automatgetriebes in axialer Richtung gesehen durchgreift, wird der Fachmann den Antriebsmotor je nach Anwendungsfall wahlweise wie in Fig. 3 dargestellt an der Stirnseite des Automatgetriebes anordnen, an.der auch die Bremse A bzw. der Stirntrieb angeordnet ist, oder aber an der gegenüberliegenden Stirnseite des Automatgetriebes, an der auch die Baugruppe mit den beiden Kupplungen B, E angeordnet ist.

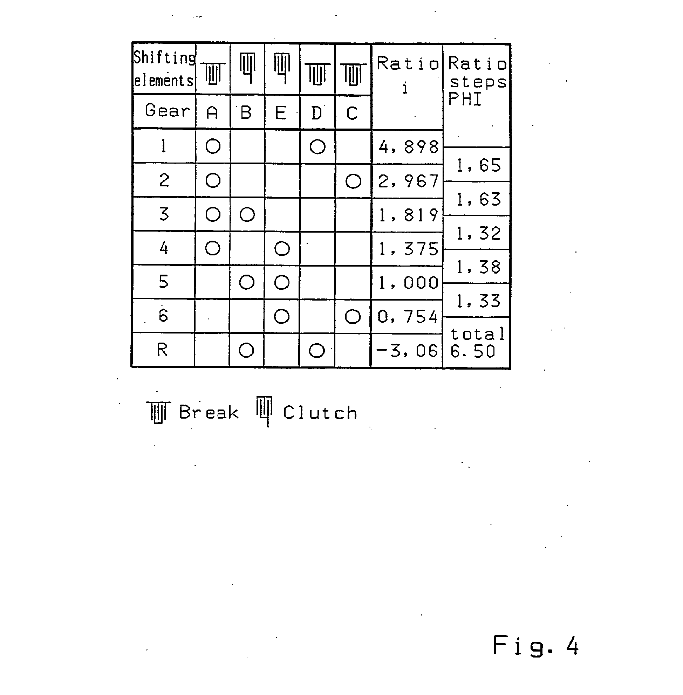

Fig. 4 zeigt ein Schaltschema mit den zugehörigen Gangsprüngen und der Gesamtübersetzung des Automatgetriebes gemäß Fig. 3. Durch selektives Schalten von jeweils zwei der fünf Schaltelemente A bis E sind sechs Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. In dem ersten Gang "1" sind die Bremsen A und D geschlossen, in dem zweiten Gang "2" die Bremsen A und C, in dem dritten Gang "3" Bremse A und Kupplung B, in dem vierten Gang "4" Bremse A und Kupplung E, in dem fünften Gang "5" die Kupplungen B und E, und in dem sechsten Gang "6" Bremse C und Kupplung E. In einem Rückwärtsgang "R" sind Kupplung B und Bremse D geschlossen. Dabei erlauben die einzelnen Gangsprünge eine gute Fahrbarkeit, mit vorteilhaft hoher Gesamtübersetzung (Spreizung) des Automatgetriebes.

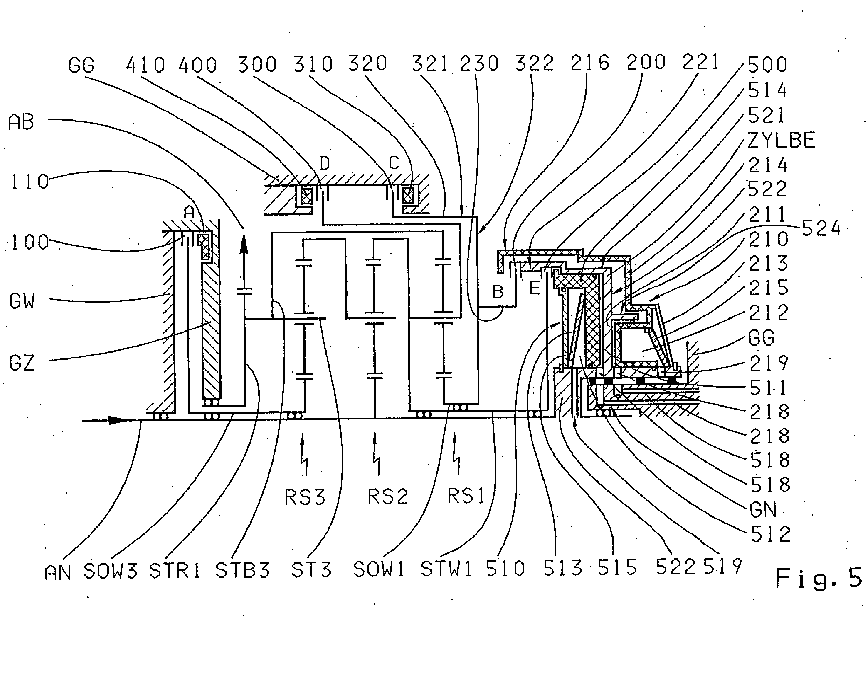

Fig. 5 zeigt eine Detaillierung der schematischen Bauteilanordnung gemäß Fig. 3, nunmehr ergänzt um radiale Wellen- und Bauteillagerungen und um Servoeinrichtungen der fünf Schaltelemente A bis E. Die kinematische Koppelung von den drei Einzel-Planetenradsätze RS1, RS2, RS3 und den fünf Schaltelementen A bis E und der Antriebs- und der Abtriebswelle AN, AB entspricht dem in Fig. 3 dargestellten Getriebeschema. Auch die räumliche Anordnung der Planetenradsätze RS1, RS2, RS3 und Schaltelemente A bis E relativ zueinander innerhalb des Getriebegehäuses GG wurde praktisch unverändert von Fig. 3 übernommen.

Die mit 110 bezeichnete Servoeinrichtung der Bremse A ist vereinfacht dargestellt und auf der Seite des Lamellenpaketes 100 der Bremse A angeordnet, die dem mit der Abtriebswelle AB wirkverbundenen ersten Stirnrad STR1 bzw. dem dritten Planetenradsatz RS3 zugewandt ist. Die Servoeinrichtung 110 umfaßt - wie üblich - einen Kolben, der in einem entsprechenden Kolben- bzw. Druckraum axial verschiebbar gelagert ist, sowie ein Rückstellelement für diesen Kolben. Bei einer Druckbeaufschlagung des Kolbenraums über eine entsprechende Druckmittelzufuhr betätigt der Kolben dann die Lamellen 100 der Bremse A gegen eine Rückstellkraft des Rückstellelementes axial in Richtung der Gehäusewand GW, welche - analog zu Fig. 3 - die dem Antriebsmotor zugewandte Außenwand des Automatgetriebes bildet. Dabei ist der Kolben- bzw. Druckraum der Servoeinrichtung 110 in eine Gehäusezwischenwand GZ integriert, die als Teil des Getriebegehäuses GG ausgebildet oder mit dem Getriebegehäuse GG verdrehfest verbunden ist und sich ausgehend vom Innendurchmesser des Getriebgehäuses radial nach innen erstreckt. Selbstverständlich kann die Gehäusezwischenwand GZ auch als separates Bauteil ausgeführt sein, das dann über geeignete Mittel verdrehfest mit dem Getriebegehäuse GG verbunden ist. An der Gehäusezwischenwand GZ ist auch das erste Stirnrad STR1 gelagert. Weiterhin ist in Fig. 5 in diesem Bereich eine radiale Lagerung zwischen Antriebswelle AN und Gehäusewand GW, sowie eine radiale Lagerung zwischen Sonnenwelle SOW3 und Antriebswelle AN angedeutet.

Analog zu Fig. 3 sind die beiden Bremsen C und D räumlich gesehen radial über den Planetenradsätzen RS1 bis RS3 angeordnet, die Bremse C in axialer Richtung gesehen in einem Bereich radial oberhalb des ersten und (mittleren) zweiten Planetenradsatzes RS1, RS2 und die Bremse D in axialer Richtung gesehen in einem Bereich radial oberhalb des (mittleren) zweiten und dritten Planetenradsatzes RS2, RS3. Ähnlich wie die Servoeinrichtung 110 der Bremse A, sind auch die mit 310 und 410 bezeichneten Servoeinrichtungen der Bremse C und D vereinfacht dargestellt und umfassen - wie üblich - je einen Kolben, der in einem entsprechenden Kolben- bzw. Druckraum axial verschiebbar gelagert ist, sowie je ein Rückstellelement für den jeweiligen Kolben. Bei einer Druckbeaufschlagung des jeweiligen Kolbenraums über eine entsprechende Druckmittelzufuhr betätigt der jeweilige Kolben dann die Lamellen 300 bzw. 400 der Bremse C bzw. D gegen eine Rückstellkraft des jeweiligen Rückstellelementes. In dem in Fig. 5 dargestellten Beispiel grenzen die Lamellenpakete 300, 400 der beiden Bremsen C, D unmittelbar axial aneinander. Die Servoeinrichtung 410 der Bremse D ist auf der dem Stirnrad STR1 bzw. der Bremse A bzw. der Gehäusewand GW zugewandten Seite des Lamellenpaketes 400 der Bremse D angeordnet und betätigt diese Lamellen 400 axial in Richtung der Bremse C. Die Servoeinrichtung 310 der Bremse C ist auf der zur Bremse D abgewandten Seite des Lamellenpaketes 300 der Bremse C angeordnet und betätigt diese Lamellen 300 axial in Richtung der Bremse D. Die Betätigungsrichtung beider Servoeinrichtungen 310, 410 ist also zueinander entgegengesetzt.

Analog zu Fig. 3 sind die Kupplungen B und E beide auf der dem zweiten Planetenradsatz RS2 gegenüberliegenden Seite des ersten Planetenradsatzes RS1 angeordnet, wobei die Lamellenpakete 200, 500 der Kupplungen B, E unmittelbar nebeneinander angeordnet sind, wobei das Lamellenpaket 200 der Kupplung B näher am ersten Planetenradsatz RS1 angeordnet ist als das Lamellenpaket 500 der Kupplung E, und wobei das Eingangselement der Kupplung E und das Eingangselement der Kupplung B als ein gemeinsamer Lamellenträger ZYLBE, hier in Funktion eines Außenlamellenträgers, ausgeführt sind. Dabei weist dieser Lamellenträger ZYLBE eine Nabe 523 auf, die mit der Antriebswelle AN verbunden ist und an einer getriebegehäusefesten Nabe GN gelagert ist. Aus der gewählten Nomenklatur ist ersichtlich, daß diese Nabe 523 dem Eingangselement (520) der Kupplung E zuzuordnen ist. Die getriebegehäusefesten Nabe GN ist ein zylindrischer Vorsprung einer Außenwand des Getriebegehäuses GG, der sich axial in Richtung des ersten Planetenradsatzes RS1 hin erstreckt. Selbstverständlich kann die Nabe GN auch in einen Gehäusedeckel integriert sein, der dann mit dem Getriebegehäuse über geeignete Mittel verdrehfest verbunden ist. Die Antriebswelle AN selber ist in dem dargestellten Beispiel auch an der Nabe GN gelagert. Weiterhin weist der für die Kupplungen B, E gemeinsame (Außen-)Lamellenträger ZYLBE geometrisch verschieden ausgebildete Abschnitte 521, 522, 524 und 221 auf, die von der Nomenklatur her entweder dem Eingangselement (520) der Kupplung E oder dem Eingangselement (220) der Kupplung B zuzuordnen sind. Der scheibenförmige Abschnitt 522 ist in axialer Richtung gesehen etwa nabenmittig mit der Nabe 523 verbunden und erstreckt sich, beginnend vom Außendurchmesser der Nabe 523, radial nach außen. Am Außendurchmesser dieses scheibenförmigen Abschnitts 522 schließt sich der zylinderförmige Abschnitt 521 an den scheibenförmigen Abschnitt 522 an und erstreckt sich axial in Richtung des ersten Planetenradsatzes RS1 bis über das Lamellenpaket 500 der Kupplung E. An seinem Innendurchmesser weist der zylinderförmige Abschnitt 521 ein geeignetes Mitnahmeprofil auf zur Aufnahme der Außenlamellen des Lamellenpaketes 500 der Kupplung E. Weiter in Richtung Planetenradsatz RS1 gesehen, schließt sich an den zylinderförmigen Abschnitt 521 ein (dem Eingangselement (220) der Kupplung B zuzuordnender) zylinderförmiger Abschnitt 221 an. An seinem Innendurchmesser weist dieser zylinderförmige Abschnitt 221 ein geeignetes Mitnahmeprofil auf zur Aufnahme der Außenlamellen des Lamellenpaketes 200 der Kupplung B. Auch wenn dies in dem in Fig. 5 dargestellten Beispiel nicht ersichtlich ist, kann vorgesehen sein, daß beide Mitnahmeprofile für die Aufnahme der Außenlamellen der Kupplungen E und B identisch sind.

Die Servoeinrichtung der Kupplung E ist mit 510 bezeichnet und innerhalb des Kupplungsraumes angeordnet, der durch den ersten zylindrischen Abschnitt 521 und den scheibenförmigen Abschnitt 522 des Eingangselementes 520 der Kupplung E gebildet wird, also auf der Seite des scheibenförmigen Abschnitts 522, die dem ersten Planetenradsatz RS1 zugewandt ist. Der erste zylindrische Abschnitt 521, der scheibenförmige Abschnitt 522 und die Nabe 523 des Lamellenträgers ZYLBE (bzw. des Eingangselementes (520) der Kupplung E) bilden einen Kolben- bzw. Druckraum 511, in dem ein Kolben 514 der Servoeinrichtung 510 axial verschiebbar angeordnet ist. Bei einer Druckbeaufschlagung des Druckraums 511 der Servoeinrichtung 510 betätigt der Kolben 514 die Lamellen 500 der Kupplung E axial in Richtung des ersten Planetenradsatzes RS1, gegen eine Rückstellkraft eines hier beispielhaft als Tellerfeder ausgeführten Rückstellelementes 513 der Servoeinrichtung 510. Die Druckmittelzufuhr zum Druckraum 511 erfolgt dabei über eine Druckmittelzuführung 518, die teilweise innerhalb der Nabe 523 und teilweise innerhalb der gehäusefesten Nabe GN verläuft.

Zum Ausgleich des dynamischen Druckes des stets mit einer Drehzahl der Antriebswelle AN rotierenden Druckraumes 511 weist die Servoeinrichtung 510 auch einen Druckausgleichsraum 512 auf, der auf der dem Druckraum 511 gegenüberliegenden Seite des Kolbens 514 angeordnet ist, von dem Kolben 514 und einer Stauscheibe 515 gebildet wird und geometrisch vorzugsweise derart ausgelegt ist, daß ein zumindest weitgehend vollständiger dynamischer Druckausgleich erzielt wird. Hierzu wird der Druckausgleichsraum 512 über eine Schmiermittelzuführung 519 drucklos mit Schmiermittel befüllt, wobei diese Schmiermittelzuführung 519 teilweise innerhalb der Nabe 523 und teilweise innerhalb der Antriebswelle AN verläuft.

Die Servoeinrichtung der Kupplung B ist mit 210 bezeichnet. Ein Kolben- bzw. Druckraum 211 dieser Servoeinrichtung 210 ist auf der Seite des scheibenförmigen Abschnitts 522 des gemeinsamen (Außen-)Lamellenträgers ZYLBE der Kupplungen E, B angeordnet, die dem Druckraum 511 der Kupplung E gegenüberliegt. Gebildet wird der Druckraum 211 durch die Nabe 523, den scheibenförmigen Abschnitt 522 und den zweiten zylindrischen Abschnitt 524 des Lamellenträgers ZYLBE (bzw. des Eingangselementes (520) der Kupplung E), wobei sich dieser zweite zylindrische Abschnitt 524 axial in zur Druckraum 511 der Kupplung E entgegengesetzte Richtung erstreckt. Innerhalb des Druckraums 211 ist ein Kolben 214 der Servoeinrichtung 210 axial verschiebbar angeordnet. Bei einer Druckbeaufschlagung des Druckraums 211 betätigt dieser Kolben 214 die Lamellen 200 der Kupplung B axial in zum ersten Planetenradsatzes RS1 entgegengesetzter Richtung, gegen eine Rückstellkraft eines hier beispielhaft als Tellerfeder ausgeführten Rückstellelementes 213 der Servoeinrichtung 210. Hierbei übergreift der Kolbens 214 den für beide Kupplungen E, B gemeinsamen Lamellenträger ZYLBE - insbesondere dessen Abschnitte 522, 524, 521 und 221 - in axialer Richtung radial vollständig. Dabei wirkt ein Betätigungs-Stempel 216 des Kolbens 214 von der Seite des Lamellenpaketes 200 aus auf dieses Lamellenpaket 200, die dem Druckraum 211 gegenüberliegt. Vorzugsweise ist die geometrische Kontur des Kolbens 214 an die Lamellenträger-Abschnitte 522, 524, 521 und 221 gebildete Mantelfläche des Lamellenträgers ZYLBE angepaßt. Die Druckmittelzufuhr zum Druckraum 211 erfolgt dabei über eine Druckmittelzuführung 218, die teilweise innerhalb der Nabe 523 und teilweise innerhalb der gehäusefesten Nabe GN verläuft.

Zum Ausgleich des dynamischen Druckes des stets mit einer Drehzahl der Antriebswelle AN rotierenden Druckraumes 211 weist die Servoeinrichtung 210 der Kupplung B auch einen Druckausgleichsraum 212 auf, der auf der dem Druckraum 211 gegenüberliegenden Seite des Kolbens 214 angeordnet ist. Gebildet wird dieser Druckausgleichsraum 212 von einer Stauscheibe 215 und von einem radial unterhalb des Lamellenträger-Abschnittes 524 angeordneten Abschnitt des Kolbens 214. Vorzugsweise ist der Druckausgleichsraum 212 geometrisch derart ausgelegt, daß ein zumindest weitgehend vollständiger dynamischer Druckausgleich erzielt wird. Hierzu wird der Druckausgleichsraum 212 über eine Schmiermittelzuführung 219 drucklos mit Schmiermittel befüllt, wobei diese Schmiermittelzuführung 219 teilweise innerhalb der Nabe 523 und teilweise innerhalb der gehäusefesten Nabe GN verläuft.

Bezogen auf die räumliche Lage des Druckraum 211 der Servoeinrichtung 210, erfolgt die Betätigung der Lamellen 200 der Kupplung B bei dieser erfindungsgemäßen Anordnung also "ziehend". Dagegen erfolgt die Betätigung der Lamellen 500 der Kupplung E, bezogen auf die räumliche Lage des Druckraum 511 der Servoeinrichtung 510, "drückend".

Der scheibenförmige Abschnitte 522 bildet also im wesentlichen die radial gerichtete Mantelfläche des Lamellenträgers ZYLBE, an deren dem Planetenradsatz RS1 zugewandten Seite der Druckraum 511 der Servoeinrichtung der Kupplung E angeordnet ist, und an deren dem Planetenradsatz RS1 abgewandten Seite der Druckraum 211 der Servoeinrichtung der Kupplung B angeordnet ist. Dieser Bereich der Mantelfläche des Lamellenträgers ZYLBE trennt also die beiden Druckräume 211 und 511 voneinander. Die zum dynamischen Druckausgleich des jeweiligen rotierenden Druckraumes 211 bzw. 511 vorgesehenen Druckausgleichsräume 212 bzw. 512 der Servoeinrichtungen der Kupplungen B und E sind jeweils auf der Seite des jeweiligen Druckraumes 211 bzw. 511 angeordnet, die diesem Bereich der Mantelfläche des Lamellenträgers ZYLBE abgewandt ist.

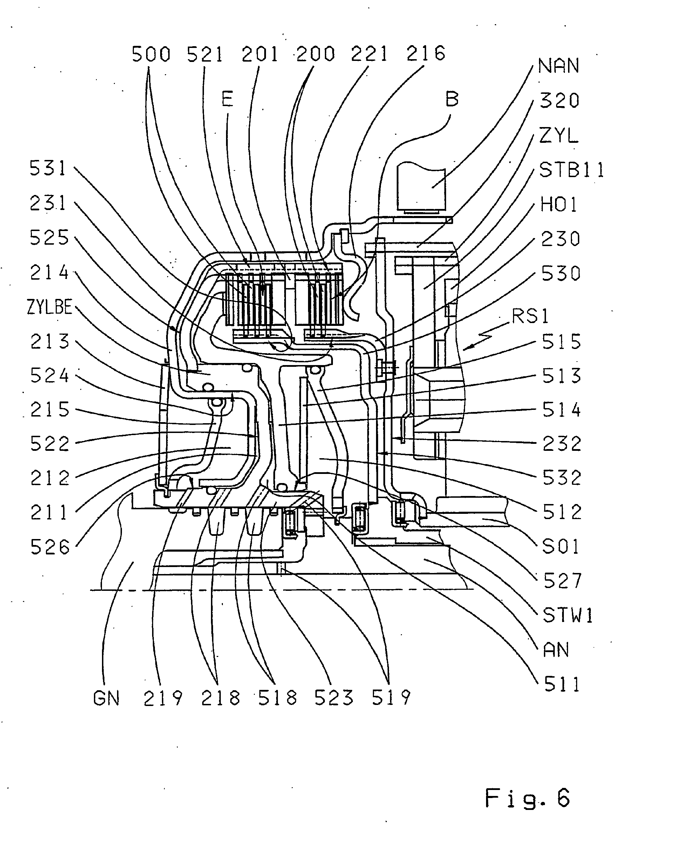

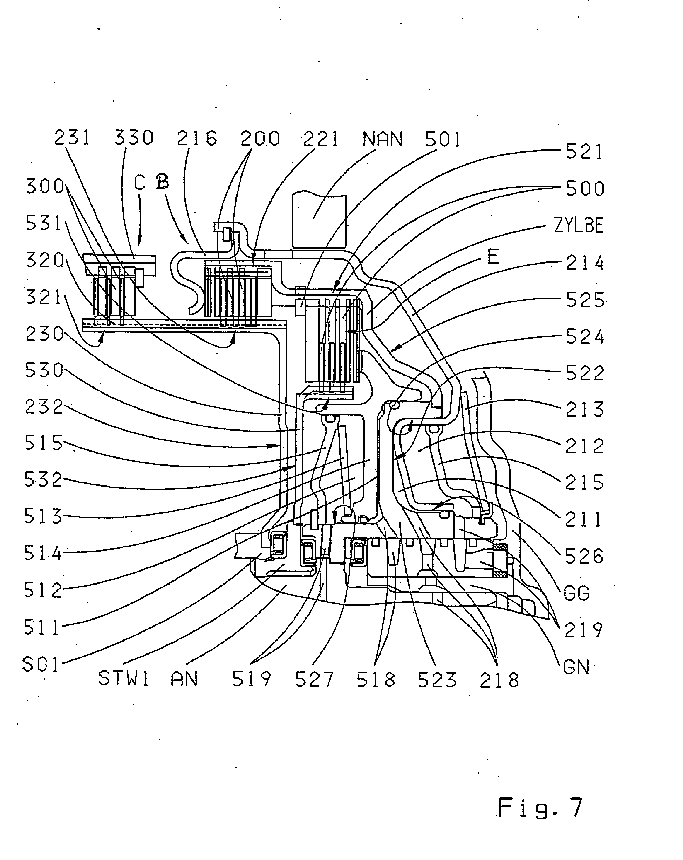

Anhand der folgenden Figuren 6 und 7 werden nun zwei auf der Bauteilanordnung gemäß Fig. 5 basierende Detailkonstruktionen erläutert. Fig. 6 zeigt einen sektionalen Getriebeschnitt mit einer ersten beispielhaften Detailkonstruktion für die Baugruppe mit den beiden Kupplungen B, E. Wie in Fig. 5 sind auch hier die Lamellenpakete 200 und 500 der beiden Kupplungen B, E unmittelbar nebeneinander angeordnet, wobei das Lamellenpaket 200 dabei benachbart zum ersten Planetenradsatz RS1 angeordnet ist. Für die beiden Kupplungen B, E ist - ähnlich wie in Fig. 5 - ein gemeinsamer Lamellenträger ZYLBE in Funktion eines Außenlamellenträgers vorgesehen, der in geometrisch unterschiedlich ausgebildete Abschnitte 221, 521, 525, 524, 522 und 523 unterteilt ist. Die beiden zylindrischen Abschnitte 521, 524 und die beiden scheibenförmigen Abschnitte 525, 522 und die Nabe 523 bilden das Eingangselement der Kupplung E, das mit der Antriebswelle AN verbunden ist. Der zylindrische Abschnitt 221 bildet das Eingangselement der Kupplung B, das über das Eingangselement der Kupplung E mit der Antriebswelle AN verbunden ist.

Der zylindrische Abschnitt 221 weist an seinem Innendurchmesser ein geeignetes Mitnahmeprofil auf zur Aufnahme der Außenlamellen des Lamellenpaketes 200. An den zylindrischen Abschnitt 221 schließt sich axial in zum Planetenradsatz RS1 entgegengesetzter Richtung der erste zylindrische Abschnitt 521 des Eingangselementes der Kupplung E an, hier auf gleichem Durchmesser. Der erste zylindrische Abschnitt 521 weist an seinem Innendurchmesser ein geeignetes Mitnahmeprofil auf zur Aufnahme der Außenlamellen des Lamellenpaketes 500. In vorteilhafter Weise können die Lamellen-Mitnahmeprofile der beiden Abschnitte 221 und 521 identisch sein, was die Verwendung von gleichen Außenlamellen für beide Kupplungen B, E ermöglicht. Ein Sicherungsring 201, der an seinem Außendurchmesser in das LamellenMitnahmeprofil des zylindrische Abschnitt 221 des (Außen-) Lamellenträgers ZYLBE der Kupplungen B, E eingreift, ist über eine geeignete Vorrichtung axial an dem Lamellenträger ZYLBE gesichert, sodaß die beiden Kupplungen B, E vollkommen unabhängig voneinander betätigbar sind, die Betätigung einer dieser beiden Kupplungen also keine Rückwirkung auf die jeweils andere Kupplung hat. Die Lamellenpakete 200, 500 beider Kupplungen B, E stützen sich also bei einer Druckbeaufschlagung des jeweiligen Druckraums (211, 511) axial an dem Sicherungsring 201 ab. Dem Fachmann ist klar, daß vor der Montage und der Axialsicherung dieses Sicherungsrings 201 der für beide Kupplungen B, E gemeinsame Außenlamellenträger zuvor mit der Servoeinrichtung und dem Lamellenpaket 500 der Kupplung E komplettiert sein muß. Eine derartige Axialsicherung kann wie im dargestellten Beispiel als nachträglich im Bereich über dem Sicherungsring 201 radial in das Mitnahmeprofil eingebrachte Material-Durchstellungen (Material-Eindrückungen) ausgeführt sein, beispielsweise aber auch als nachträglich durchgeführte Verstemmung des Sicherungsrings 201 an dem Lamellenträger ZYLBE oder als nachträglich beidseits neben dem Sicherungsring 201 radial in das Mitnahmeprofil eingebrachte Material-Durchstellungen (Material-Eindrückungen) oder auch als radiale Verstiftung des Sicherungsrings 201 an dem Lamellenträger ZYLBE. In einer anderen Ausgestaltung kann auch vorgesehen sein, daß anstelle des Sicherungsrings 201 am zylindrischen Abschnitt 211 des Zylinders ZYLBE eine radial nach innen gerichtete Material-Durchstellung vorgesehen ist, die nach der Montage des Kolbens 514 und des Lamellenpaketes 500 in den zylindrischen Abschnitt 211 des Zylinders ZYLBE eingedrückt wird und dann die axial Anlagefläche für die beiden Lamellenpakete 500, 200 bildet.

Ausgehend von der Nabe 523 (Nabe des Eingangselementes der Kupplung E), die hier beispielhaft über ein Mitnahmeprofil mit der Antriebswelle formschlüssig verbunden ist, erstreckt sich etwa nabenmittig der erste scheibenförmige Abschnitt 522 radial nach außen. Mit 526 ist ein erster zylindrischer Abschnitt der Nabe 523 bezeichnet, der sich auf der dem Planetenradsatz RS1 abgewandten Seite des scheibenförmigen Abschnitt 522 axial erstreckt. Mit 527 ist ein zweiter zylindrischer Abschnitt der Nabe 523 bezeichnet, der sich auf der dem Planetenradsatz RS1 zugewandten Seite des scheibenförmigen Abschnitt 522 axial erstreckt. Auf beiden Seiten des ersten scheibenförmigen. Abschnitts 522 ist jeweils ein Druckraum angeordnet. Auf der dem Planetenradsatz RS1 abgewandten Seite des ersten scheibenförmigen Abschnitts 522, radial oberhalb des Nabenabschnitts 526, ist der Druckraum 211 der Servoeinrichtung der Kupplung B angeordnet. Auf der dem Planetenradsatz RS1 zugewandten Seite des ersten scheibenförmigen Abschnitts 522, radial oberhalb des Nabenabschnitts 527, ist der Druckraum 511 der Servoeinrichtung der Kupplung E angeordnet. An seinem Außendurchmesser schließt sich an den ersten scheibenförmigen Abschnitts 522 ein zweiter zylindrischer Abschnitt 524 an und erstreckt sich axial in zum Planetenradsatz RS1 entgegengesetzter Richtung, etwa so weit, wie sich auch der erste zylindrische Abschnitt 526 der Nabe 523 erstreckt. Hier schließt sich an den zweiten zylindrischer Abschnitt 524 ein zweiter zumindest weitgehend scheibenförmiger Abschnitt 525 an, der sich radial nach außen erstreckt bis etwa zum Außendurchmesser des Lamellenpaketes 500, bis zu dem ersten zylindrischen Abschnitt 521 des Eingangselementes der Kupplung E. Wie in Fig. 6 ersichtlich, hat der Lamellenträger ZYLBE (bzw. das Eingangselement der Kupplung E) mit seinen in der Reihenfolge 521, 525, 524, 522, 523 aneinander anschließenden Abschnitten eine in radiale Richtung gesehen insgesamt meanderförmige Struktur und bildet dabei einen Kupplungsraum, innerhalb dessen die Servoeinrichtung der Kupplung E und die Lamellenpakete 200, 500 beider Kupplungen B, E angeordnet sind.

Der scheibenförmige Abschnitt 522 und der zylindrische Nabenabschnitt 527 des Lamellenträgers ZYLBE (bzw. Eingangselementes der Kupplung E) bilden zusammen mit dem Kolben 514 der Servoeinrichtung der Kupplung E den Druckraum 511 der Servoeinrichtung der Kupplung E. Die Druckmittelzuführung 518 zu diesem Druckraum 511 verläuft abschnittsweise durch die Nabe 523 (im Nabenabschnitt 527) des gemeinsamen Außenlamellenträgers der Kupplungen B, E und abschnittsweise durch die gehäusefeste Nabe GN. Der durch den Kolben 514 und die Stauscheibe 515 gebildete Druckausgleichraum 512 zum Ausgleich des dynamischen Druckes des rotierenden Druckraumes 511 ist auf der dem Druckraum 511 gegenüberliegenden Seite des Kolbens 514 angeordnet, also näher an dem ersten Planetenradsatz RS1 als der Druckraum 511. Die Schmiermittelzuführung 519 zu diesem Druckausgleichsraum 512 verläuft abschnittsweise durch die Nabe 523 (im Nabenabschnitt 527) des gemeinsamen Lamellenträgers ZYLBE der Kupplungen B, E und abschnittsweise durch Antriebswelle AN. Das beispielhaft als Tellerfeder ausgeführte Rückstellelement 513 ist zwischen Kolben 514 und Stauscheibe 515 vorgespannt, wobei sich die Stauscheibe 215 axial an der Antriebswelle AN abstützt.

Der scheibenförmige Abschnitt 522 und der zylindrische Abschnitt 524 und der zylindrische Nabenabschnitt 526 des Lamellenträgers ZYLBE (bzw. des Eingangselementes der Kupplung E) bilden zusammen mit dem Kolben 214 der Servoeinrichtung der Kupplung B den Druckraum 211 der Servoeinrichtung der Kupplung B. Räumlich gesehen folgt der Kolben 214 der meanderförmigen Struktur des gemeinsamen Lamellenträgers ZYLBE der Kupplungen B, E im wesentlichen und übergreift abschnittsweise den zweiten zylindrischen Abschnitt 524 des Lamellenträgers ZYLBE und den von dem Lamellenträger ZYLBE gebildeten Kupplungsraum für die Kupplung E und die Lamellen 200 der Kupplung B in axialer Richtung radial vollständig. Dabei erstreckt sich der Kolben 214 in axialer Richtung weit über das Lamellenpaket 200 der Kupplung B hinaus, bis in einen Bereich über dem ersten Planetenradsatz RS1. Zur "ziehenden" Betätigung der Lamellen 200 der Kupplung B ist der auf das Lamellenpaket 200 wirkende Betätigungs-Stempel 216 im Bereich über dem Lamellenpaket 200 an dem Kolben 214 befestigt und erstreckt sich radial nach innen bis fast zum Innendurchmesser des Lamellenpaketes 200. Die Druckmittelzuführung 218 zu dem Druckraum 211 der Servoeinrichtung der Kupplung B verläuft abschnittsweise durch die Nabe 523 (im Nabenabschnitt 526) des gemeinsamen Lamellenträgers ZYLBE der Kupplungen B, E und abschnittsweise durch die gehäusefeste Nabe GN. Auch die Servoeinrichtung der Kupplung B weist einen dynamischen Druckausgleich auf. Der entsprechende Druckausgleichsraum 212 zum Ausgleich des dynamischen Druckes des rotierenden Druckraumes 211 ist räumlich gesehen unterhalb des zylindrischen Abschnitts 524 des Lamellenträgers ZYLBE angeordnet und wird gebildet durch den Kolben 214 und die Stauscheibe 215. Die Schmiermittelzuführung 219 zu diesem Druckausgleichsraum 212 verläuft abschnittsweise durch die Nabe 523 (im Nabenabschnitt 526) des Lamellenträgers ZYLBE, abschnittsweise durch die gehäusefeste Nabe GN und abschnittsweise durch Antriebswelle AN. Das als Tellerfeder ausgeführte Rückstellelement 213 zur Rückstellung des Kolbens 214 ist außerhalb des Druckausgleichsraumes 212 angeordnet und liegt auf der dem Planetenradsatz RS1 gegenüberliegenden Seite der Baugruppe aus Kupplung B und E an einer Außenfläche des Kolbens 214 an. Dabei ist diese Tellerfeder (213) zwischen der Außenfläche des Kolbens 214 und einem am äußeren Rand des ersten zylindrischen Nabenabschnitts 526 angeordneten Abstützbund der Nabe 523 axial vorgespannt.

Der erste scheibenförmige Abschnitt 522 bildet also im wesentlichen die radial gerichtete (hier weitgehend senkrechte) Mantelfläche des Lamellenträgers ZYLBE, an deren dem Planetenradsatz RS1 zugewandten Seite der Druckraum 511 der Servoeinrichtung der Kupplung E angeordnet ist, und an deren dem Planetenradsatz RS1 abgewandten Seite der Druckraum 211 der Servoeinrichtung der Kupplung B angeordnet ist. Dieser Bereich der Mantelfläche des Lamellenträgers ZYLBE trennt also die beiden Druckräume 211 und 511 voneinander. Die zum dynamischen Druckausgleich des jeweiligen rotierenden Druckraumes 211 bzw. 511 vorgesehenen Druckausgleichsräume 212 bzw. 512 der Servoeinrichtungen der Kupplungen B und E sind jeweils auf der Seite des jeweiligen Druckraumes 211 bzw. 511 angeordnet, die diesem Bereich der Mantelfläche des Lamellenträgers ZYLBE abgewandt ist.

Als weiteres Detail ist vorgesehen, daß der Kolben 214 der Servoeinrichtung der Kupplung B in seinem Abschnitt, der räumlich gesehen über dem Planetenradsatz RS1 angeordnet ist, an seinem Außendurchmesser ein geeignetes Geberprofil aufweist, das über einen Antriebsdrehzahlsensor NAN zur Bestimmung der Antriebswellen-Drehzahl (berührungslos) abgetastet wird.

Das Ausgangselement 230 der Kupplung B ist als Innenlamellenträger ausgebildet. Ein zylindrischer Abschnitt 231 dieses Innenlamellenträgers (230) erstreckt sich ausgehend von dem Lamellenpaket 200 der Kupplung B axial bis fast an das Stegblech STB11 des ersten Planetenradsatzes RS1. Am Außendurchmesser dieses zylindrischen Abschnitts 231 ist ein geeignetes Mitnahmeprofil vorgesehen zur Aufnahme der Belaglamellen des Lamellenpaketes 200. Ein scheibenförmiger Abschnitt 232 des Innenlamellenträgers (230) der Kupplung B erstreckt sich radial parallel zum Stegblech STB11 des ersten Planetenradsatzes RS1 und ist etwa auf mittlerem Durchmesser mit dem zylindrischen Abschnitts 231 verdrehfest verbunden, hier beispielhaft vernietet. An seinem Innendurchmesser ist dieser scheibenförmige Abschnitt 232 mit dem Sonnenrad SO1 verdrehfest verbunden, hier beispielhaft verschweißt. Der Außendurchmesser des scheibenförmigen Abschnitts 232 ist größer als der Außendurchmesser des Stegblechs STB11 und des Zylinders ZYL, der das Hohlrad HO1 des Planetenradsatzes RS1 übergreift und in den das Stegblech STB11 formschlüssig eingehängt ist. Im Bereich des Außendurchmessers des scheibenförmigen Abschnitts 232 des Ausgangselementes 230 der Kupplung B ist das Eingangselement 320 der (in diesem Ausschnitt nicht dargestellten) Bremse C beispielhaft formschlüssig eingehängt.

Das Ausgangselement 530 der Kupplung E ist ebenfalls als Innenlamellenträger ausgebildet. Ein zylindrischer Abschnitt 531 dieses Innenlamellenträgers (530) erstreckt sich ausgehend von dem Lamellenpaket 500 der Kupplung E axial bis fast an den scheibenförmigen Abschnitt 232 des Innenlamellenträgers (230) der Kupplung B. Am Außendurchmesser dieses zylindrischen Abschnitts 531 ist abschnittsweise ein geeignetes Mitnahmeprofil vorgesehen zur Aufnahme der Belaglamellen des Lamellenpaketes 500. Abschnittsweise verläuft der zylindrische Abschnitt 531 des Innenlamellenträgers (530) der Kupplung E auch radial knapp unterhalb des zylindrischen Abschnitts 231 des Innenlamellenträgers (230) der Kupplung B. Ein scheibenförmiger Abschnitt 532 des Ausgangselementes 530 schließt sich an den zylindrischen Abschnitt 531 an und erstreckt sich radial nach innen, parallel zum scheibenförmigen Abschnitt 232 des Innenlamellenträgers (230) der Kupplung B bis zur Stegwelle STW1, mit der er verdrehfest verbunden ist, hier beispielhaft mittels Schweißverbindung. Bekanntlich verläuft die Stegwelle STW1 radial oberhalb der Antriebswelle AN und zentrisch innerhalb des Sonnenrades SO1, durchgreift also den ersten Planetenradsatz RS1 zentrisch, und ist auf der dem Stegblech STB11 gegenüberliegenden Seite des ersten Planetenradsatzes RS1 an weitere (in diesem Ausschnitt nicht dargestellte) Planetenradsatzelemente kinematisch angebunden.

Fig. 7 zeigt einen sektionalen Getriebeschnitt des Getriebes gemäß Fig. 5 mit einer zweiten beispielhaften Detailkonstruktion für die Baugruppe mit den beiden Kupplungen B, E. Aus einem Vergleich zwischen Fig. 7 und der zuvor detailliert beschriebenen Fig. 6 ist leicht ersichtlich, daß in der zweiten Detailkonstruktion (gemäß Fig. 7) zahlreiche Konstruktionsmerkmale aus der ersten Detailkonstruktion (gemäß Fig. 6) der Baugruppe mit den beiden Kupplungen B, E übernommen wurden. So wurde die konstruktive Ausgestaltung der Servoeinrichtungen (mit den Druckräumen 211 und 511, den Kolben 214 und 514, den Rückstellelementen 213 und 513, den Druckmittelzuführungen 218 und 518, den Druckausgleichräumen 212 und 512, den Stauscheiben 215 und 515, sowie den Schmiermittelzuführungen 219 und 519) der beiden Kupplungen B, E quasi unverändert übernommen. Ebenso aus Fig. 6 übernommen ist die geometrische Ausbildung des Eingangselementes der Kupplung E (mit der Nabe 523, den scheibenförmigen Abschnitten 522 und 525, sowie den zylindrischen Abschnitten 524 und 521) als in radialer Richtung gesehen meanderförmiges Bauteil, als Abschnitt des für die Kupplungen B und E gemeinsamen Außenlamellenträgers (ZYLBE). Die Druckräume 511 und 211 der Servoeinrichtungen beider Kupplungen B und E sind also unverändert durch eine Mantelfläche des für beide Kupplungen B, E gemeinsamen Lamellenträgers ZYLBE voneinander getrennt, die im wesentlichen durch den ersten scheibenförmigen Abschnitt 522 gebildet wird.

Die Lamellenpakete 200 und 500 beider Kupplungen B, E sind zwar unverändert in axialer Richtung gesehen nebeneinander angeordnet, im Unterschied zu Fig. 6 jedoch nunmehr mit einem Versatz in radialer Richtung. Das Lamellenpaket 200 der Kupplung B weist einen größeren Durchmesser auf als das Lamellenpaket 500 der Kupplung E. Insbesondere ist also ein Reibfächen-Innendurchmesser der Belaglamellen des Lamellenpaketes 200 der Kupplung B größer als ein Reibflächen-Außendurchmesser der Belaglamellen des Lamellenpaketes 500 der Kupplung E. Dabei ist der Durchmesser des Lamellenpaketes 200 so gewählt, daß das Lamellenpaket 200 in axialer Richtung gesehen radial über dem zu dieser Kupplungsanordnung benachbarten ersten Planetenradsatz RS1 angeordnet werden konnte. Eine derartige Bauteilschachtelung hat Vorteile einerseits hinsichtlich der Getriebebaulänge, andererseits auch hinsichtlich des Getriebegehäuse-Außendurchmessers in einem Getriebegehäuseabschnitt, für den in einem Fahrzeug mit quer zur Fahrtrichtung eingebautem Antriebsmotor aufgrund der Karosseriestruktur bekanntlich nur ein stark begrenzter Einbauraum zur Verfügung steht.

Entsprechend hat der Übergang zwischen dem (dem Eingangselement der Kupplung B zuzuordnenden) zylindrischen Abschnitt 221 des Lamellenträgers ZYLBE und dem (dem Eingangselement der Kupplung E zuzuordnenden) ersten zylindrischen Abschnitt 521 des Lamellenträgers ZYLBE auch einen Durchmesserversatz bzw. eine Stufe. An dieser Stufe stützen sich auch die Lamellen 200 der Kupplung B bei deren ("gezogenen") Betätigung axial ab. Zur axialen Abstützung der Lamellen 500 der Kupplung E bei deren ("gedrückten") Betätigung ist ein Sicherungsring 501 vorgesehen, der in das Lamellenmitnahmeprofil des zylindrischen Abschnitts 521 eingreift und über eine geeignete Vorrichtung axial an dem Abschnitt 521 des Lamellenträgers ZYLBE gesichert wird. Dem Fachmann ist klar, daß vor der Montage und der Axialsicherung dieses Sicherungsrings 501 der für beide Kupplungen B und E gemeinsame Außenlamellenträger (ZYLBE) zuvor mit der Servoeinrichtung und dem Lamellenpaket 500 der Kupplung E komplettiert sein muß. Eine derartige Axialsicherung kann beispielsweise eine Nut sein, die an der entsprechenden axialer Position im Bereich über dem Sicherungsring 501 radial in das Mitnahmeprofil des Lamellenträgers ZYLBE eingefräst oder als Material-Durchstellungen (Material-Eindrückungen) radial in das Mitnahmeprofil des Lamellenträgers ZYLBE eingedrückt ist. Andere Beispiele für eine derartige Axialsicherung sind eine nachträglich durchgeführte Verstemmung des Sicherungsrings 501 an dem Lamellenträger ZYLBE, oder nachträglich auf der dem Lamellenpaket 500 abgewandten Seite des Sicherungsrings 501 axial neben diesem Sicherungsring 501 radial in das Mitnahmeprofil des Lamellenträgers ZYLBE eingebrachte Material-Durchstellungen (Material-Eindrückungen), oder auch als radiale Verstiftung des Sicherungsrings 501 an dem Lamellenträger ZYLBE.

Als alternative Verbindungstechnik zwischen dem Lamellenträger ZYLBE und der Antriebswelle AN ist in Fig. 7 nunmehr beispielhaft eine unlösbare Verbindung vorgesehen. Räumlich gesehen ist die Antriebswelle AN im Bereich des planetenradsatznahen Nabenabschnitts 527 mit der Nabe 523 des Lamellenträgers ZYLBE verschweißt.

Der Antriebsdrehzahlsensor NAN ist gegenüber Fig. 6 axial etwas versetzt. Das Geberprofil am Außendurchmesser des Kolbens 214 der Servoeinrichtung der Kupplung B, das von dem Antriebsdrehzahlsensor NAN zur Messung der Antriebswellendrehzahl abgetastet wird, ist nunmehr räumlich gesehen über dem Lamellenpaket 500 der Kupplung E angeordnet.

Das als Innenlamellenträger ausgebildete Ausgangselement 530 der Kupplung E weist einen axial nur kurzen zylindrischen Abschnitt 531 auf, an dessem Außendurchmesser ein geeignetes Mitnahmeprofil zur Aufnahme der Belaglamellen des Lamellenpaketes 500 vorgesehen ist. Direkt neben dem Lamellenpaket 500, auf der dem Druckraum 511 der Servoeinrichtung der Kupplung E abgewandten Seite des Lamellenpaketes 500, schließt sich an diesen zylindrischen Abschnitt 531 der scheibenförmige Abschnitt 532 an und erstreckt sich - axial unmittelbar angrenzend an die Stauscheibe 515 - radial nach innen bis zur Stegwelle STW1, mit der er verbunden ist.

Das als Innenlamellenträger ausgebildete Ausgangselement 230 der Kupplung B weist einen zylindrischen Abschnitt 231 auf, der in axialer Richtung gesehen neben dem Lamellenpaket 500 der Kupplung E und auch neben der Servoeinrichtung der Kupplung E angeordnet ist, sich in axialer Richtung gesehen radial über dem (hier unvollständig dargestellten) ersten Planetenradsatz erstreckt, und an seinem Außendurchmesser ein geeignetes Mitnahmeprofil aufweist zur Aufnahme der Belaglamellen des Lamellenpaketes 200. Auf der der Kupplung E zugewandten Seite des zylindrischen Abschnitts 231 schließt sich ein scheibenförmiger Abschnitt 232 des Innenlamellenträgers (230) der Kupplung B an den zylindrischen Abschnitt 231 an und erstreckt sich - axial unmittelbar angrenzend an die druckraumabgewandte Seite des Lamellenpaketes 500 und den scheibenförmigen Abschnitt 532 des Innenlamellenträgers (530) der Kupplung E - radial nach innen, bis zu dem Sonnenrad SO1 des ersten Planetenradsatzes. Wie aus Fig. 7 ersichtlich, verläuft der Innenlamellenträger (530) der Kupplung E im Unterschied zu Fig. 6 also auch nicht abschnittsweise innerhalb eines Raumes, der durch den Innenlamellenträger (230) der Kupplung B gebildet wird.

Wie aus Fig. 7 ebenfalls ersichtlich, ist die Bremse C neben dem Lamellenpaket 200 der Kupplung B angeordnet, auf der der Kupplung E gegenüberliegenden Seite des Lamellenpaketes 200. Vom Durchmesser her sind die Lamellen 300 der Bremse C zumindest ähnlich dimensioniert wie die Lamellen 200 der Kupplung B. Das als Innenlamellenträger ausgebildete Eingangselement 320 der Bremse C ist zusammen mit dem Innenlamellenträger (230) der Kupplung B einstückig ausgeführt. Der zylindrische Abschnitt 321 dieses Eingangselement 320 weist an seinem Außendurchmesser ein geeignetes Mitnahmeprofil auf zur Aufnahme der Belaglamellen des Lamellenpaketes 300 und schließt sich unmittelbar axial an den zylindrischen Abschnitt 231 des Ausgangselementes 230 der Kupplung B an. Fertigungstechnisch vorteilhaft sind die Lamellenmitnahmeprofile für die Belaglamellen beider Lamellenpakete 300, 200 identisch, wodurch auch die Verwendung von gleichen Belaglamellentypen möglicht ist.

In Fig. 7 zusätzlich angedeutet ist ein Ausgangselement 330 der Bremse C, das als zylinderförmiger Außenlamellenträger mit einem entsprechenden Lamellenmitnahmeprofil für die Außenlamellen des Lamellenpaketes 300 ausgebildet und als separates Bauelement ausgeführt ist. Ein derartiger Zylinder kann beispielsweise auch die Servoeinrichtung der Bremse C und auch die komplette Bremse D (inclusive deren Servoeinrichtung und Lamellen) aufnehmen und als Baugruppe vormontiert werden, die dann in das Getriebegehäuse eingesetzt und gegen Verdrehung gesichert wird.

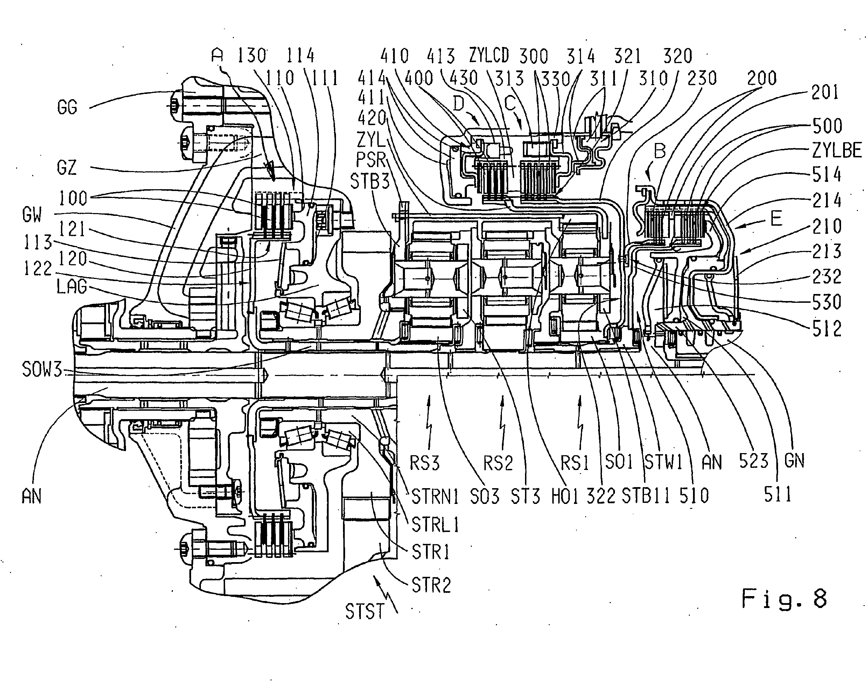

Anhand des in Fig. 8 dargestellten Getriebeschnitts wird im folgenden nun eine beispielhafte, praktisch ausgeführte Getriebekonstruktion erläutert, die auf dem schematischen Getriebeschnitt gemäß Fig. 5 basiert.

Wie aus Fig. 8 leicht ersichtlich, entspricht die Ausgestaltung der Baugruppe mit den beiden Kupplungen B und E unverändert der in Fig. 6 vorgeschlagenen Anordnung, sodaß hier auf eine nochmalige detaillierte Beschreibung der (mit gleichen Bezugszeichen versehenen) einzelnen Elemente dieser Baugruppe verzichtet werden kann.

Die Bremsen C und D bilden eine vormontierbare Baugruppe, die als Ganzes in das Getriebegehäuse eingesetzt ist. Diese Baugruppe umfaßt die als Außenlamellenträger ausgebildeten Ausgangselemente 330, 430 beider Bremsen C und D, die Lamellenpakete 300, 400 beider Bremsen C und D, sowie die Servoeinrichtungen 310, 410 beider Bremsen C und D. In vorteilhafter Weise sind die beiden Außenlamellenträger 330 und 430 als einstückiges zylinderförmiges Bauteil ZYLCD ausgeführt, in dem auch Teile der Servoeinrichtungen 310 und 410 integriert sind. Die beiden Lamellenpakete 300, 400 werden durch einen etwa zylindermittige Anlageschulter des gemeinsamen Außenlamellenträgers ZYLCD axial voneinander getrennt. Die Kolben 314 und 414 der Servoeinrichtungen 310, 410 sind jeweils an der äußeren Stirnfläche des jeweiligen Lamellenpaketes 300 bzw. 400 angeordnet. Die Rückstellelemente 313 und 413 der Servoeinrichtungen 310, 410 sind jeweils räumlich gesehen radial über dem jeweiligen Lamellenpaket 300 bzw. 400 angeordnet. Die Betätigungsrichtung beider Servoeinrichtungen 310, 410 beim Schließen der jeweiligen Bremse C bzw. D infolge einer Druckbeaufschlagung des jeweiligen Druckraumes 311 bzw. 411 der Servoeinrichtung 310 bzw. 410 sind also entgegengesetzt zueinander gerichtet. Eine derartige Baugruppe ist aus der DE 101 31 816 A1 der Anmelderin bekannt. Die Bremse C ist näher an der Baugruppe mit den beiden Kupplungen B und E angeordnet als die Bremse D. In axialer Richtung gesehen ist die Bremse C in einem Bereich radial über dem ersten und zweiten (mittleren) Planetenradsatz RS1, RS2 angeordnet, die Bremse D in einem Bereich radial über dem zweiten (mittleren) und dritten Planetenradsatz RS2, RS3.

Als Detail soll an dieser Stelle noch erwähnt werden, daß für die Bremse C hier beispielhaft zwei unabhängig voneinander betätigbare Druckräume 311 vorgesehen sind, die beide auf das Lamellenpaket 300 wirken. Hierdurch ist der Schließdruck der Bremse C als Differenzdruck beider Druckräume 311 steuerbar bzw. regelbar, was bekannterweise besonders günstig ist, wenn das betreffende Schaltelement bei mehreren Schaltungsarten in Eingriff gebracht werden muß, deren Schaltdruckniveau aufgrund der zu schaltenden Drehmomente deutlich voneinander abweichen. Selbstverständlich kann in einer anderen Ausgestaltung auch vorgesehen sein, daß zusätzlich oder auch ausschließlich für die Bremse D zwei unabhängig voneinander betätigbare Druckräume vorgesehen sind.

Als weiteres Detail soll noch auf die beispielhafte Ausgestaltung des Rückstellelementes 413 der Servoeinrichung 410 der Bremse D als auf den Kolben 414 wirkender hydraulische betätigbarer Druckraum hingewiesen werden. Der Fachmann wird eine derartige hydraulische Kolbenrückstellvorrichtung bedarfsweise auch für eine Differenzdruck-Steuerung bzw. Differenzdruck-Regelung einsetzen. Selbstverständlich kann in einer anderen Ausgestaltung auch vorgesehen sein, daß zusätzlich oder auch ausschließlich für die Bremse C eine derartige hydraulische Kolbenrückstellvorrichtung vorgesehen ist. Selbstverständlich kann eine derartige hydraulische Kolbenrückstellvorrichtung auch mit einem mechanischen Rückstellelement kombiniert werden, beispielsweise mit einer in dem ringförmigen Druckraum der hydraulischen Kolbenrückstellvorrichtung angeordneten Tellerfeder oder einem in dem ringförmigen Druckraum der hydraulischen Kolbenrückstellvorrichtung angeordneten Paket aus parallelgeschalteten Schraubenfedern.

In dem in Fig. 8 dargestellten Konstruktions-Beispiel weisen das Lamellenpaar 200, 500 der Kupplungen B, E und das Lamellenpaar 300, 400 der Bremsen C, D jeweils zumindest annähernd den gleichen Durchmesser auf, wobei der Durchmesser des Lamellenpaares 200, 500 kleiner ist als der Durchmesser des Lamellenpaares 300, 400. Je nach tatsächlich vorhandenem Bauraum für den Einbau des Automatgetriebes im Fahrzeug wird der Fachmann bei Bedarf auch alle vier Lamellenpakete 200, 300, 400, 500 auf gleichem Durchmesser anordnen, um so möglichst viele Gleichteile im Getriebe verbauen zu können.

Das Eingangselement 320 (Innenlamellenträger) der Bremse C ist beispielhaft als Blechkonstruktion ausgeführt, in Form eines in Richtung der Kupplungen B, E hin geschlossenen Topfes, der den ersten Planetenradsatz RS1 in axialer Richtung gesehen radial vollständig und den zweiten Planetenradsatz RS2 in axialer Richtung gesehen radial teilweise übergreift. Ein zylindrischer Abschnitt 321 dieses Topfes (320) erstreckt sich in axialer Richtung gesehen also radial oberhalb des ersten und zweiten (mittleren) Planetenradsatzes RS1, RS2 und weist an seinem Außendurchmesser ein geeignetes Mitnahmeprofil auf zur Aufnahme der Belaglamellen des Lamellenpaketes 300 der Bremse C. Als eine Art Topfboden schließt sich ein scheibenförmiger Abschnitt 322 dieses Topfes (320) an der den Kupplungen B, E zugewandten Seite des zylindrischen Abschnitts 321 an diesen Abschnitt 321 an und erstreckt sich - axial angrenzend an das Stegblech STB11 des ersten Planetenradsatzes RS1 - radial nach innen, bis zu dem Sonnenrad SO1 des ersten Planetenradsatzes RS1, mit dem er verbunden (hier beispielhaft verschweißt) ist.

Das Ausgangselement (Außenlamellenträger) 230 der Kupplung B ist beispielhaft als zylinderförmige Blechkonstruktion ausgeführt, die im Bereich des kleinsten Durchmessers ihres scheibenförmigen Abschnitts 232, auf einem Durchmesser, der etwas kleiner ist als der Teilkreisdurchmesser des Hohlrades HO1 des Planetenradsatzes RS1 ist, mit dem scheibenförmigen Abschnitt 322 des Eingangselementes (Innenlamellenträgers) 320 der Bremse C verbunden (hier beispielhaft vernietet) ist. Das Ausgangselement 230 der Kupplung B ist in dem in Fig. 8 dargestellten Beispiel also über das Eingangselement 320 der Bremse C mit dem Sonnenrad SO1 des ersten Planetenradsatzes RS1 verbunden.

Das Eingangselement (Innenlamellenträger) 420 der Bremse D ist ebenfalls beispielhaft als zylinderförmige Blechkonstruktion ausgeführt, die den ersten und zweiten Planetenradsatz RS1, RS2 in axialer Richtung gesehen radial vollständig übergreift und dabei abschnittsweise radial unterhalb des Innenlamellenträgers (320) der Bremse C verläuft und an seinem kleinsten Durchmesser am Außendurchmesser des den Kupplungen B, E zugewandten Stegblechs STB11 des ersten Planetenradsatzes RS1 mit diesem Stegblech STB11 verbunden (hier beispielhaft verschweißt) ist.

Als weiteres Detail ist in Fig. 8 ein Parksperrenrad PSR eingezeichnet, welches in axialer Richtung gesehen radial über dem dem zweiten Planetenradsatz RS2 gegenüberliegenden Stegblech STB3 des Stegs ST3 des dritten Planetenradsatz RS3 angeordnet ist. Dabei sind Stegblech STB3 und Parksperrenrad PSR einteilig ausgeführt. In bekannter Weise ist an dem Außendurchmesser des Parksperrenrades PSR ein umlaufendes Zahnprofil vorgesehen, in das eine (in Fig. 8 zur Vereinfachung nicht dargestellte) Parksperrenklinke eingreifen kann zur Verblockung des Getriebeabtriebs. Der Zylinder ZYL, der entsprechend der kinematischen Koppelung der einzelnen Radsatzelemente die Verbindung zwischen dem Stegblech STB3 des dritten Planetenradsatzes RS3 und dem Hohlrad HO1 des ersten Planetenradsatzes RS1 herstellt, durchgreift entsprechende axiale Ausnehmungen des Stegblechs STB3 unterhalb des Zahnprofils des Parksperrenrades PSR und ist auf der radsatzabgewandten Seite axial gesichert.

Wie aus Fig. 8 weiterhin ersichtlich, ist zur Übertragung der Ausgangsdrehzahl der Planetenradsatzkombination (hier die Drehzahl des mit dem Hohlrad HO1 des ersten Planetenradsatzes RS1 verbundenen Stegs ST3 des dritten Planetenradsatzes RS3) auf die (in Fig. 8 zur Vereinfachung nicht dargestellte) Abtriebswelle des Automatgetriebes beispielhaft wieder ein Stirntrieb STST vorgesehen. Das erste Stirnrad STR1 dieses Stirntriebs STST ist hierbei räumlich gesehen axial zwischen dem dritten Planetenradsatz RS3 und der Bremse A angeordnet, zum einen axial unmittelbar angrenzend an das Sonnenrad S03 und das (auf der dem mittleren Planetenradsatz RS2 abgewandten Seite des dritten Planetenradsatzes RS3 angeordneten) Stegblech STB3 des dritten Planetenradsatzes RS3, zum anderen axial unmittelbar angrenzend an den Innenlamellenträger (120) der Bremse A. Im dargestellten Beispiel ist zwischen Stirnrad STR1 und Stegblechs STB3 eine formschlüssige Verbindung vorgesehen, wobei das entsprechende Mitnahmeprofil räumlich gesehen am Innendurchmesser des Stegblechs STB3 angeordnet ist. Zur Abstützung der Axialkräfte einer Schrägverzahnung des ersten Stirnrades STR1 in Richtung der Planetenradsätze ist zwischen Stirnrad STR1 und Sonnenrad SO3 ein Axiallager angeordnet. Die beispielhaft als steife Kegelrollenlagerung ausgeführte Lagerung des ersten Stirnrades STR1 ist mit STRL1 bezeichnet und umfaßt beispielhaft zwei unmittelbar aneinandergrenzende Kegelrollenlager. Die Lagerinnenringe dieser beiden Kegelrollenlager sind auf einer Stirnradnabe STRN1 des ersten Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind in jeweils eine Lagerbohrung einer Lagerplatte LAG eingesetzt und stützen sich jeweils an einer axial zwischen den beiden Kegelrollenlagern radial nach innen erstreckenden Anlageschulter der Lagerplatte LAG ab. Selbstverständlich kann anstelle der beiden einzelnen Kegelrollenlager der Stirnradlagerung STRL1 beispielsweise auch ein Kegelrollen-Verbundlager vorgesehen sein oder auch eine Rillenkugellagerung.

Die Lagerplatte LAG selber ist in eine entsprechende Lagerplattenbohrung der Gehäusezwischenwand GZ eingesetzt und mit dieser Gehäusezwischenwand GZ verschraubt. Die Stirnradnabe STRN1 des Stirnrades STR1 durchgreift also die Lagerplatte LAG und die Gehäusezwischenwand GZ, die beide auf der radsatzabgewandten Seite des ersten Stirnrades STR1 angeordnet sind, zentrisch. Die Gehäusezwischenwand GZ ihrerseits ist (auf der radsatzabgewandten Seite des ersten Stirnrades STR1) im Bereich ihres Außendurchmessers mit dem Getriebegehäuse GG verschraubt. Auf der stirntriebabgewandten Seite der Gehäusezwischenwand GZ grenzt die Gehäusewand GW axial an die Gehäusezwischenwand GZ an und ist mit dieser ebenfalls verschraubt. Die Gehäusewand GW wiederum bildet in dem in Fig. 8 dargestellten Beispiel die Außenwand des Getriebegehäuses GG, die dem mit der Antriebswelle AN wirkverbundenen (hier zur Vereinfachung nicht dargestellten) Antriebsmotor zugewandt ist. Die Baugruppe mit den beiden Kupplungen B und E ist also auf der antriebsmotorabgewandten Getriebeseite angeordnet. Im dargestellten Beispiel ist die Gehäusewand GW gleichzeitig ein Pumpengehäuse einer Ölpumpe des Automatgetriebes zur Druckmittelversorgung der Schaltelemente und zur Schmiermittelversorgung der diversen Schaltelemente, Verzahnungen und Lagerungen. Entsprechend sind sowohl in der Gehäusewand GW als auch in der Gehäusezwischenwand GZ verschiedene Kanäle zur Druck- und Schmiermittelführung integriert.

Die Bremse A ist unmittelbar benachbart zur Gehäusewand GW angeordnet, axial zwischen Gehäusewand GW (Pumpengehäuse) und Lagerplatte LAG. Dabei ist das als Außenlamellenträger ausgebildete Ausgangselement 130 der Bremse A in die Gehäusezwischenwand GZ integriert. Entsprechend weist die Gehäusezwischenwand GZ auf ihrer Pumpenseite eine hinreichend große Axialbohrung auf, an derem Innendurchmesser ein geeignetes Mitnahmeprofil zur Aufnahme der Außenlamellen des Lamellenpaketes 100 der Bremse A vorgesehen ist. Der Außendurchmesser des Lamellenpaketes 100 der Bremse A ist dabei etwas größer als der Außendurchmesser der Lagerplatte LAG. Das Lamellenpaket 100 der Bremse A grenzt dabei axial unmittelbar an die Gehäusewand GW (bzw. an das Pumpengehäuse) an. Auf der der Gehäusewand GW gegenüberliegenden Seite des Lamellenpaketes 100 grenzt der radial äußere Bereich der Lagerplatte LAG axial an das Lamellenpaket 100 an. Als konstruktive Detaillösung ist die Servoeinrichtung 110 der Bremse A in die Lagerplatte LAG integriert. Entsprechend weist die Lagerplatte LAG einen Kolben- bzw. Druckraum 111 auf, innerhalb dessen ein Kolben 114 dieser Servoeinrichtung 110 axial verschiebbar angeordnet ist. Bei einer Druckbeaufschlagung dieses Druckraumes 111 (über nicht rotierende Druckmittelkanäle, die in Fig. 8 zur Vereinfachung nicht dargestellt sind) betätigt der Kolben 114 das Lamellenpaket 100 der Bremse A axial in Richtung der Gehäusewand GW, gegen eine Rückstellkraft eines hier beispielhaft als Tellerfeder ausgeführten Rückstellelementes 113, welches sich an einem entsprechend ausgebildeten Bund der Lagerplatte LAG axial abstützt. Die Servoeinrichtung 110 der Bremse A ist also räumlich gesehen weitgehend über der Lagerung STRL1 des ersten Stirnrades STR1 des Stirntriebs STST angeordnet.

Als weitere konstruktive Detaillösung ist die Lagerplatte LAG von der Lamellenseite der Bremse A aus in die Gehäusezwischenwand GZ eingesetzt. Die Verschraubung der Lagerplatte LAG an die Gehäusezwischenwand GZ erfolgt ebenfalls von der Lamellenseite der Bremse A aus. Um eine Verschraubung auf einem möglichst großen Durchmesser zu erzielen, sind in dem Druckraum 111 der Servoeinrichtung 110 der Bremse A axial entgegensetzt zum Kolben 114 der Servoeinrichtung 110 gerichtete Aussenkungen vorgesehen, die auf dem Umfang des Druckraum 111 verteilt sind und die Schraubenköpfe der Lagerplattenverschraubung aufnehmen.

Somit bilden die Gehäusezwischenwand GZ, die Lagerplatte LAG mit Stirnradlagerung STRL1 und dem ersten Stirnrad STR1, und die Bremse A mit Servoeinrichtung 110 und Lamellenpaket 100 eine vormontierbare Baugruppe, die als ganzes in das Getriebegehäuse GG einsetzbar ist. Selbstverständlich kann auch beispielsweise als ebenfalls günstiger Montageablauf (ohne Montagerichtungsumkehr) vorgesehen sein, daß zunächst die Gehäusezwischenwand GZ in das Getriebegehäuse GG eingesetzt wird, anschließend die mit Stirnradlagerung STRL1 und dem ersten Stirnrad STR1 vormontierte Lagerplatte LAG in die die Gehäusezwischenwand GZ eingesetzt wird, dann die Servoeinrichtung 110 der Bremse A an der Lagerplatte LAG montiert wird, und abschließend das Lamellenpaket 100 der Bremse A in die Gehäusezwischenwand GZ eingesetzt wird.

Das Eingangselement 120 der Bremse A ist ein Innenlamellenträger und beispielhaft als zylinderförmige Blech- oder Schmiede-Konstruktion ausgeführt. Dieser axial kurz bauende Innenlamellenträger (120) weist einen zylindrischen Abschnitt 121 auf, an dessen Außendurchmesser ein Mitnahmeprofil vorgesehen ist zur Aufnahme der Belaglamellen des Lamellenpaketes 100 der Bremse A, und unterhalb dessen Innendurchmesser das Rückstellelement 113 des Servoeinrichtung der Bremse A angeordnet ist. Auf der der Gehäusewand GW zugewandten Seite dieses zylindrischen Abschnitts 121 schließt sich ein scheibenförmiger Abschnitt 122 des Innenlamellenträgers (120) der Bremse A an den zylindrischen Abschnitt 121 an und erstreckt sich radial nach innen bis zu einem nabenförmigen Abschnitt der Sonnenwelle SOW1, mit der verschweißt ist. Die Sonnenwelle SOW3 wiederum ist mit dem Sonnenrad S03 des dritten Planetenradsatzes RS3 über ein geeignetes Mitnahmeprofil formschlüssig verbunden, sodaß die Sonnenwelle SOW3 auch als Nabe des Innenlamellenträgers (120) der Bremse A interpretiert werden kann. Die Antriebswelle AN wiederum verläuft radial innerhalb der Sonnenwelle SOW3 und durchdringt die Gehäusewand GW zentrisch.

Das zweite Stirnrad STR2 des Stirntriebs bildet ein Zwischenrad zwischen dem ersten Stirnrad STR1 und dem hier nicht dargestellten dritten Stirnrad des Stirntriebs STST. Zur Realisierung der notwendigen Übersetzung des Stirntriebs und der richtigen Drehrichtung der hier ebenfalls nicht dargestellten Abtriebswelle der Automatgetriebes ist das zweite Stirnrad STR2 als Stufenzahnrad ausgeführt, mit einer ersten Verzahnung, die mit der Verzahnung des ersten Stirnrades STR1 kämmt, und mit einer zweiten Verzahnung, die mit der Verzahnung des dritten Stirnrades kämmt. Räumlich gesehen ist die zweite Verzahnung des zweiten Stirnrades STR2 antriebsmotornah angeordnet, in axialer Richtung gesehen in einem Bereich radial über der Bremse A.

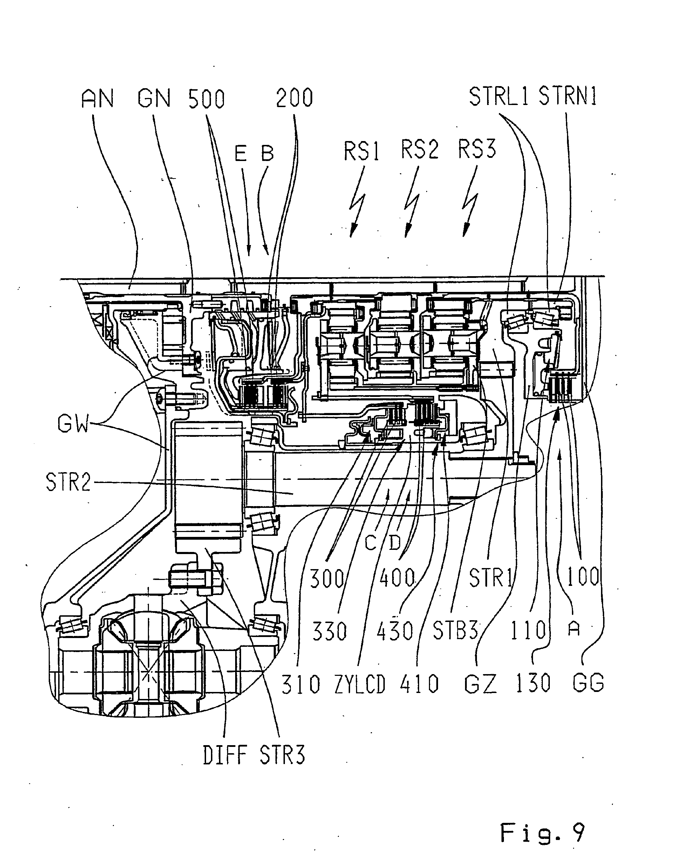

Fig. 9 zeigt nun einen Ausschnitt aus einem Getriebeschnitt einer weiteren praktisch ausgeführten Getriebekonstruktion, basierend auf dem Getriebeschnitt gemäß Fig. 5, jedoch mit einer alternativen Ausgestaltung der Stirnradstufe, über die der Ausgang des (aus den drei Einzel-Planetenradsätzen RS1 bis RS3 gebildeten) Planetengetriebes mit der (zur Antriebswelle achsparallel verlaufenden) Abtriebswelle des Automatgetriebes wirkverbunden ist. Relativ zu der aus Fig. 5 bekannten räumlichen Anordnung der drei Planetenradsätze RS1, RS2, RS3 und fünf Schaltelmente A bis E ist die Lage des (nicht näher dargestellten Antriebsmotors) des Automatgetriebes nun gespiegelt. Der mit der Antriebswelle AN wirkverbundene Antriebsmotor ist also jetzt auf der Getriebeseite angeordnet, an der auch die Baugruppe mit den beiden Kupplungen B und E angeordnet ist. Das mit der (hier zur Vereinfachung nicht dargestellten) Abtriebswelle des Automatgetriebes verbundene Differential DIFF ist jedoch weiterhin antriebsmotornah angeordnet, sodaß zwischen dem ersten Stirnrad STR1 der Stirnradstufe STST und dem dritten Stirnrad STR3 der Stirnradstufe STST, welches mit dem Differential DIFF verbunden (hier beispielhaft verschraubt) ist, eine große axiale Distanz liegt, die durch das hier als Seitenwelle ausgebildete zweite Stirnrad STR2 der Stirnradstufe STST überbrückt wird. Das erste Stirnrad STR1 der mit der (hier nicht dargestellten) Abtriebswelle des Automatgetriebes wirkverbundene Stirnradstufe grenzt unmittelbar an den dritten Planetenradsatz RS3 an, an der dem zweiten (mittleren) Planetenradsatz RS2 gegenüberliegenden Seite des Stegblechs STB3 des dritten Planetenradsatzes RS3. Die Lagerung STRL1 des ersten Stirnrades STR1 ist - ähnlich wie in Fig. 8 - beispielhaft als steife Kegelrollenlagerung ausgeführt, mit zwei unmittelbar aneinandergrenzenen Kegelrollenlagern. Die Lagerinnenringe dieser beiden Kegelrollenlager sind auf einer Stirnradnabe STRN1 des Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind jeweils in eine Lagerbohrung der Gehäusezwischenwand GZ eingesetzt und stützen sich jeweils an einer axial zwischen den beiden Kegelrollenlagern radial nach innen erstreckenden Anlageschulter der Gehäusezwischenwand GZ ab. Die Stirnradnabe STRN1 des Stirnrades STR1 durchgreift die Gehäusezwischenwand GZ also zentrisch.

Die Gehäusezwischenwand GZ bildet gleichzeitig ein Ausgangselement 130 der Bremse A, das als Außenlamellenträger ausgebildet ist mit einem entsprechenden Mitnahmeprofil zur Aufnahme der Außenlamellen des Lamellenpaketes 100 der Bremse A. Die Bremse A ist dabei in axialer Richtung gesehen teilweise radial über der Lagerung STRL1 des ersten Stirnrades STR1 angeordnet, insbesondere die in die Gehäusezwischenwand GZ integrierte Servoeinrichtung 110 der Bremse A. Die Gehäusezwischenwand GZ ist mit dem Getriebegehäuse GG verdrehfest verbunden, eine entsprechende (übliche) Verschraubung ist in Fig. 9 zur Vereinfachung nicht dargestellt. Die Lagerung der Zwischenwelle (STR2) ist beispielhaft über zwei Kegelrollenlager gelagert, wobei das erste dieser Kegelrollenlager räumlich gesehen im Bereich über dem dritten Planetenradsatz RS3 angeordnet ist, auf der dem Lager STRL1 bzw. der Bremse A abgewandten Seite des ersten Stirnrades STR1. Das zweite dieser Kegelrollenlager ist räumlich gesehen im Bereich über den aneinandergrenzenden Lamellenpaketen 200 und 500 der Kupplungen B und E angeordnet, aus Richtung der ersten Stirnrades STR1 gesehen axial vor dem dritten Stirnrad STR3. Die antriebsmotorseitige Gehäusewand GW ist in diesem Beispiel zweiteilig ausgeführt, wobei ein Teil dieser zweiteiligen Gehäusewand GW einen Differentialdeckel und das Differential DIFF zur Antriebsmotorseite hin abdeckt. In den antriebswellennahen Teil der zweiteiligen Gehäusewand GW sind eine Pumpe und verschiedene Druckmittelkanäle integriert, zur Versorgung der verschiedenen Getriebebauteile mit Schmiermittel und der Schaltelemente mit Druckmittel. Die Bremse A ist entsprechend an der dem Antriebsmotor abgewandten Stirnseite des Getriebegehäuses GG angeordnet.

Ähnlich wie in Fig. 8, bilden die Bremsen C und D eine vormontierbare Baugruppe, die als Ganzes in das Getriebegehäuse eingesetzt ist. Diese Baugruppe umfaßt die als Außenlamellenträger ausgebildeten Ausgangselemente 330, 430 beider Bremsen C und D, die Lamellenpakete 300, 400 beider Bremsen C und D, sowie die Servoeinrichtungen 310, 410 beider Bremsen C und D. In vorteilhafter Weise sind die beiden Außenlamellenträger 330 und 430 einstückig als Zylinder ZYLCD ausgeführt, in dem auch Teile der Servoeinrichtungen 310 und 410 integriert sind. Eine derartige Baugruppe ist beispielsweise aus der DE 101 31 816 A1 der Anmelderin bekannt. Als weiteres Detail ist aus Fig. 9 ersichtlich, daß der Zylinder ZYLCD auch einen Lagersitz für das dem Stirnrad STR1 nahe Kegelrollenlager der Lagerung der Seitenwelle (STR2) bildet.

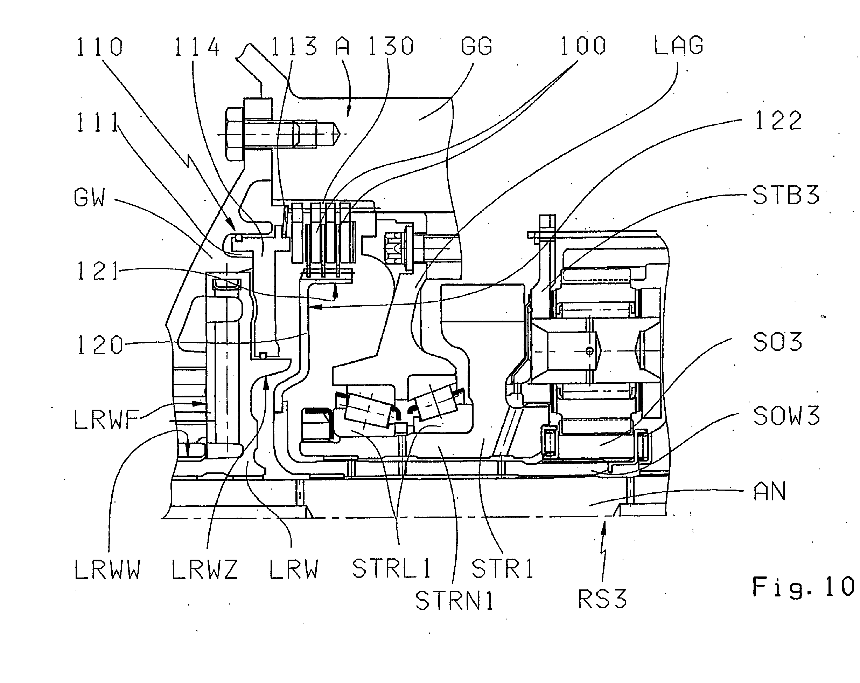

Anhand der Figuren 10 bis 12 werden im folgenden verschiedene Detailkonstruktionen näher erläutert, welche die Anordnung und Ausgestaltung der Bremse A in Verbindung mit dem Stirntrieb bzw. Kettentrieb betreffen und prinzipiell mit den zuvor beschrieben verschiedenen erfindungsgemäßen Bauteilanordnungen und Detailkonstruktionen sinngemäß kombinierbar sind. Bekanntlich stellt der genannte Stirn- bzw. Kettentrieb die kinematische Verbindung zwischen dem Ausgang des (aus den drei Einzel-Planetenradsätzen bestehenden) gekoppelten Planetengetriebes und der Abtriebswelle des Automatgetriebes her.

Fig. 10 zeigt nun einen sektionalen Getriebeschnitt mit einer dritten beispielhaften Detailkonstruktion. Das erste Stirnrad STR1 des Stirntriebs ist hierbei räumlich gesehen axial zwischen dem dritten Planetenradsatz RS3 und der Bremse A angeordnet, zum einen axial unmittelbar angrenzend an das Sonnenrad SO3 und das (auf der dem mittleren Planetenradsatz RS2 abgewandten Seite des dritten Planetenradsatzes RS3 angeordneten) Stegblech STB3 des dritten Planetenradsatzes RS3, zum anderen axial unmittelbar angrenzend an das als Innenlamellenträger ausgebildete Eingangselement 120 der Bremse A. Im dargestellten Beispiel ist zwischen Stirnrad STR1 und Stegblech STB3 eine formschlüssige Verbindung vorgesehen, wobei das entsprechende Mitnahmeprofil räumlich gesehen am Innendurchmesser des Stegblechs STB3 angeordnet ist. Zur Abstützung der Axialkräfte einer Schrägverzahnung des ersten Stirnrades STR1 in Richtung der Planetenradsätze ist zwischen Stirnrad STR1 und Sonnenrad SO3 ein Axiallager angeordnet. Die Lagerung STRL1 des ersten Stirnrades STR1 ist als steife Kegelrollenlagerung mit zwei unmittelbar aneinandergrenzenden Kegelrollenlagern ausgeführt. Die Lagerinnenringe dieser beiden Kegelrollenlager sind auf einer Stirnradnabe STRN1 des ersten Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind in jeweils eine Lagerbohrung einer Lagerplatte LAG eingesetzt und stützen sich jeweils an einer axial zwischen den beiden Kegelrollenlagern radial nach innen erstreckenden Anlageschulter der Lagerplatte LAG ab. Die Stirnradnabe STRN1 des Stirnrades STR1 durchgreift also die auf der radsatzabgewandten Seite des ersten Stirnrades STR1 angeordnete Lagerplatte LAG zentrisch. Selbstverständlich kann anstelle der beiden einzelnen Kegelrollenlager der Stirnradlagerung STRL1 beispielsweise auch ein Kegelrollen-Verbundlager vorgesehen sein oder auch eine Rillenkugellagerung.

Die Lagerplatte LAG selber ist direkt in eine entsprechende Lagerplattenbohrung des Getriebegehäuses GG eingesetzt, stützt sich axial an einer im Bereich dieser Lagerplattenbohrung angeordneten Anlageschulter des Getriebegehäuses GG ab und ist mit dem Getriebegehäuses GG verschraubt. Als axiale Montagerichtung ist hier beispielhaft vorgesehen, daß die (mit Stirnradlagerung STRL1 und erstem Stirnrad STR1 vormontierte) Lagerplatte LAG axial in Richtung des Planetenradstzes RS3 in das Getriebegehäuse GG eingesetzt wird.

Die Bremse A ist auf der dem Planetenradsatz RS3 abgewandten Seite der Lagerplatte LAG angeordnet. Das Lamellenpaket 100 und auch der Innenlamellenträger (120) der Bremse A grenzen dabei unmittelbar axial an die Lagerplatte LAG an. Der Außendurchmesser des Lamellenpaketes 100 mit Außen- und Belaglamellen der Bremse A ist hier beispielhaft etwas größer als der Außendurchmesser der Lagerplatte LAG. Der Außenlamellenträger (130) der Bremse A ist in das Getriebegehäuse GG integriert. Entsprechend weist das Getriebegehäuse GG auf der planetenradsatzabgewandten Seite der Lagerplattenbohrung des Getriebegehäuses GG, in dem Bereich unmittelbar neben dieser Lagerplattenbohrung, auf einem etwas größeren Durchmesser als diese Lagerplattenbohrung, ein geeignetes Innenprofil auf zur Aufnahme des Außenprofils der Außenlamellen des Lamellenpaketes 100 der Bremse A. Auf der der Lagerplatte LAG gegenüberliegenden Seite des Lamellenpaketes 100 der Bremse A ist die Gehäusewand GW angeordnet, in die auch die Servoeinrichtung 110 der Bremse A teilweise integriert ist. Die Servoeinrichtung 110 betätigt das Lamellenpaket 100 der Bremse A beim Schließen axial in Richtung der Lagerplatte LAG, wobei sich das Lamellenpaket 100 axial an der Lagerplatte LAG abstützt. Die Bremse A ist also unmittelbar zwischen Gehäusewand GW und Lagerplatte LAG angeordnet.

In einer alternativen Ausgestaltung zur Befestigung der Lagerplatte, an der das erste Stirnrad der Stirnradstufe gelagert ist, am Getriebegehäuse kann auch vorgesehen sein, daß der Außendurchmesser der Lagerplatte größer ist als der Außendurchmesser des Lamellenpaketes der Bremse A, wobei diese Lagerplatte nunmehr abschnittsweise an der Gehäuseaußenwand GW axial anliegt, in einem Durchmesserbereich oberhalb des Lamellenpaketes der Bremse A. In diesem Fall ist die Lagerplatte direkt vom Innenraum des Getriebegehäuses her mit der Gehäuseaußenwand verschraubt, wobei die entsprechenden kraftführenden Gewinde der Verschraubung räumlich gesehen radial über dem Lamellenpaket der Bremse A angeordnet sind. Die Gehäuseaußenwand wiederum ist in bekannter Weise mit dem Getriebegehäuse verschraubt. In vorteilhafter Weise führt der Kraftfluß der Bremse A bei deren Betätigung also nicht über eine abzudichtende Gehäusetrennfuge.

In einer alternativen konstruktiven Ausgestaltung der Lagerplatte kann auch vorgesehen sein, daß die zuvor beschriebene Nabe des ersten Stirnrades der Stirnradstufe entfällt, wobei dann die Kegelrollenlagerung bzw. Rillenkugellagerung dieses ersten Stirnrades räumlich gesehen radial unterhalb der Verzahnung des ersten Stirnrades angeordnet ist. Der Lageraußenring der Kegelrollenlagerung bzw. Rillenkugellagerung ist dabei in eine entsprechend Lagerbohrung des ersten Stirnrades eingesetzt, könnte aber auch ganz entfallen, wenn die Laufbahnen der Kegelrollen bzw. Kugeln direkt in dem ersten Stirnrad integriert sind. Der Lagerinnenring der Kegelrollenlagerung bzw. Rillenkugellagerung kann auf einem nabenförmigen Abschnitt der Lagerplatte, der sich axial in Richtung des dritten Planetenradsatzes RS3 erstreckt und dabei das erste Stirnrad zentrisch durchgreift, festgesetzt sein.

Als konstruktive Detaillösung ist in Fig. 10 - wie bereits angedeutet - die Servoeinrichtung 110 der Bremse A nur teilweise in der Gehäusewand GW integriert. In dem dargestellten Beispiel ist diese Gehäusewand GW zum einen die antriebsmotornahe Außenwand des Automatgetriebes, zum anderen aber auch gleichzeitig ein Pumpengehäuse einer Ölpumpe des Automatgetriebes zur Druckmittelversorgung der Schaltelemente und zur Schmiermittelversorgung der diversen Schaltelemente, Verzahnungen und Lagerungen. Entsprechend sind in der Gehäusewand verschiedene Kanäle zur Druck- und Schmiermittelführung integriert. Auch ist in die Gehäusewand GW eine Leitradwelle LRW verdrehfest eingesetzt, beispielsweise verschraubt. Zum einen bildet diese Leitradwelle LRW eine Art gehäusefeste Nabe zur Drehmomentabstützung eines im Kraftfluß zwischen Antriebsmotor und Antriebswelle zwischengeschalteten Anfahrelementes, beispielsweise eines Trilok-Wandlers. Kinematisch ist das Anfahrelement dabei außerhalb des Getriebeinnenraums an einem Wellen-Abschnitt LRWW der Leitradwelle LRW angebunden. Zum anderen sind auch in einem Flansch-Abschnitt LRWF dieser Leitradwelle LRW verschiedene Kanäle zur Druck- und Schmiermittelführung integriert. Weiterhin weist diese Leitradwelle LRW einen axial vergleichsweise kurzen zylindrischer Abschnitt LRWZ auf, der sich axial in Richtung Getriebeinnenraum erstreckt. Der Außendurchmesser dieses zylindrischer Abschnitt LRWZ der Leitradwelle LRW bildet den Innendurchmesser des Kolben- bzw. Druckraumes 111 der Servoeinrichtung 110 der Bremse A und entsprechend eine axiale Innen-Lauffläche des Kolbens 114 der Servoeinrichtung 110 der Bremse A, der radial oberhalb des zylindrischer Abschnitt LRWZ axial verschiebbar angeordnet ist. Der Außendurchmesser des Kolben- bzw. Druckraumes 111 der Servoeinrichtung 110 und die entsprechende axiale Außen-Lauffläche des Kolbens 114 der Servoeinrichtung 110 wird gebildet von einem axialen Einstich der Gehäusewand GW (bzw. des Pumpengehäuses), auf einem Durchmesser größer dem Außendurchmesser des Flansch-Abschnitts LRWF der Leitradwelle LRW. Somit wird der Druckraum 111 der Servoeinrichtung 110 durch den Kolben 114, die Gehäusewand GW, den Flansch-Abschnitt LRWF der Leitradwelle LRW und den zylindrischen Leitradwellen-Abschnitt LRWZ gebildet. Die (nicht rotierende) Druckmittelzuführung zu diesem Druckraum 111 ist in Fig. 10 zur Vereinfachung nicht dargestellt. Das Rückstellelement 113 der Servoeinrichtung 110 zur Kolbenrückstellung ist hier als Tellerfeder ausgeführt, die sich einerseits an dem Kolben 114 im Bereich des Kolbenaußendurchmessers axial abstützt und andererseits an dem Getriebegehäuse GG im Bereich des Lamellenmitnahmeprofils des Getriebegehäuses GG für die Außenlamellen der Bremse A.

Das Eingangselement 120 der Bremse A ist ein Innenlamellenträger und beispielhaft als zylinderförmige Blechkonstruktion ausgeführt. Dieser axial kurz bauende Innenlamellenträger (120) weist einen zylindrischen Abschnitt 121 auf, an dessen Außendurchmesser ein Mitnahmeprofil vorgesehen ist zur Aufnahme der Belaglamellen des Lamellenpaketes 100 der Bremse A. Auf der der Gehäusewand GW zugewandten Seite dieses zylindrischen Abschnitts 121 schließt sich ein zumindest teilweise scheibenförmiger Abschnitt 122 des Innenlamellenträgers (120) der Bremse A an den zylindrischen Abschnitt 121 an und erstreckt sich parallel zum flanschförmigen Leitradwellen-Abschnitt LRWF radial nach innen bis zu einem nabenförmigen Abschnitt der Sonnenwelle SOW3, mit der dieser scheibenförmige Abschnitt 122 des Innenlamellenträgers (120) der Bremse A verschweißt ist. Die Sonnenwelle SOW3 wiederum ist mit dem Sonnenrad SO3 des dritten Planetenradsatzes RS3 über ein geeignetes Mitnahmeprofil formschlüssig verbunden, sodaß die Sonnenwelle SOW3 auch als Nabe des Innenlamellenträgers (120) der Bremse A interpretiert werden kann. Die Antriebswelle AN wiederum verläuft radial innerhalb der Sonnenwelle SOW3 und durchdringt die in die Gehäusewand GW eingesetzte Leitradwelle LRW zentrisch.

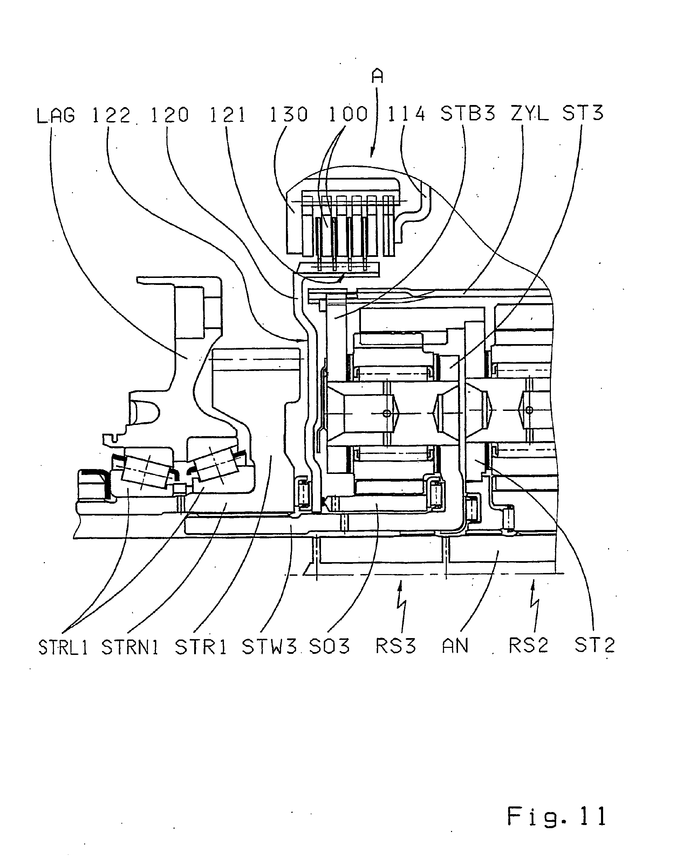

Fig. 11 zeigt nun einen sektionalen Getriebeschnitt mit einer vierten beispielhaften Detailkonstruktion und betrifft eine gegenüber Fig. 10 veränderte räumliche Anordnung der Bremse A relativ zum dritten Planetenradsatz RS3 und zum ersten Stirnrad STR1 des Stirntriebs. Die Lagerung des Stirnrades STR1 am Getriebegehäuse ist aus Fig. 18 übernommen. Entsprechend weist das Stirnrades STR1 eine Stirnradnabe STRN1 auf, die sich axial in die zum Planetenradsatz RS3 entgegengesetzter Richtung erstreckt. Auf dem Außendurchmesser der Stirnradnabe STRN1 sind die Lagerinnenringe der zwei unmittelbar nebeneinander angeordneten Kegelrollenlager der Stirnradlagerung STRL1 aufgeschoben und axial über eine Wellenmutter auf der Stirnradnabe STRN1 fixiert. Die Lageraußenringe der beiden Kegelrollenlager sind in der getriebegehäusefesten Lagerplatte LAG gelagert. Zur kinematischen Anbindung des Stirnrades STR1 an den Steg ST3 des dritten Planetenradsatzes RS3 ist am Innendurchmesser der Stirnradnabe STRN1, in axialer Richtung gesehen radial unterhalb der Verzahnung des Stirnrades STR1, ein Mitnahme-Innenprofil vorgesehen, in das ein korrespondierendes Mitnahme-Außenprofil einer Stegwelle STW3 eingreift. Diese Stegwelle STW3 erstreckt sich, ausgehend von dem genannten Mitnahmeprofil, axial in Richtung des zweiten (mittleren) Planetenradsatzes RS2 bis zu dessem Steg ST2 und durchgreift dabei das Sonnenrad SO3 des dritten Planetenradsatzes RS3 zentrisch. Auf der dem zweiten Planetenradsatz RS2 zugewandten Seite des dritten Planetentradsatzes RS3 ist die Stegwelle STW3 mit dem Steg ST3 des dritten Planetentradsatzes RS3 verbunden. In dem in Fig. 11 dargestellten Beispiel sind Steg ST3 und Stegwelle STW3 einstückig ausgeführt.

Die Bremse A ist räumlich gesehen radial über dem dritten Planetenradsatz RS3 angeordnet. Das Eingangselement 120 der Bremse A ist als zylinderförmiger Innenlamellenträger ausgebildet, der den dritten Planetenradsatz RS3 abschnittsweise übergreift. Der scheibenförmige Abschnitt 122 dieses Innenlamellenträgers (120) erstreckt sich parallel zum Stegblech STB3 des dritten Planetenradsatzes RS3 und trennt den dritten Planetenradsatz RS3 räumlich von dem Stirnrad STR1. An seinem Innendurchmesser ist der scheibenförmige Abschnitt 122 mit dem Sonnenrad SO3 des dritten Planetenradsatzes RS3 verbunden, hier beispielhaft verschweißt. In diesem Bereich ist auch ein Axiallager angeordnet, welches den scheibenförmigen Abschnitt 122 des Innenlamellenträgers (120) der Bremse A von dem Stirnrad STR1 trennt. Der scheibenförmige Abschnitt 122 des Innenlamellenträgers (120) erstreckt sich radial nach außen bis auf einen Durchmesser, der etwas größer ist als der Außendurchmesser des Stegblechs STB3 des dritten Planetenradsatzes RS3 bzw. etwas größer ist als der Außendurchmesser des Zylinders ZYL, über den das Stegblechs STB3 mit einem (hier nicht dargestellten) anderen Planetenradsatzelement verbunden ist. Am Außendurchmesser des scheibenförmigen Abschnitts 122 schließt sich der zylindrische Abschnitt 121 des Innenlamellenträgers (120) der Bremse A an und erstreckt sich axial in Richtung des zweiten (mittleren) Planetenradsatzes RS2. Am Außendurchmesser des zylindrischen Abschnitts 121 ist ein Mitnahmeprofil vorgesehen zur Aufnahme der Belaglamellen des Lamellenpaketes 100 der Bremse A. In Fig. 11 nur angedeutet sind das als Außenlamellenträger ausgebildete Ausgangselement 130 der Bremse A und die Servoeinrichtung (von der hier nur ein Teil des Kolbens 114 dargestellt ist) zur Betätigung des Lamellenpaketes 100.

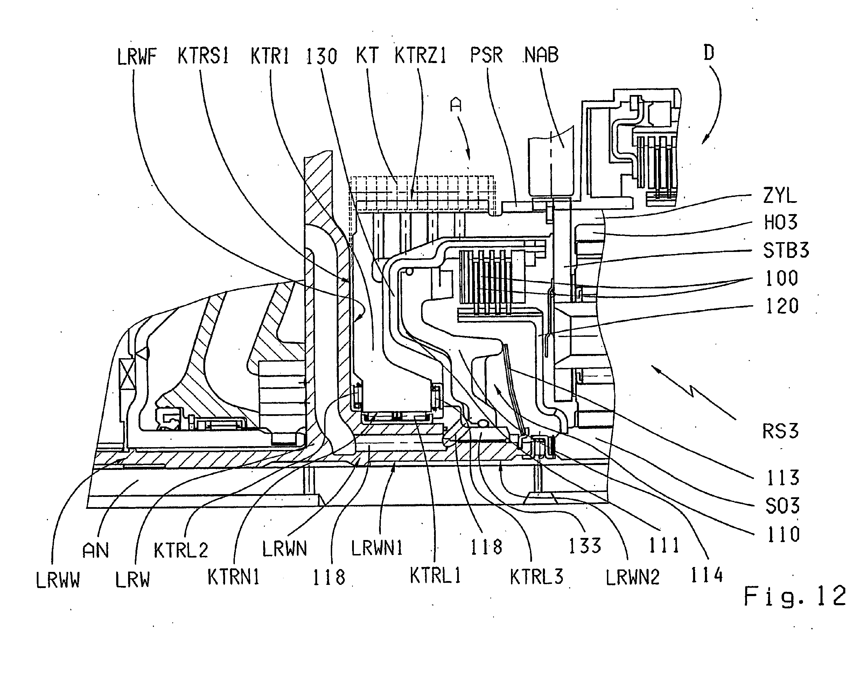

Fig. 12 schließlich zeigt nun einen sektionalen Getriebeschnitt mit einer fünften beispielhaften Detailkonstruktion und betrifft wiederum eine veränderte räumliche Anordnung der Bremse A relativ zum dritten Planetenradsatz RS3, diesmal in Verbindung mit einem Kettentrieb. Die wesentlichen Elemente dieser Detailkonstruktion gemäß Fig. 12 sind Gegenstand der nicht vorveröffentlichten Deutschen Patentanmeldung DE 10236607.1 der Anmelderin, deren Offenbarung auch zum Inhalt der vorliegenden Erfindung zählen soll.

Entsprechend der fünften Detailkonstruktion gemäß Fig. 12 ist als Wirkverbindung zwischen dem Ausgangselement des aus den drei Einzel-Planetenradsätzen gekoppelten Planetengetriebes mit der Abtriebswelle des Automatgetriebes ein Kettentrieb vorgesehen. Die in Fig. 12 angedeutete Kette dieses Kettentriebs ist mit KT bezeichnet, das planetengetriebeseitige (erste) Kettenrad dieses Kettentriebs mit KTR1. Dieses angetriebene (erste) Kettenrad KTR1 und die Bremse A grenzen beide axial an den dritten Planetenradsatz RS3 an, wobei die Bremse A radial unterhalb einer Kettenrad-Verzahnung des Kettenrades KTR1 angeordnet ist.

Dieses angetriebene (erste) Kettenrad KTR1 ist geometrisch als ein in Richtung des (dritten) Planetenradsatz RS3 hin geöffneter Zylinder ausgebildet, mit einem Nabenabschnitt KTRN1, einem scheibenförmigen Kettenradabschnitt KTRS1 und einem zylindrischen Kettenradabschnitt KTRZ1. Dieser zylindrische Kettenradabschnitt KTRZ1 erstreckt sich in axialer Richtung auf einem Durchmesser, der größer ist als der Außendurchmesser der Bremse A, insbesondere größer als der Außendurchmesser des als Außenlämellenträger ausgebildeten Ausgangselementes 130 der Bremse A. An seinem Außendurchmesser weist zylindrische Kettenradabschnitt KTRZ1 zum einen eine geeignete Ketten-Verzahnung auf, in welche die Kette KT zur Drehzahl- und Drehmomentübertragung eingreift, zum anderen hier beispielhaft zusätzlich eine Parksperren-Verzahnung, in die eine (hier zur Vereinfachung nicht dargestellte) Parksperrenklinke zum Verblocken der Abtriebswelle am Getriebegehäuse des Automatgetriebes eingreifen kann. Der zylindrische Kettenradabschnitt KTRZ1 des Kettenrades KTR1 bildet also gleichzeitig ein Parksperrenrad PSR. In dem in Fig. 12 dargestellten Beispiel ist die (dem Parksperrenrad PSR zuzuordnende) Parksperren-Verzahnung näher am dritten Planetenradsatz RS3 angeordnet als die Ketten-Verzahnung des Kettenrades KTR1. An der dem Planetenradsatz RS3 abgewandten Seite des zylindrischen Kettenradabschnitts KTRZ1 schließt sich der scheibenförmigen Kettenradabschnitt KTRS1 an den zylindrischen Kettenradabschnitt KTRZ1 an und erstreckt sich radial nach innen bis zu dem Nabenabschnitt KTRN1 des Kettenrades KTR1. Wie später noch im Detail erläutert wird, ist dieser Nabenabschnitt KTRN1 wiederum auf einer Nabe LRWN einer getriebegehäusefesten Leitradwelle LRW gelagert. An seiner dem Planetenradsatz RS3 zugewandten Seite ist der zylindrische Kettenradabschnitt KTRZ1 mit dem Stegblech STB3 des dritten Planetenradsatzes RS3 vorzugsweise formschlüssig verbunden. Im dargestellten Beispiel greifen entsprechend ausgebildete Finger axialer Erstreckung des zylindrischen Kettenradabschnittes KTRZ1 in korrespondierende axiale Ausnehmungen des Stegblechs STB3 ein, die in Umfangsrichtung verteilt etwa auf dem Durchmesser des Hohlrades HO3 des dritten Planetenradsatzes RS3 angeordnet sind.

Der zylindrische Kettenradabschnitt KTRZ1 des angetriebenen Kettenrades KTR1 bildet also einen Zylinderraum, innerhalb dessen die Bremse A angeordnet ist. Wie bereits erwähnt, grenzt das Lamellenpaket 100 mit Außen- und Belaglamellen unmittelbar axial an das Stegblech STB3 des Planetenradsatzes RS3 an. Das als Innenlamellenträger ausgebildete Eingangselement 120 der Bremse A weist geometrisch die Form eines in Richtung des Planetenradsatzes RS3 hin geschlossenen Topfes auf, mit einer zylindrischen Mantelfläche, an derem Außendurchmesser ein Mitnahmeprofil vorgesehen ist zur Aufnahme der Belaglamellen des Lamellenpaketes 100, und mit einem Boden, der sich parallel zum Stegblech STB3 radial nach innen erstreckt und an seinem Innendurchmesser mit dem Sonnrad SO3 des dritten Planetenradsatzes RS3 verbunden, hier beispielhaft verschweißt ist. Entsprechend ist das als Außenlamellenträger ausgebildete Ausgangselement 130 der Bremse A geometrisch als in Richtung des Planetenradsatz RS3 hin geöffneter Topf ausgebildet, innerhalb dessen die Servoeinrichtung 110 und das Lamellenpaket 100 der Bremse A angeordnet sind. In dem dargestellten Beispiel weist dieser Außenlamellenträger (130) eine Nabe 133 auf, die über ein geeignetes Mitnahmeprofil formschlüssig mit der getriebegehäusefesten Leitradwelle LRW verbunden ist. Am Innendurchmesser der zylindrischen Mantelfläche des Außenlamellenträgers (130) der Bremse A ist ein Mitnahmeprofil vorgesehen zur Aufnahme der Außenlamellen des Lamellenpaketes 100. Der Kolben 114 der Servoeinrichtung 110 grenzt an die scheiben- und nabenförmige Mantelfläche dieses Außenlamellenträgers (130) an und bildet zusammen mit diesen Mantelflächenabschnitten den Druckraum 111 der Servoeinrichtung 110. Dabei ist der Kolben 114 abschnittsweise axial zwischen der scheibenförmigen Mantelfläche des Außenlamellenträgers (130) und dem Lamellenpaket 100 angeordnet und abschnittsweise in axialer Richtung gesehen radial unterhalb dem Lamellenpaket 100. Bei einer Druckbeaufschlagung des Druckraumes 111 betätigt der Kolben 114 das Lamellenpaket 100 also axial in Richtung des benachbarten Planetenradsatzes RS3, gegen die Kraft des Rückstellelementes 113, das hier beispielhaft aus zwei in Reihe geschalteten Tellerfedern besteht, die sich an der Nabe 133 abstützen.

Ähnlich wie in Fig. 10, bildet die getriebegehäuse feste Leitradwelle LRW.zum einen eine Art gehäusefeste Nabe zur Drehmomentabstützung eines im Kraftfluß zwischen Antriebsmotor und Antriebswelle zwischengeschalteten Anfahrelementes, beispielsweise eines Trilok-Wandlers. Kinematisch ist das Anfahrelement dabei außerhalb des Getriebeinnenraums an einem Wellen-Abschnitt LRWW der Leitradwelle LRW angebunden. Zum anderen weist die Leitradwelle LRW auch einem Flansch-Abschnitt LRWF radialer Erstreckung auf, der den Getriebeinnenraum auf der dem Planetenradsatz RS3 abgewandten Seite des Kettenrades KTR1 abschließt. Weiterhin weist diese Leitradwelle LRW einen zylindrischen Naben-Abschnitt LRWN auf, der sich axial in Richtung Getriebeinnenraum erstreckt, der geometrisch in zwei Abschnitte LRWN1 und LRWN2 unterteilt ist, wobei der flanschnahe Abschnitt mit LRWN1 bezeichnet ist und der planetenradsatznahe Abschnitt mit LRWN2. Räumlich gesehen radial über dem flanschnahen Abschnitt LRWN1 ist das Kettenrad KTR1 gelagert. Das entsprechende Lager ist beispielhaft als bauraumsparendes Radial-Nadellager ausgebildet und mit KTRL1 bezeichnet. Zur axialen Abstützung des Kettenrades KTR1 sind zwei Axial-Nadellager KTRL2 und KTRL3 vorgesehen, wobei das Axial-Nadellager KTRL2 axial zwischen dem Flansch-Abschnitt LRWF der getriebegehäusefesten Leitradwelle LRW und dem Kettenrad KTR1 angeordnet ist, und das Axial-Nadellager KTRL3 axial zwischen dem Kettenrad KTR1 und der nabennahen Mantelfläche des Außenlamellenträgers (130) der Bremse A.

Weiterhin eingezeichnet ist in Fig. 12 eine Druckmittelzuführung 118 zum Druckraum 111 der Servoeinrichtung 110 der Bremse A, die abschnittsweise innerhalb der Leitradwelle LRW und der Nabe 133 des Außenlamellenträgers (130) der Bremse A verläuft.

Dem Fachmann ist klar, daß der Flansch-Abschnitt LRWF und der Nabenabschnitt LRWN der Leitradwelle LRW auch als Teil des Getriebegehäuses bzw. einer Getriebgehäusewand ausgeführt sein kann.

Als weiteres Detail ist in Fig. 12 ein Abtriebsdrehzahlsensor NAB üblicher Bauart eingezeichnet, der zur Bestimmung einer Drehzahl und/oder Drehrichtung der Abtriebswelle des Automatgetriebes das Zahnprofil des Parksperrenrades PSR abtastet.

Wie bereits erwähnt, sind die zuvor beschriebene Getriebeschemata hinsichtlich der achsparallelen Anordnung von Antriebs- und Abtriebswelle des Automatgetriebes relativ zueinander als beispielhaft anzusehen. Der Fachmann wird die wesentlichen Merkmale der vorgeschlagenen einzelnen erfindungsgemäßen Bauteilanordnungen und Detailkonstruktionen bedarfsweise sinngemäß auch bei anderen räumliche Anordnungen von Antriebs- und Abtriebswelle relativ zueinander anwenden. So kann als Variante der nicht koaxialen Wellenanordnung auch vorgesehen sein, daß Antriebs- und Abtriebswelle des Automatgetriebes winklig zueinander verlaufen, beispielsweise mit einem relativen Winkel zueinander von 90 Grad für einen Fahrzeug-Antriebsstrang mit längs zur Fahrtrichtung liegendem Antriebsmotor ("Front-Längs-Antrieb" oder "Heck-Längs-Antrieb"), oder beispielsweise auch mit einem relativen Winkel zueinander von ungleich 90 Grad zur Anpassung des Antriebsstranges an beengte Einbauräume im Kraftfahrzeug. Für derartige Anwendungen kann in dem Automatgetriebe anstelle des Stirntriebs bzw. Kettentriebs ein Kegeltrieb (bedarfsweise mit Hypoidverzahnung) oder auch ein Stirntrieb mit Beveloid-Verzahnung vorgesehen sein. Eine weite Verbreitung haben auch Fahrzeuge mit koaxial zueinander verlaufender Antriebs- und Abtriebswelle des Automatgetriebes ("Standard-Antrieb"). Wesentliche Merkmale der vorgeschlagenen einzelnen erfindungsgemäßen Bauteilanordnungen und Detailkonstruktionen sind sinngemäß auch auf derartige Automatgetriebe mit koaxialer Antriebs- und Abtriebswelle einfach übertragbar. So wird in diesem Fall zweckmäßigerweise die (zur Antriebswelle koaxial verlaufende) Abtriebswelle auf der dem zweiten Planetenradsatz RS2 abgewandten Seite des dritten Planetenradsatzes RS3 angeordnet sein, an der Seite des Automatgetriebes, an der auch die Bremse A angeordnet ist. Hierbei wird die Abtriebswelle sowohl die Bremse A als auch den dritten Planetenradsatz RS3 zentrisch durchgreifen.

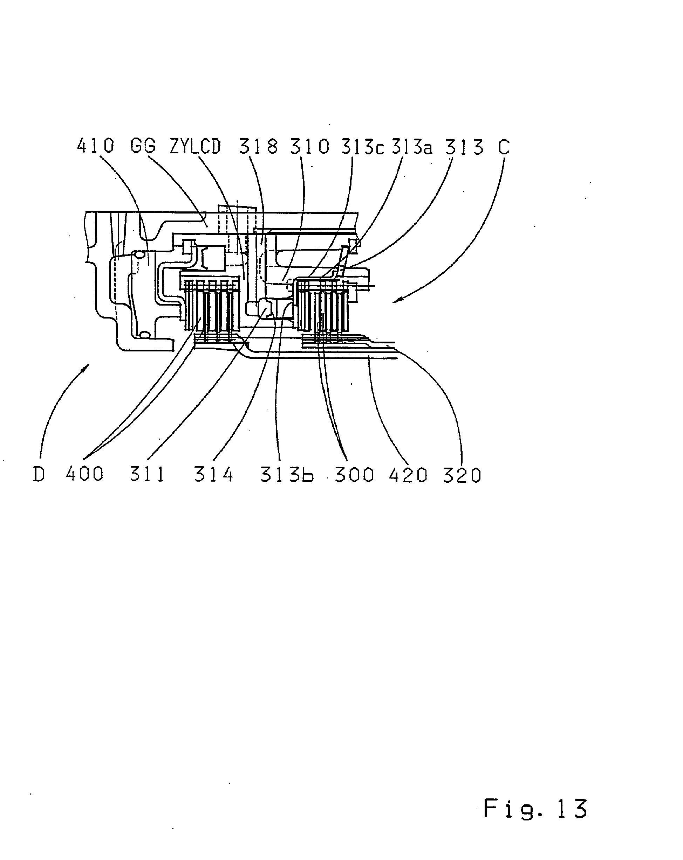

Anhand Fig. 13 wird nun eine sechste beispielhafte Detailkonstruktion näher erläutert, welche die Ausgestaltung der Baugruppe mit den beiden Bremsen C, D und dabei vorrangig die Ausgestaltung der Servoeinrichtung 310 der Bremse C betrifft. Prinzipiell ist diese sechste Detailkonstruktion mit den zuvor beschrieben verschiedenen erfindungsgemäßen Bauteilanordnungen und Detailkonstruktionen sinngemäß kombinierbar. Dabei zeigt Fig. 13 einen sektionalen Getriebeschnitt im Bereich dieser Baugruppe mit den beiden Bremsen C, D. Im Unterschied zu Fig. 5, Fig. 8. und Fig. 9 ist die Betätigungsrichtung der Servoeinrichtungen 310, 410 beider Bremsen C, D beim Schließvorgang der jeweiligen Bremse C bzw. D nunmehr gleichgerichtet, hier beispielhaft axial in Richtung der benachbarten Baugruppe mit den Kupplungen B, E. Ähnlich wie in Fig. 8 bzw. Fig. 9 ist ein gemeinsamer Außenlamellenträger ZYLCD für beide Lamellenpakete 300 und 400 der Bremsen C und D vorgesehen. Ähnlich wie in Fig. 8 bzw. Fig. 9 sind auch Teile der Servoeinrichtungen 310 und 410 beider Bremsen C und D innerhalb dieses gemeinsamer Außenlamellenträger ZYLCD angeordnet. Die Servoeinrichtung 410 der Bremse D ist dabei identisch ausgeführt wie in Fig. 8 bzw. Fig. 9. Infolge der gegenüber Fig. 8 bzw. Fig. 9 umgedrehten Betätigungsrichtung der Bremse C konnte nunmehr auch der Kolben- bzw. Druckraum 311 der Servoeinrichtung 310 der Bremse C vollständig in den gemeinsamen Außenlamellenträger ZYLCD integriert werden. Entsprechend ist der axial im Kolben- bzw. Druckraum 311 verschiebbar angeordnete Kolben 314 nunmehr auf der Seite des Lamellenpaketes 300 angeordnet, die der Bremse D zugewandt ist. Eine entsprechende Druckmittelzuführung zu dem Druckraum 311 ist mit 318 bezeichnet und verläuft abschnittsweise innerhalb des Außenlamellenträger ZYLCD und abschnittsweise im Getriebegehäuse GG, in das der Außenlamellenträger ZYLCD verdrehfest eingesetzt ist.

Als weiteres Konstruktionsdetail ist in Fig. 13 ein Druckteller 313a vorgesehen, der die Federkraft des hier als Tellerfeder ausgeführten Rückstellelementes 313 auf den Kolben 314 überträgt. Diese Tellerfeder (313) ist räumlich gesehen radial über den kolbenabgewandten letzten Lamellen des Lamellenpaketes 300 angeordnet und stützt sich im Bereich ihres Außendurchmessers axial an einem äußeren Bund der Außenlamellenträgers ZYLCD ab. Ausgehend von seiner ringförmigen Kolbenanlagefläche 313b erstreckt sich der Druckteller 313a radial nach außen bis knapp an das Lamellenmitnahmeprofil des Außenlamellenträgers ZYLCD für die Außenlamellen des Lamellenpaketes 300 und geht dort über in einen geschlitzten Abschnitt 313c des Drucktellers 313a. Dieser geschlitzte Abschnitt 313c verläuft in axialer Richtung innerhalb korrespondierender, axial gerichteter Ausnehmungen im Bereich des genannten Lamellenmitnahmeprofils radial oberhalb der Lamellen 300 und erstreckt sich axial bis zum Innendurchmesser der Tellerfeder (313), an dem er anliegt. Der Druckteller 313a übergreift also das Lamellenpaket 300 im wesentlichen.

Wie bereits erwähnt, sind die den Figuren 3 bis 13 zugrundeliegenden Getriebeschemata für die kinematische Koppelung der Radsatzelemente der drei Einzel-Planetenradsätze untereinander und zu den fünf Schaltelementen sowie zu An- und Abtriebswelle des Automatgetriebes als beispielhaft anzusehen. Aus dem Stand der Technik der DE 199 12 480 A1 ist eine modifizierte kinematische Koppelung einzelner Radsatzelemente bekannt, bei der im Unterschied zu der den Figuren 3 bis 13 zugrundeliegende bisherigen kinematischem Radsatzkoppelung das Hohlrad HO1 des ersten Planetenradsatzes RS1 und der Steg ST2 des zweiten Planetenradsatzes RS2 und die Abtriebswelle AB ständig miteinander verbunden sind, sowie der Steg ST3 des dritten Planetenradsatzes RS3 ständig mit dem Hohlrad HO2 des zweiten Planetenradsatzes RS2 und der Steg ST1 des ersten Planetenradsatzes RS1 ständig mit dem Hohlrad HO3 des dritten Planetenradsatzes RS3 sind, bei ansonsten unveränderter kinematischen Koppelung der drei Einzel-Planetenradsätze RS1, RS2, RS3 an die fünf Schaltelemente A bis E und an die Antriebswelle. Der Fachmann wird die erfindungswesentlichen Merkmale der zuvor in Fig. 3 bis Fig. 13 vorgeschlagenen Anordnungen und Konstruktionsdetails für die einzelnen Schaltelemente,und den abtriebsseitigen Stirn- bzw. Kettentrieb bei Bedarf sinngemäß auch auf diese modifizierte Radsatzkoppelung übertragen.

### Bezugszeichen

- A: erstes Schaltelement, Bremse
- B: zweites Schaltelement, Kupplung
- C: drittes Schaltelement, Bremse
- D: viertes Schaltelement, Bremse
- E: fünftes Schaltelement, Kupplung
- FD: Freilauf des vierten Schaltelementes
- ZYLBE: Lamellenträger des zweiten und fünften Schaltelementes
- ZYLCD: Außenlamellenträger des dritten und vierten Schaltelementes

- AN: Antriebswelle
- AB: Abtriebswelle

- GG: Getriebegehäuse
- GW: Gehäusewand
- GN: getriebegehäusefeste Nabe
- GZ: Gehäusezwischenwand
- LAG: Lagerplatte

- LRW: Leitradwelle
- LRWF: Flansch-Abschnitt der Leitradwelle
- LRWW: Wellen-Abschnitt der Leitradwelle
- LRWZ: zylindrischer Abschnitt der Leitradwelle
- LRWN: Naben-Abschnitt der Leitradwelle
- LRWN1: flanschnaher Leitradwellen-Nabenabschnitt
- LRWN2: planetenradsatznaher Leitradwellen-Nabenabschnitt

- NAN: Antriebsdrehzahlsensor
- NAB: Abtriebsdrehzahlsensor
- PSR: Parksperrenrad
- ZYL: Zylinder

- STST: Stirnradstufe, Stirntrieb
- STR1: erstes Stirnrad der Stirnradstufe
- STR2: zweites Stirnrad der Stirnradstufe
- STR3: drittes Stirnrad der Stirnradstufe
- STRL1: Lagerung des ersten Stirnrades der Stirnradstufe
- STRN1: Nabe des ersten Stirnrades der Stirnradstufe
- DIFF: Differential

- KT: Kette
- KTR1: (angetriebenes, erstes) Kettenrad
- KTRL1: Radiallager des (ersten) Kettenrades
- KTRL2: gehäuseseitiges Axiallager des (ersten) Kettenrades
- KTRL3: schaltelementseitiges Axiallager des (ersten) Kettenrades
- KTRN1: Nabenabschnitt des (ersten) Kettenrades
- KTRS1: scheibenförmiger Abschnitt des (ersten) Kettenrades
- KTRZ1: zylinderförmiger Abschnitt des (ersten) Kettenrades

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenrad des ersten Planetenradsatzes
- SOW1: Sonnenwelle des ersten Planetenradsatzes
- STB11: erstes Stegblech des ersten Planetenradsatzes
- STB12: zweites Stegblech des ersten Planetenradsatzes
- STW1: Stegwelle des ersten Planetenradsatzes

- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenrad des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenrad des dritten Planetenradsatzes
- SOW3: Sonnenwelle des dritten Planetenradsatzes
- STB3: Stegblech des dritten Planetenradsatzes
- STW3: Stegwelle des dritten Planetenradsatzes

- 100: Lamellen des ersten Schaltelementes
- 110: Servoeinrichtung des ersten Schaltelementes
- 111: Druckraum der Servoeinrichtung des ersten Schaltelementes
- 113: Rückstellelement der Servoeinrichtung des ersten Schaltelementes
- 114: Kolben der Servoeinrichtung des ersten Schaltelementes
- 118: Druckmittelzuführung zum Druckraum des ersten Schaltelementes
- 120: Eingangselement des ersten Schaltelementes
- 121: zylindrischer Abschnitt des Eingangselementes des ersten Schaltelementes
- 122: scheibenförmiger Abschnitt des Eingangselementes des ersten Schaltelementes
- 130: Ausgangselement des ersten Schaltelementes
- 133: Nabe des Ausgangselementes des ersten Schaltelementes
- 200: Lamellen des zweiten Schaltelementes
- 201: Sicherungsring für die Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Betätigungs-Stempel der Servoeinrichtung des zweiten Schaltelementes
- 218: Druckmittelzuführung zum Druckraum des zweiten Schaltelementes
- 219: Schmiermittelzuführung zum Druckausgleichsraum des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 230: Ausgangselement des zweiten Schaltelementes
- 231: zylindrischer Abschnitt des Ausgangselementes des zweiten Schaltelementes
- 232: scheibenförmiger Abschnitt des Ausgangselementes des zweiten Schaltelementes
- 300: Lamellen des dritten Schaltelementes
- 303: Bremsband des dritten Schaltelementes
- 310: Servoeinrichtung des dritten Schaltelementes
- 311: Druckraum der Servoeinrichtung des dritten Schaltelementes
- 313: Rückstellelement der Servoeinrichtung des dritten Schaltelementes
- 313a: Druckteller
- 313b: ringförmiger Abschnitt des Drucktellers, Kolbenanlagefläche des Drucktellers
- 313c: geschlitzter Abschnitt des Drucktellers
- 314: Kolben der Servoeinrichtung des dritten Schaltelementes
- 318: Druckmittelzuführung zum Druckraum des dritten Schaltelementes
- 320: Eingangselement des dritten Schaltelementes
- 321: zylindrischer Abschnitt des Eingangselementes des dritten Schaltelementes
- 322: scheibenförmiger Abschnitt des Eingangselementes des dritten Schaltelementes
- 330: Ausgangselement des dritten Schaltelementes
- 400: Lamellen des vierten Schaltelementes
- 410: Servoeinrichtung des vierten Schaltelementes
- 411: Druckraum der Servoeinrichtung des vierten Schaltelementes
- 413: Rückstellelement der Servoeinrichtung des vierten Schaltelementes
- 414: Kolben der Servoeinrichtung des vierten Schaltelementes
- 420: Eingangselement des vierten Schaltelementes
- 421: zylindrischer Abschnitt des Eingangselementes des vierten Schaltelementes
- 430: Ausgangselement des vierten Schaltelementes
- 500: Lamellen des fünften Schaltelementes
- 501: Sicherungsring für die Lamellen des fünften Schaltelementes
- 510: Servoeinrichtung des fünften Schaltelementes
- 511: Druckraum des fünften Schaltelementes
- 512: Druckausgleichsraum des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 518: Druckmittelzuführung zum Druckraum des fünften Schaltelementes
- 519: Schmiermittelzuführung zum Druckausgleichsraum des fünften Schaltelementes
- 520: Eingangselement des fünften Schaltelementes
- 521: (erster) zylindrischer Abschnitt des Eingangselementes des fünften Schaltelementes
- 522: (erster) scheibenförmiger Abschnitt des Eingangselementes des fünften Schaltelementes
- 523.: Nabe des Eingangselementes des fünften Schaltelementes
- 524: zweiter zylindrischer Abschnitt des Eingangselementes des fünften Schaltelementes
- 525: zweiter scheibenförmiger Abschnitt des Eingangselementes des fünften Schaltelementes
- 526: erster zylindrischer Nabenabschnitt der Nabe des Eingangselementes des fünften Schaltelementes
- 527: zweiter zylindrischer Nabenabschnitt der Nabe des Eingangselementes des fünften Schaltelementes
- 530: Ausgangselement des fünften Schaltelementes
- 531: zylindrischer Abschnitt des Ausgangselementes des fünften Schaltelementes
- 532: scheibenförmiger Abschnitt des Ausgangselementes des fünften Schaltelementes

## Patentansprüche

1. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial in Reihe nebeneinander angeordnet sind,
- der zweite Planetenradsatz (RS2) räumlich gesehen zwischen dem ersten und dritten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und über das fünfte Schaltelement (E) mit einem Steg (ST1) des ersten Planetenradsatzes (RS1) verbindbar ist,
- das Sonnenrad (SO1) des ersten Planetenradsatzes (RS1) über das dritte Schaltelement (C) und der Steg (ST1) des ersten Planetenradsatzes (RS1) über das vierte Schaltelement (D) an dem Getriebegehäuse (GG) festsetzbar ist,
- die Abtriebswelle (AB) und ein Hohlrad (HO1) des ersten Planetenradsatzes (RS1) und ein Steg (ST3) des dritten Planetenradsatzes (RS3) miteinander verbunden sind und ein Steg (ST2) des zweiten Planetenradsatzes (RS2) mit einem Hohlrad (HO3) des dritten Planetenradsatzes (RS3) verbunden ist und der Steg (ST1) des ersten Planetenradsatzes (RS1) mit einem Hohlrad (HO2) des zweiten Planetenradsatzes (RS2) verbunden ist,
**dadurch gekennzeichnet, dass** das zweite und fünfte Schaltelement (B, E) als eine Baugruppe zusammengefaßt sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung des jeweiligen Lamellenpaketes (200, 500) des zweiten bzw. fünften Schaltelementes (B, E), sowie
- einem für das zweite und fünfte Schaltelement (B, E) gemeinsamen Lamellenträger (ZYLBE) zur Aufnahme der Lamellenpakete (200, 500) des zweiten und fünften Schaltelementes (B, E),
wobei
- diese Baugruppe mit dem zweiten und fünften Schaltelement (B, E) an den ersten Planetenradsatz (RS1) angrenzt,
- die Lamellenpakete (200, 500) des zweiten und fünften Schaltelementes (B, E) axial nebeneinander angeordnet sind,
- das Lamellenpaket (200) des zweiten Schaltelementes (B) näher am zweiten Planetenradsatz (RS2) angeordnet ist als das Lamellenpaket (500) des fünften Schaltelementes (E) und

2. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial in Reihe nebeneinander angeordnet sind,
- der zweite Planetenradsatz (RS2) räumlich gesehen zwischen dem ersten und dritten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und über das fünfte Schaltelement (E) mit einem Steg (ST1) des ersten Planetenradsatzes (RS1) verbindbar ist,
- das Sonnenrad (SO1) des ersten Planetenradsatzes (RS1) über das dritte Schaltelement (C) und der Steg (ST1) des ersten Planetenradsatzes (RS1) über das vierte Schaltelement (D) an dem Getriebegehäuse (GG) festsetzbar ist,
- die Abtriebswelle (AB) und das Hohlrad (HO1) des ersten Planetenradsatzes (RS1) und der Steg (ST2) des zweiten Planetenradsatzes (RS2) miteinander verbunden sind und der Steg (ST3) des dritten Planetenradsatzes (RS3) mit dem Hohlrad (HO2) des zweiten Planetenradsatzes (RS2) verbunden ist und der Steg (ST1) des ersten Planetenradsatzes (RS1) mit dem Hohlrad (HO3) des dritten Planetenradsatzes (RS3) verbunden ist,
**dadurch gekennzeichnet, dass** das zweite und fünfte Schaltelement (B, E) als eine Baugruppe zusammengefaßt sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung des jeweiligen Lamellenpaketes (200, 500) des zweiten bzw. fünften Schaltelementes (B, E), sowie
- einem für das zweite und fünfte Schaltelement (B, E) gemeinsamen Lamellenträger (ZYLBE) zur Aufnahme der Lamellenpakete (200, 500) des zweiten und fünften Schaltelementes (B, E),
wobei
- diese Baugruppe mit dem zweiten und fünften Schaltelement (B, E) an den ersten Planetenradsatz (RS1) angrenzt,
- die Lamellenpakete (200, 500) des zweiten und fünften Schaltelementes (B, E) axial nebeneinander angeordnet sind,
- das Lamellenpaket (200) des zweiten Schaltelementes (B) näher am zweiten Planetenradsatz (RS2) angeordnet ist als das Lamellenpaket (500) des fünften Schaltelementes (E) und
- ein Druckraum (511) der Servoeinrichtung (510) des fünften Schaltelementes (E) näher am ersten Planetenradsatz (RS1) angeordnet ist als ein Druckraum (211) der Servoeinrichtung (210) des zweiten Schaltelementes (B)
und dass das vierte Schaltelement (D) räumlich gesehen in einem Bereich radial über den Planetenradsätzen (RS1, RS2, RS3) angeordnet ist, insbesondere in axialer Richtung gesehen radial oberhalb des zweiten und/oder dritten Planetenradsatzes (RS2, RS3).

3. Mehrstufen-Automatgetriebe nach Anspruch 1 oder 2, **dadurch gekennzeichnet, dass** die Lamellenpakete (200; 500) des zweiten und fünften Schaltelementes (B, E) einen zumindest ähnlichen Reibflächen-Durchmesser aufweisen.

4. Mehrstufen-Automatgetriebe nach Anspruch 3, **dadurch gekennzeichnet, dass** das Lamellenpaket (200) des zweiten Schaltelementes (B) und das Lamellenpaket (500) des fünften Schaltelementes (E) räumlich gesehen axial nebeneinander auf zumindest ähnlichem Durchmesser angeordnet sind, wobei das Lamellenpaket (200) des zweiten Schaltelementes (B) näher am ersten Planetenradsatz (RS1) angeordnet ist als das Lamellenpaket (500) des fünften Schaltelementes (E).

5. Mehrstufen-Automatgetriebe nach Anspruch 1 oder 2, **dadurch gekennzeichnet, dass** das Lamellenpaket (200) des zweiten Schaltelementes (B) einen größeren Reibflächen-Durchmesser aufweist als das Lamellenpaket (500) des fünften Schaltelementes (E).

6. Mehrstufen-Automatgetriebe nach Anspruch 4, **dadurch gekennzeichnet, dass** das Lamellenpaket (200) des zweiten Schaltelementes (B) in axialer Richtung gesehen zumindest teilweise radial oberhalb des ersten Planetenradsatzes (RS1) angeordnet ist, und dass das Lamellenpaket (500) des fünften Schaltelementes (E) in radialer Richtung gesehen zumindest teilweise axial neben dem ersten Planetenradsatz (RS1) angeordnet ist.

7. Mehrstufen-Automatgetriebe nach einem der Ansprüche 1 bis 6, **dadurch gekennzeichnet, dass** das dritte Schaltelementes (C) räumlich gesehen axial neben dem Lamellenpaket (200) des zweiten Schaltelementes (B) angeordnet ist.

8. Mehrstufen-Automatgetriebe nach Anspruch 7, **dadurch gekennzeichnet, dass** das dritte Schaltelement (C) räumlich gesehen in einem Bereich radial über den Planetenradsätzen (RS1, RS2, RS3) angeordnet ist, insbesondere in axialer Richtung gesehen radial oberhalb des ersten und/oder zweiten Planetenradsatzes (RS1, RS2).

9. Mehrstufen-Automatgetriebe nach einem der Ansprüche 1 bis 8, **dadurch gekennzeichnet, dass** das vierte Schaltelement (D) räumlich gesehen näher am dritten Planetenradsatz (RS3) angeordnet ist als das dritte Schaltelement (C).

10. Mehrstufen-Automatgetriebe nach einem der Ansprüche 1 bis 9, **dadurch gekennzeichnet, dass** Lamellenpakete (300, 400) des dritten und vierten Schaltelementes (C, D) auf einem zumindest ähnlichem Durchmesser nebeneinander angeordnet sind.

11. Mehrstufen-Automatgetriebe nach einem der Ansprüche 1 bis 10, **dadurch gekennzeichnet, dass** das erste Schaltelement (A) räumlich gesehen auf der dem zweiten Planetenradsatz (RS2) abgewandten Seite des dritten Planetenradsatzes (RS3) angeordnet ist.

12. Mehrstufen-Automatgetriebe nach einem der Ansprüche 1 bis 11, **dadurch gekennzeichnet, dass** das erste Schaltelement (A) räumlich gesehen in einem Bereich radial über den Planetenradsätzen (RS1, RS2, RS3) angeordnet ist, insbesondere in einem Bereich radial über dem dritten Planetenradsatz (RS3).

13. Mehrstufen-Automatgetriebe nach einem der Ansprüche 1 bis 12, **dadurch gekennzeichnet, dass** die aus dem zweiten und fünften Schaltelement (B, E) bestehende Baugruppe unmittelbar an eine Außenwand des Getriebegehäuses (GG) oder einen mit dem Getriebegehäuse (GG) verdrehfest verbundenen Gehäusedeckel angrenzt.

14. Mehrstufen-Automatgetriebe nach einem der Ansprüche 1 bis 13, **dadurch gekennzeichnet, dass** der für das zweite und fünfte Schaltelement (B, E) gemeinsame Lamellenträger (ZYLBE) als Außenlamellenträger des zweiten und fünften Schaltelementes (B, E) ausgebildet ist, insbesondere zur Aufnahme von Außenlamellen der Lamellenpakete (200, 500) des zweiten und fünften Schaltelementes (B, E).

15. Mehrstufen-Automatgetriebe nach einem der Ansprüche 1 bis 14 **dadurch gekennzeichnet, dass** Antriebswelle (AN) und Abtriebswelle (AB) nicht koaxial zueinander verlaufen, insbesondere dass Antriebswelle (AN) und Abtriebswelle (AB) achsparallel oder winklig zueinander verlaufen.

16. Mehrstufen-Automatgetriebe nach einem der Ansprüche 1 bis 15, **dadurch gekennzeichnet, dass** eine Stimradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist, wobei ein erstes Stirnrad (STR1) der Stimradstufe (STST) bzw. ein erstes Kettenrad (KTR1) des Kettentriebs axial zwischen dem dritten Planetenradsatz (RS3) und dem ersten Schaltelement (A) angeordnet ist.

17. Mehrstufen-Automatgetriebe nach Anspruch 16, **dadurch gekennzeichnet, dass** das erste Stirnrad (STR1) der Stimradstufe (STST) bzw. das erste Kettenrad (KTR1) des Kettentriebs an einer Gehäusezwischenwand (GZ) gelagert ist, die axial zwischen Stirnradstufe (STST) bzw. Kettentrieb und drittem Planetenradsatz (RS3) angeordnet ist, wobei diese Gehäusezwischenwand (GZ) verdrehfest mit dem Getriebegehäuse (GG) verbunden oder zusammen mit dem Getriebegehäuse (GG) einstückig ausgeführt ist.

18. Mehrstufen-Automatgetriebe nach Anspruch 16, **dadurch gekennzeichnet, dass** das erste Stirnrad (STR1) der Stirnradstufe (STST) bzw. das erste Kettenrad (KTR1) des Kettentriebs an einer Gehäusezwischenwand (GZ) bzw. an einer Lagerplatte (LAG) gelagert ist, die axial zwischen Stimradstufe (STST) bzw. Kettentrieb und erstem Schaltelement (A) angeordnet ist, wobei diese Gehäusezwischenwand (GZ) bzw. Lagerplatte (LAG) verdrehfest mit dem Getriebegehäuse (GG) verbunden oder zusammen mit dem Getriebegehäuse (GG) einstückig ausgeführt ist, oder wobei die Lagerplatte (LAG) verdrehfest mit einer getriebegehäusefesten Gehäusewand (GW) verbunden ist.

19. Mehrstufen-Automatgetriebe nach Anspruch 16, 17 oder 18, **dadurch gekennzeichnet, dass** das Sonnenrad (SO3) des dritten Planetenradsatzes (RS3) oder eine mit dem Sonnenrad (SO3) des dritten Planetenradsatzes (RS3) wirkverbundene Sonnenwelle (SOW3) oder eine Nabe des Eingangselementes (120) des ersten Schaltelementes die Gehäusezwischenwand (GZ) und das erste Stirnrad (STR1) der Stimradstufe (STST) bzw. das erste Kettenrad (KTR1) des Kettentriebs zentrisch durchgreift.

20. Mehrstufen-Automatgetriebe nach einem der Ansprüche 1 bis 15, **dadurch gekennzeichnet, dass** eine Stirnradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist, wobei ein erstes Stirnrad (STR1) der Stimradstufe (STST) bzw. ein erstes Kettenrad (KTR1) des Kettentriebs an eine Außenwand des Getriebegehäuses (GG) oder einen getriebegehäusefesten Gehäusedeckel angrenzt.

21. Mehrstufen-Automatgetriebe nach Anspruch 20, **dadurch gekennzeichnet, dass** das erste Stirnrad (STR1) der Stimradstufe (STST) bzw. das erste Kettenrad (KTR1) des Kettentriebs an der Außenwand des Getriebegehäuses (GG) bzw. dem getriebegehäusefesten Gehäusedeckel und/oder auf der Antriebswelle (AN) gelagert ist.

22. Mehrstufen-Automatgetriebe nach Anspruch 20 oder 21, **dadurch gekennzeichnet, dass** das erste Schaltelement (A) räumlich gesehen zwischen dem dritten Planetenradsatz (RS3) und dem ersten Stirnrad (STR1) der Stimradstufe (STST) bzw. zwischen dem dritten Planetenradsatz (RS3) und dem ersten Kettenrad (KTR1) des Kettentriebs angeordnet ist.

23. Mehrstufen-Automatgetriebe nach Ansprüche 20 oder 21, **dadurch gekennzeichnet, dass** das erste Schaltelement (A) räumlich gesehen innerhalb eines Zylinderraumes angeordnet ist, der durch das erste Kettenrad (KTR1) des Kettentriebs gebildet wird, wobei das erste Schaltelement (A) axial an den dritten Planetenradsatz (RS3) angrenzt.

24. Mehrstufen-Automatgetriebe nach Anspruch 23, **dadurch gekennzeichnet, dass** ein Lamellenpaket (100) des ersten Schaltelementes (A) axial an den dritten Planetenradsatz (RS3) angrenzt.

25. Mehrstufen-Automatgetriebe nach einem der Ansprüche 1 bis 14 **dadurch gekennzeichnet, dass** Antriebswelle (AN) und Abtriebswelle (AB) koaxial zueinander verlaufen:

26. Mehrstufen-Automatgetriebe nach Anspruch 25, **dadurch gekennzeichnet, dass** die mit dem Hohlrad (HO1) des ersten Planetenradsatzes (RS1) wirkverbundene Abtriebswelle (AB) den dritten Planetenradsatz (RS3) in axialer Richtung zentrisch durchgreift.

27. Mehrstufen-Automatgetriebe nach Anspruch 25 oder 26, **dadurch gekennzeichnet, dass** die mit dem Hohlrad (HO1) des ersten Planetenradsatzes (RS1) wirkverbundene Abtriebswelle (AB) einen Kupplungsraum des ersten Schaltelementes (A) in axialer Richtung zentrisch durchgreift.

28. Mehrstufen-Automatgetriebe nach einem der vorigen Ansprüche, **dadurch gekennzeichnet, dass** ein Außenlamellenträger des ersten Schaltelementes (A) in das Getriebegehäuse (GG) oder in eine getriebegehäusefeste Gehäusewand (GW) integriert ist.

29. Mehrstufen-Automatgetriebe nach einem der vorigen Ansprüche, **dadurch gekennzeichnet, dass** eine Servoeinrichtung (110) des ersten Schaltelementes (A) in das Getriebegehäuse (GG) oder in eine getriebegehäusefeste Gehäusewand (GW) integriert ist.

30. Mehrstufen-Automatgetriebe nach einem der vorigen Ansprüche, **dadurch gekennzeichnet, dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Betätigungsrichtungen der Servoeinrichtungen (210, 510) des zweiten und fünften Schaltelementes (B, E) beim Betätigen des jeweiligen Lamellenpaketes (200, 500) entgegengesetzt sind,
- die Druckräume (211, 511) der Servoeinrichtungen (210, 510) des zweiten und fünften Schaltelementes (B, E) unmittelbar benachbart zueinander angeordnet sind und dabei durch eine Mantelfläche des für das zweite und fünfte Schaltelement (B, E) gemeinsamen Lamellenträgers (ZYLBE) voneinander getrennt sind und
- ein Kolben (214) der Servoeinrichtung (210) des zweiten Schaltelementes (B) das Lamellenpaket (200) des zweiten Schaltelementes (B) in axialer Richtung radial außen vollständig übergreift und einen Betätigungs-Stempel (216) aufweist, welcher von der Seite des Lamellenpaketes (200) des zweiten Schaltelementes (B) aus auf dieses Lamellenpaket (200) wirkt, die dem Druckraum (211) der Servoeinrichtung (210) des zweiten Schaltelementes (B) gegenüberliegt.

31. Mehrstufen-Automatgetriebe nach einem der vorigen Ansprüche, **dadurch gekennzeichnet, dass** die Kontur des Kolbens (214) der Servoeinrichtung (210) des zweiten Schaltelementes (B) einer Außenkontur des für das zweite und fünfte Schaltelement (B, E) gemeinsamen Lamellenträgers (ZYLBE) angepaßt ist.

32. Mehrstufen-Automatgetriebe nach einem der vorigen Ansprüche, **dadurch gekennzeichnet, dass** die Servoeinrichtung (210) des zweiten Schaltelementes (B) für ihren dynamischen Druckausgleich einen Druckausgleichsraum (212) aufweist, der auf der Seite des Druckraums (211) der Servoeinrichtung (210) des zweiten Schaltelementes (B) angeordnet ist, die dem Druckraum (511) der Servoeinrichtung (510) des fünften Schaltelementes (E) gegenüber liegt, und dass die Servoeinrichtung (510) des fünften Schaltelementes (E) für ihren dynamischen Druckausgleich einen Druckausgleichsraum (512) aufweist, der auf der Seite des Druckraums (511) der Servoeinrichtung (510) des fünften Schaltelementes (E) angeordnet ist, die dem Druckraum (211) der Servoeinrichtung (210) des zweiten Schaltelementes (B) gegenüber liegt.

33. Mehrstufen-Automatgetriebe nach einem der vorigen Ansprüche, **dadurch gekennzeichnet, dass** die Servoeinrichtung (510) des fünften Schaltelementes (E) das Lamellenpaket (500) des fünften Schaltelementes (E) axial in Richtung des ersten Planetenradsatzes (RS1) betätigt, und dass die Servoeinrichtung (210) des zweiten Schaltelementes (B) das Lamellenpaket (200) des zweiten Schaltelementes (B) axial in zum ersten Planetenradsatzes (RS1) entgegengesetzter Richtung betätigt.

34. Mehrstufen-Automatgetriebe nach einem der vorigen Ansprüche, **dadurch gekennzeichnet, dass** die Servoeinrichtung (210) des zweiten Schaltelementes (B) und/oder die Servoeinrichtung (510) des fünften Schaltelementes (E) an der Antriebswelle (AN) gelagert ist.

35. Mehrstufen-Automatgetriebe nach einem der vorigen Ansprüche, **dadurch gekennzeichnet, dass** eine Druckmittelzuführung (218, 518) zum Druckraum (211, 511) des zweiten und/oder fünften Schaltelementes (B, E) und/oder eine Schmiermittelzuführung (219, 519) zum Druckausgleichsraum (212, 512) des zweiten und/oder fünften Schaltelementes (B, E) zumindest abschnittsweise über eine getriebegehäusefeste Nabe (GN) erfolgt.

36. Mehrstufen-Automatgetriebe nach einem der vorigen Ansprüche, **dadurch gekennzeichnet, dass** das zweite und fünfte Schaltelement (B, E) vollkommen unabhängig voneinander betätigbar sind, insbesondere dass eine Betätigung des Lamellenpaketes (200) des zweiten Schaltelementes (B) keine mechanische Rückwirkung auf das Lamellenpaket (500) des fünften Schaltelementes (E) ausübt und eine Betätigung des Lamellenpaketes (500) des fünften Schaltelementes (E) keine mechanische Rückwirkung auf das Lamellenpaket (200) des zweiten Schaltelementes (B) ausübt.

37. Mehrstufen-Automatgetriebe nach einem der Ansprüche 1 bis 36, **dadurch gekennzeichnet, dass** die Betätigungsrichtung einer Servoeinrichtung (310) des dritten Schaltelementes (C) und die Betätigungsrichtung einer Servoeinrichtung (410) des vierten Schaltelementes (D) beim Zuschalten des jeweiligen Schaltelementes (C, D) zueinander entgegengesetzt sind.

38. Mehrstufen-Automatgetriebe nach einem der Ansprüche 1 bis 36, **dadurch gekennzeichnet, dass** die Betätigungsrichtung einer Servoeinrichtung (310) des dritten Schaltelementes (C) und die Betätigungsrichtung einer Servoeinrichtung (410) des vierten Schaltelementes (D) beim Zuschalten des jeweiligen Schaltelementes (C, D) gleichgerichtet sind.

39. Mehrstufen-Automatgetriebe nach einem der vorigen Ansprüche, **dadurch gekennzeichnet, dass** mindestens eine der beiden Servoeinrichtungen (310, 410) des dritten und vierten Schaltelementes (C, D) axial zwischen den Lamellenpaketen (300, 400) des dritten und vierten Schaltelementes (C, D) angeordnet ist.

40. Mehrstufen-Automatgetriebe nach einem der vorigen Ansprüche, **dadurch gekennzeichnet, dass** durch selektives Schließen der Schaltelemente (A bis E) mindestens sechs Vorwärtsgänge derart schaltbar sind, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

41. Mehrstufen-Automatgetriebe nach einem der vorigen Ansprüche, **dadurch gekennzeichnet, dass** in dem ersten Vorwärtsgang das erste und vierte Schaltelement (A, D), in dem zweiten Vorwärtsgang das erste und dritte Schaltelement (A, C), in dem dritten Vorwärtsgang das erste und zweite Schaltelement (A, B), in dem vierten Vorwärtsgang das erste und fünfte Schaltelement (A, E), in dem fünften Vorwärtsgang das zweite und fünfte Schaltelement (B, E), in dem sechsten Vorwärtsgang das dritte und fünfte Schaltelement (C, E), und in einem Rückwärtsgang das zweite und vierte Schaltelement (B, D) geschlossen sind.

## Claims

1. Multistep automatic transmission with a drive shaft (AN), an output shaft (AB), at least three separate planetary gearsets (RS1, RS2, RS3), and at least five shifting components (A-E), with
- the three planetary gearsets (RS1, RS2, RS3) being arranged coaxially in series next to each other;
- the second planetary gearset (RS2) being arranged between the first and the third planetary gearsets (RS1, RS3);
- a sun gear (SO3) of the third planetary gearset (RS3) being lockable to a transmission housing (GG) of the multistep automatic transmission via the first shifting component (A);
- the drive shaft (AN) being connected to a sun gear (SO2) of the second planetary gearset (RS2);
- the drive shaft (AN) being connectable via the second shifting component (B) to a sun gear (SO2) of the first planetary gearset (RS1) and via the fifth shifting component (E) to a spider (ST1) of the first planetary gearset (RS1);
- the sun gear (SO1) of the first planetary gearset (RS1) being lockable to the transmission housing (GG) via the third shifting component (C) and the spider (ST1) of the first planetary gearset (RS1) being lockable to the transmission housing (GG) via the fourth shifting component (D);
- the output shaft (AB) and a ring gear (HO1) of the first planetary gearset (RS1) and a spider (ST3) of the third planetary gearset (RS3) being connected to each other, and a spider (ST2) of the second planetary gearset (RS2) being connected to a ring gear (HO3) of the third planetary gearset (RS3), and the spider (ST1) of the first planetary gearset (RS1) being connected to a ring gear (HO2) of the second planetary gearset (RS2),
**characterized in that** the second and fifth shifting components (B, E) are combined as an assembly with
- one disk set (200, 500) each of the second and fifth shifting components (B, E);
- one servo unit (210, 510) each of the second and fifth shifting components (B, E) for actuation of the respective disk set (200, 500) of the second or fifth shifting component (B, E), and
- a common disk carrier (ZYLBE) for the second and fifth shifting components (B, E) for receiving the disk sets (200, 500) of the second and fifth shifting components (B,E);
with
- this assembly with the second and fifth shifting components (B,E) being adjacent to the first planetary gearset (RS1);
- the disk sets (200, 500) of the second and fifth shifting component (B, E) being arranged axially next to each other;
- the disk set (200) of the second shifting component (B) being arranged closer to the second planetary gearset (RS2) than the disk set (500) of the fifth shifting component (E); and
- a pressurized chamber (511) of the servo unit (510) of the fifth shifting component (E) being arranged closer to the first planetary gearset (RS1) than a pressurized chamber (211) of the servo unit (210) of the second shifting component (B);
and the fourth shifting component (D) being arranged radially above the planetary gearsets (RS1, RS2, RS3); especially when viewed in axial direction, radially above the second and/or third planetary gearset/s (RS2, RS3).

2. Multistep automatic transmission with a drive shaft (AN), an output shaft (AB), at least three separate planetary gearsets (RS1, RS2, RS3), and at least five shifting components (A-E), with
- the three planetary gearsets (RS1, RS2, RS3) being arranged coaxially in series next to each other;
- the second planetary gearset (RS2) being arranged between the first and the third planetary gearsets (RS1, RS3);
- a sun gear (SO3) of the third planetary gearset (RS3) being lockable to a transmission housing (GG) of the multistep automatic transmission via the first shifting component (A);
- the drive shaft (AN) being connected to a sun gear (SO2) of the second planetary gearset (RS2);
- the drive shaft (AN) being connectable via the second shifting component (B) to a sun gear (SO1) of the first planetary gearset (RS1) and via the fifth shifting component (E) to a spider (ST1) of the first planetary gearset (RS1);
- the sun gear (SO1) of the first planetary gearset (RS1) being lockable to the transmission housing (GG) via the third shifting component (C), and the spider (ST1) of the first planetary gearset (RS1) being lockable to the transmission housing (GG) via the fourth shifting component (D);
- the output shaft (AB) and the ring gear (HO1) of the first planetary gearset (RS1) and the spider (ST2) of the second planetary gearset (RS2) being connected to each other, and the spider (ST3) of the third planetary gearset (RS3) being connected to the ring gear (HO2) of the second planetary gearset (RS2), and the spider (ST1) of the first planetary gearset (RS1) being connected to the ring gear (HO3) of the third planetary gearset (RS3);
**characterized in that** the second and fifth shifting components (B, E) are combined in an assembly with
- one disk set (200, 500) each of the second and fifth shifting components (B, E);
- one servo unit (210, 510) each of the second and fifth shifting components (B, E) for actuation of the respective disk set (200, 500) of the second or fifth shifting component (B, E), and
- a common disk carrier (ZYLBE) for the second and fifth shifting components (B, E) for receiving the disk sets (200, 500) of the second and fifth shifting components (B, E);
with
- this assembly with the second and fifth shifting components (B, E) being adjacent to the first planetary gearset (RS1);
- the disk sets (200, 500) of the second and fifth shifting components (B, E) being arranged axially next to each other;
- the disk set (200) of the second shifting component (B) being arranged closer to the second planetary gearset (RS2) than the disk set (500) of the fifth shifting component (E); and
- a pressurized chamber (511) of the servo unit (510) of the fifth shifting component (E) being arranged closer to the first planetary gearset (RS1) than a pressurized chamber (211) of the servo unit (210) of the second shifting component (B);
and the fourth shifting component (D) being arranged radially above the planetary gearsets (RS1, RS2, RS3); especially when viewed in axial direction, radially above the second and/or third planetary gearset/s (RS2, RS3).

3. Multistep automatic transmission according to claim 1 or 2, **characterized in that** the friction surface diameter of the disk sets (200, 500) of the second and fifth shifting components (B, E) is at least very much the same.

4. Multistep automatic transmission according to claim 3, **characterized in that** the disk set (200) of the second shifting component (B) and the disk set (500) of the fifth shifting component (E) are arranged axially next to each other on an at least similar diameter, with the disk set (200) of the second shifting component (B) being arranged closer to the first planetary gearset (RS1) than the disk set (500) of the fifth shifting component (E).

5. Multistep automatic transmission according to claim 1 or 2, **characterized in that** the disk set (200) of the second shifting component (B) features a larger friction surface diameter than the disk set (504) of the fifth shifting component (E).

6. Multistep automatic transmission according to claim 4, **characterized in that** the disk set (200) of the second shifting component (B) is arranged at least partially radially above the first planetary gearset (RS1), viewed in axial direction; and that the disk set (500) of the fifth shifting component (E) is arranged at least partially axially beside the first planetary gearset (RS1), viewed in radial direction.

7. Multistep automatic transmission according to one of the claims 1 through 6, **characterized in that** the third shifting component (C) is arranged axially beside the disk set (200) of the second shifting component (B).

8. Multistep automatic transmission according to claim 7, **characterized in that** the third shifting component (C) is arranged radially above the planetary gearsets (RS1, RS2, RS3), especially when viewed in axial direction, radially above the first and/or second planetary gearset/s (RS1, RS2).

9. Multistep automatic transmission according to one of the claims 1 through 8, **characterized in that** the fourth shifting component (D) is arranged closer to the third planetary gearset (RS3) than the third shifting component (C).

10. Multistep automatic transmission according to one of the claims 1 through 9, **characterized in that** disk sets (300, 400) of the third and fourth shifting components (C, D) are arranged next to each other on an at least similar diameter.

11. Multistep automatic transmission according to one of the claims 1 through 10, **characterized in that** the first shifting component (A) is arranged on the side of the third planetary gearset (RS3) not facing the second planetary gearset (RS2).

12. Multistep automatic transmission according to one of the claims 1 through 11, **characterized in that** the first shifting component (A) is arranged radially above the planetary gearsets (RS1, RS2, RS3), especially in an area radially above the third planetary gearset (RS3).

13. Multistep automatic transmission according to one of the claims 1 through 12, **characterized in that** the assembly composed of the second and fifth shifting components (B, E) is immediately adjacent to an outer wall of the transmission housing (GG) or to a housing cover connected torsionally stiff with the transmission housing (GG).

14. Multistep automatic transmission according to one of the claims 1 through 13, **characterized in that** the disk carrier (ZYLBE) shared by the second and fifth shifting components (B, E) is designed as external disk carrier of the second and fifth shifting components (B, E), especially for receiving external disks of the disk sets (200, 500) of the second and fifth shifting components (B, E).

15. Multistep automatic transmission according to one of the claims 1 through 14, **characterized in that** drive shaft (AN) and output shaft (AB) are not arranged coaxially in relation to each other; in particular that drive shaft (AN) and output shaft (AB) are arranged paraxially or at angles to each other.

16. Multistep automatic transmission according to one of the claims 1 through 15, **characterized in that** a spur gear stage (STST) or a chain drive is provided, through which the ring gear (HO1) of the first planetary gearset (RS1) and the spider (ST3, ST2) of the third or second planetary gearset (RS3, RS2), which is connected to this ring gear (HO1), are actively connected to the output shaft (AB), with a first spur gear (STR1) of the spur gear stage (STST) or a first chain wheel (KTR1) of the chain drive being arranged axially between the third planetary gearset (RS3) and the first shifting component (A).

17. Multistep automatic transmission according to claim 16, **characterized in that** the first spur gear (STR1) of the spur gear stage (STST) or the first chain wheel (KTR1) of the chain drive is supported on a housing partition wall (GZ) which is arranged axially between the spur gear stage (STST) or the chain drive and the third planetary gearset (RS3), with this housing partition wall (GZ) being nonrotationally connected to the transmission housing (GG) or forming a single piece with the transmission housing (GG).

18. Multistep automatic transmission according to claim 16, **characterized in that** the first spur gear (STR1) of the spur gear stage (STST) or the first chain wheel (KTR1) of the chain drive is supported on a housing partition wall (GZ) or on a supporting plate (LAG), which is arranged axially between the spur gear stage (STST) or the chain drive and the first shifting component (A), with this housing partition wall (GZ) or supporting plate (LAG) being nonrotationally connected to the transmission housing (GG) or forming a single piece with the transmission housing (GG), or with the supporting plate (LAG) being nonrotationally connected to a housing wall (GW).

19. Multistep automatic transmission according to claim 16, 17 or 18, **characterized in that** the sun gear (SO3) of the third planetary gearset (RS3), or a sun shaft (SOW3) which is actively connected to the sun gear (SO3) of the third planetary gearset (RS3), or a hub of the input element (120) of the first shifting component, centrally extends through the housing partition wall (GZ) and the first spur gear (STR1) of the spur gear stage (STST) or the first chain wheel (KTR1) of the chain drive.

20. Multistep automatic transmission according to one of the claims 1 through 15, **characterized in that** a spur gear stage (STST) or a chain drive is provided, through which the ring gear (HO1) of the first planetary gearset (RS1) and the spider (ST3, ST2) of the third or second planetary gearset (RS3, RS2), which is connected to this ring gear (HO1), are actively connected to the output shaft (AB), with a fist spur gear (STR1) of the spur gear stage (STST) or a first chain wheel (KTR1) of the chain drive being adjacent to an external wall of the transmission housing or a housing cover of the transmission housing.

21. Multistep automatic transmission according to claim 20, **characterized in that** the first spur gear (STR1) of the spur gear stage (STST) or the first chain wheel (KTR1) of the chain drive is supported on the external wall of the transmission housing (GG) or the housing cover and/or on the drive shaft (AN).

22. Multistep automatic transmission according to claim 20 or 21, **characterized in that** the first shifting component (A) is arranged between the third planetary gearset (RS3) and the first spur gear (STR1) of the spur gear stage (STST) or between the third planetary gearset (RS3) and the first chain wheel (KTR1) of the chain drive.

23. Multistep automatic transmission according to claim 20 or 21, **characterized in that** the first shifting component (A) is arranged within a cylindrical space formed by the first chain wheel (KTR1) of the chain drive, with the first shifting component (A) being axially adjacent to the third planetary gearset (RS3).

24. Multistep automatic transmission according to claim 23, **characterized in that** a disk set (100) of the first shifting component (A) is arranged axially adjacent to the third planetary gearset (RS3).

25. Multistep automatic transmission according to one of the claims 1 through 14, **characterized in that** drive shaft (AN) and output shaft (AB) are arranged coaxially in relation to each other.

26. Multistep automatic transmission according to claim 25, **characterized in that** the output shaft (AB), which is actively connected to the ring gear (HO1) of the first planetary gearset (RS1), centrally extends through the third planetary gearset (RS3) in axial direction.

27. Multistep automatic transmission according to claim 25 or 26, **characterized in that** the output shaft (AB), which is actively connected to the ring gear (HO1) of the first planetary gearset (RS1), centrally extends through a clutch space of the first shifting component (A) in axial direction.

28. Multistep automatic transmission according to one of the preceding claims, **characterized in that** an external disk carrier of the first shifting component (A) is integrated into the transmission housing (GG) or a housing wall (GW) of the transmission housing.

29. Multistep automatic transmission according to one of the preceding claims, **characterized in that** a servo unit (110) of the first shifting component (A) is integrated into the transmission housing (GG) or a housing wall (GW) of the transmission housing.

30. Multistep automatic transmission according to one of the preceding claims,
**characterized in that**
- the disk carrier (ZYLBE) shared by the second and fifth shifting components (B, E) forms a clutch space within which the disk set (500) of the fifth shifting component (E) and the servo unit (510) of the fifth shifting component (E) are arranged;
- the servo units (210, 510) of the second and fifth shifting components (B, E) actuate in opposite directions when the respective disk sets (200, 500) are actuated;
- the pressurized chambers (211, 511) of the servo units (210, 510) of the second and fifth shifting components (8, E) are arranged immediately adjacent to each other while being separated from each other by a lateral area of the disk carrier (ZYLBE) shared by the second and fifth shifting components (B, E); und
- that a piston (214) of the servo unit (210) of the second shifting component (B) externally radially completely overlaps the disk set (200) of the second shifting component (B) in axial direction and features a control piston (216) which from the side of the disk set (200) of the second shifting component (B) acts on this disk set (200), which is arranged opposite to the pressurized chamber (211) of the servo unit (210) of the second shifting component (B).

31. Multistep automatic transmission according to one of the preceding claims, **characterized in that** the contour of the piston (214) of the servo unit (210) of the second shifting component (B) is adapted to the outer contour of the disk carrier (ZYLBE) shared by the second and fifth shifting components (B, E).

32. Multistep automatic transmission according to one of the preceding claims, **characterized in that** the servo unit (210) of the second shifting component (B) features a pressure equalization chamber (212) for dynamic pressure equalization which is arranged on the side of the pressurized chamber (211) of the servo unit (210) of the second shifting component (B) opposite to the pressurized chamber (511) of the servo unit (510) of the fifth shifting component (E); and that the servo unit (510) of the fifth shifting component (E) features a pressure equalization chamber (512) for dynamic pressure equalization which is arranged on the side of the pressurized chamber (511) of the servo unit (510) of the fifth shifting component (E) opposite to the pressurized chamber (211) of the servo unit (210) of the second shifting component.

33. Multistep automatic transmission according to one of the preceding claims, **characterized in that** the servo unit (510) of the fifth shifting component (E) actuates the disk set (500) of the fifth shifting component (E) axially towards the first planetary gearset (RS1) and that the servo unit (210) of the second shifting component (B) actuates the disk set (200) of the second shifting component (B) axially away from the first planetary gearset (RS1).

34. Multistep automatic transmission according to one of the preceding claims, **characterized in that** the servo unit (210) of the second shifting component (B) and/or the servo unit (510) of the fifth shifting component (E) are/is supported on the drive shaft (AN).

35. Multistep automatic transmission according to one of the preceding claims, **characterized in that**, at least sectionally, pressurized-agent supply (218, 518) to the pressurized chamber (211, 511) of the second and/or fifth shifting component (B, E) and/or lubricant supply (219, 519) to the pressure equalization chamber (212, 512) of the second and/or fifth shifting components (8, E) are/is realized via a transmission-fixed hub (GN).

36. Multistep automatic transmission according to one of the preceding claims, **characterized in that** the second and fifth shifting components (B, E) are independently operable, in particular that actuation of the disk set (200) of the second shifting component (B) does not produce any mechanical repercussions on the disk set (500) of the fifth shifting component (E) and actuation of the disk set (500) of the fifth shifting component (E) does not produce any mechanical repercussions on the disk set (200) of the second shifting component (8).

37. Multistep automatic transmission according to one of the claims 1 through 36, **characterized in that** the directions of actuation of a servo unit (310) of the third shifting component (C) and of a servo unit (410) of the fourth shifting component (D) are opposed to each other when the respective shifting components (C, D) are actuated.

38. Multistep automatic transmission according to one of the claims 1 through 36, **characterized in that** the directions of actuation of a servo unit (310) of the third shifting component (C) and of a servo unit (410) of the fourth shifting component (D) are unidirectional when the respective shifting components (C, D) are actuated.

39. Multistep automatic transmission according to one of the preceding claims, **characterized in that** at least one of the two servo units (310, 410) of the third and fourth shifting components (C, D) is arranged axially between the disk sets (300, 400) of the third and fourth shifting components (C, D).

40. Multistep automatic transmission according to one of the preceding claims, **characterized in that** through selective locking of the shifting components (A - E) at least six forward gears can be shifted in such a way that for shifting up or down to the next gear in each case only one of the shifting components being actuated is unlocked and another shifting component is locked.

41. Multistep automatic transmission according to one of the preceding claims, **characterized in that** in the first forward gear the first and fourth shifting components (A, D) are locked, while in the second forward gear the first and third shifting components (A, C) and in the third forward gear the first and second shifting components (A, B), in the fourth forward gear the first and fifth shifting components (A, E), in the fifth forward gear the second and fifth shifting components (B, E), in the sixth forward gear the third and fifth shifting components (C, E), and in a reverse gear the second and fourth shifting components (B, D) are locked.

## Revendications

1. Transmission automatique à plusieurs étages dotée d'un arbre d'entrée (AN), d'un arbre de sortie (AB), d'au moins trois trains épicycloïdaux individuels (RS1, RS2, RS3), ainsi que d'au moins cinq éléments de commande (A à E), sachant que
- les trois trains épicycloïdaux (RS1, RS2, RS3) sont disposés coaxialement en série et juxtaposés,
- le deuxième train épicycloïdal (RS2) est disposé entre le premier et le troisième train épicycloïdal (RS1, RS3),
- un planétaire (SO3) du troisième train épicycloïdal (RS3) peut être fixé - à l'aide du premier élément de commande (A) - à un carter de la boîte de vitesses (GG) de la transmission automatique à plusieurs étages,
- l'arbre d'entrée (AN) est lié à un planétaire (SO2) du deuxième train épicycloïdal (RS2),
- l'arbre d'entrée (AN) peut être lié - à l'aide du deuxième élément de commande (B) - à un planétaire (SO1) du premier train épicycloïdal (RS1) et à l'aide du cinquième élément de commande (E) à une nervure (ST1) du premier train épicycloïdal (RS1),
- le planétaire (SO1) du premier train épicycloïdal (RS1) peut être lié - à l'aide du troisième élément de commande (C) - et la nervure (ST1) du premier train épicycloïdal (RS1) - à l'aide du quatrième élément de commande (D) - au carter de la boîte de vitesses (GG), et
- l'arbre de sortie (AB) et une couronne (HO1) du premier train épicycloïdal (RS1) et une nervure (ST3) du troisième train épicycloïdal (RS3) sont liés entre eux et une nervure (ST2) du deuxième train épicycloïdal (RS2) est lié à une couronne (HO3) du troisième train épicycloïdal (RS3) et la nervure (ST1) du premier train épicycloïdal (RSI) est liée à une couronne (H02) du deuxième train épicycloïdal (RS2),
**caractérisée en ce que** le deuxième et le cinquième élément de commande (B, E) sont regroupés dans un sous-ensemble, avec
- un ensemble de disques (200, 500) du deuxième et du cinquième élément de commande (B, E),
- un dispositif d'assistance (210, 510) du deuxième et du cinquième élément de commande (B, E) pour l'actionnement de l'ensemble de disques (200, 500) du deuxième et du cinquième élément de commande (B, E), ainsi que
- un porte-disques (ZYLBE) commun au deuxième et au cinquième élément de commande (B, E) pour le support des ensembles de disques (200, 500) du deuxième et du cinquième élément de commande (B, E),
sachant que
- ce sous-ensemble est adjacent au premier train épicycloïdal (RS1) avec le deuxième et le cinquième élément de commande (B, E),
- les ensembles de disques (200, 500) du deuxième et du cinquième élément de commande (B, E) sont juxtaposés axialement,
- l'ensemble de disques (200) du deuxième élément de commande (B) est disposé plus proche du deuxième train épicycloïdal (RS2) que l'ensemble de disques (500) du cinquième élément de commande (E) et
- une chambre de pression (511) du dispositif d'assistance (510) du cinquième élément de commande (E) est disposée plus proche du premier train épicycloïdal (RS1) qu'une chambre de pression (211) du dispositif d'assistance (210) du deuxième élément de commande (B)
et que le quatrième élément de commande (D) est disposé, en sens radial, dans une zone au-dessus des trains épicycloïdaux (RS1, RS2, RS3), en particulier, vu en sens axial, radialement au-dessus du deuxième et/ou du troisième train épicycloïdal (RS2, RS3).

2. Transmission automatique à plusieurs étages dotée d'un arbre d'entrée (AN), d'un arbre de sortie (AB), d'au moins trois trains épicycloïdaux individuels (RS1, RS2, RS3), ainsi que d'au moins cinq éléments de commande (A à E), sachant que
- les trois trains épicycloïdaux (RS1, RS2, RS3) sont disposés coaxialement en série et juxtaposés,
- le deuxième train épicycloïdal (RS2) est disposé entre le premier et le troisième train épicycloïdal (RS1, RS3),
- un planétaire (S03) du troisième train épicycloïdal (RS3) peut être fixé - à l'aide du premier élément de commande (A) - à un carter de la boîte de vitesses (GG) de la transmission automatique à plusieurs étages,
- l'arbre d'entrée (AN) est lié à un planétaire (SO2) du deuxième train épicycloïdal (RS2),
- l'arbre d'entrée (AN) peut être lié - à l'aide du deuxième élément de commande (B) - à un planétaire (SO1) du premier train épicycloïdal (RS1) et à l'aide du cinquième élément de commande (E) à une nervure (ST1) du premier train épicycloïdal (RS1),
- le planétaire (S01) du premier train épicycloïdal (RS1) peut être lié - à l'aide du troisième élément de commande (C) - et la nervure (ST1) du premier train épicycloïdal (RS1) - à l'aide du quatrième élément de commande (D) - au carter de la boîte de vitesses (GG),
- l'arbre de sortie (AB) et la couronne (HO1) du premier train épicycloïdal (RS1) et la nervure (ST2) du deuxième train épicycloïdal (RS2) sont liés entre eux et la nervure (ST3) du troisième train épicycloïdal (RS3) est liée à la couronne (H02) du deuxième train épicycloïdal (RS2) et la nervure (ST1) du premier train épicycloïdal (RS1) est liée à la couronne (H03) du troisième train épicycloïdal (RS3),
**caractérisée en ce que** le deuxième et le cinquième élément de commande (B, E) sont regroupés dans un sous-ensemble, avec
- un ensemble de disques (200, 500) du deuxième et du cinquième élément de commande (B, E),
- un dispositif d'assistance (210, 510) du deuxième et du cinquième élément de commande (B, E) pour l'actionnement de l'ensemble de disques (200, 500) du deuxième et du cinquième élément de commande (B, E), ainsi que
- un porte-disques (ZYLBE) commun au deuxième et au cinquième élément de commande (B, E) pour le support des ensembles de disques (200, 500) du deuxième et du cinquième élément de commande (B, E),
sachant que
- ce sous-ensemble est adjacent au premier train épicycloïdal (RS1) avec le deuxième et le cinquième élément de commande (B, E),
- les ensembles de disques (200, 500) du deuxième et du cinquième élément de commande (B, E) sont juxtaposés axialement,
- l'ensemble de disques (200) du deuxième élément de commande (B) est disposé plus proche du deuxième train épicycloïdal (RS2) que l'ensemble de disques (500) du cinquième élément de commande (E) et
- une chambre de pression (511) du dispositif d'assistance (510) du cinquième élément de commande (E) est disposée plus proche du premier train épicycloïdal (RS1) qu'une chambre de pression (211) du dispositif d'assistance (210) du deuxième élément de commande (B)
et que le quatrième élément de commande (D) est disposé, en sens radial, dans une zone au-dessus des trains épicycloïdaux (RS1, RS2, RS3), en particulier, vu en sens axial, radialement au-dessus du deuxième et/ou du troisième train épicycloïdal (RS2, RS3).

3. Transmission automatique à plusieurs étages selon la revendication 1 ou 2, **caractérisée en ce que** les ensembles de disques (200, 500) du deuxième et du cinquième élément de commande (B, E) comportent un diamètre de surface de friction au moins similaire.

4. Transmission automatique à plusieurs étages selon la revendication 3, **caractérisée en ce que** l'ensemble de disques (200) du deuxième élément de commande (B) et l'ensemble de disques (500) du cinquième élément de commande (E) sont juxtaposés en sens axial sur un diamètre au moins similaire, sachant que l'ensemble de disques (200) du deuxième élément de commande (B) est disposé plus proche du premier train épicycloïdal (RS1) que l'ensemble de disques (500) du cinquième élément de commande (E).

5. Transmission automatique à plusieurs étages selon la revendication 1 ou 2, **caractérisée en ce que** l'ensemble de disques (200) du deuxième élément de commande (B) comporte un diamètre de surface de friction majeur de l'ensemble de disques (504) du cinquième élément de commande (E).

6. Transmission automatique à plusieurs étages selon la revendication 4, **caractérisée en ce que** - vu dans le sens axial - l'ensemble de disques (200) du deuxième élément de commande (B) est disposé au moins partiellement radialement au-dessus du premier train épicycloïdal (RS1) et **en ce que** - vu dans le sens radial - l'ensemble de disques (500) du cinquième élément de commande (E) est disposé au moins partiellement axialement à côté du premier train épicycloïdal (RS1).

7. Transmission automatique à plusieurs étages selon une des revendications 1 à 6, **caractérisée en ce que** - vu dans le sens axial - le troisième élément de commande (C) est disposé à côté de l'ensemble de disques (200) du deuxième élément de commande (B).

8. Transmission automatique à plusieurs étages selon la revendication 7, **caractérisée en ce que** le troisième élément de commande (C) est disposé, radialement, dans une zone au-dessus des trains épicycloïdaux (RS1, RS2, RS3), en particulier, vu en sens axial, au-dessus du premier et/ou du deuxième train épicycloïdal (RS1, RS2).

9. Transmission automatique à plusieurs étages selon une des revendications 1 à 8, **caractérisée en ce que** le quatrième élément de commande (D) est disposé plus proche du troisième train épicycloïdal (RS3) que le troisième élément de commande (C).

10. Transmission automatique à plusieurs étages selon une des revendications 1 à 9, **caractérisée en ce que** les ensembles de disques (300, 400) du troisième et du quatrième élément de commande (C, D) sont juxtaposés sur un diamètre au moins similaire.

11. Transmission automatique à plusieurs étages selon une des revendications 1 à 10, **caractérisée en ce que** le premier élément de commande (A) est disposé sur le côté du troisième train épicycloïdal (RS3) opposé au deuxième train épicycloïdal (RS2).

12. Transmission automatique à plusieurs étages selon une des revendications 1 à 11, **caractérisée en ce que** le premier élément de commande (A) est disposé, radialement, dans une zone au-dessus des trains épicycloïdaux (RS1, RS2, RS3), en particulier, radialement, dans une zone au-dessus du troisième train épicycloïdal (RS3).

13. Transmission automatique à plusieurs étages selon une des revendications 1 à 12, **caractérisée en ce que** le sous-ensemble composé du deuxième et du cinquième élément de commande (B, E) est immédiatement adjacent à une paroi extérieure du carter de la boîte de vitesses (GG) ou à un couvercle du carter solidaire en rotation avec le carter de la boîte de vitesses (GG).

14. Transmission automatique à plusieurs étages selon une des revendications 1 à 13, **caractérisée en ce que** le porte-disques (ZYLBE) commun au deuxième et au cinquième élément de commande (B, E) est réalisé comme porte-disques extérieur du deuxième et du cinquième élément de commande (B, E), en particulier pour le logement de disques extérieurs des ensembles de disques (200, 500) du deuxième et du cinquième élément de commande (B, E).

15. Transmission automatique à plusieurs étages selon une des revendications 1 à 14, **caractérisée en ce que** l'arbre d'entrée (AN) et l'arbre de sortie (AB) ne sont pas disposés coaxialement l'un par rapport à l'autre, et **en ce que**, en particulier, l'arbre d'entrée (AN) et l'arbre de sortie (AB) sont disposés dans un plan parallèle à l'axe ou angulairement l'un par rapport à l'autre.

16. Transmission automatique à plusieurs étages selon une des revendications 1 à 15, **caractérisée en ce que** est prévu un étage à pignons cylindriques (STST) ou un entraînement par chaîne, par l'intermédiaire duquel la couronne (HO1) du premier train épicycloïdal (RS1) et la nervure (ST3, ST2) du troisième ou du deuxième train épicycloïdal (RS3, RS2), connectée avec cette couronne (HO1), est liée activement à l'arbre de sortie (AB), sachant que un premier pignon cylindrique (STR1) de l'étage à pignons cylindriques (STST) ou un premier pignon à chaîne (KTR1) de l'entraînement par chaîne est disposé axialement entre le troisième train épicycloïdal (RS3) et le premier élément de commande (A).

17. Transmission automatique à plusieurs étages selon la revendication 16, **caractérisée en ce que** le premier pignon cylindrique (STR1) de l'étage à pignons cylindriques (STST) ou le premier pignon à chaîne (KTR1) de l'entraînement par chaîne est logé au niveau d'une paroi intermédiaire du carter (GZ), laquelle est disposée axialement entre l'étage à pignons cylindriques (STST) ou l'entraînement par chaîne et le troisième train épicycloïdal (RS3), sachant que cette paroi intermédiaire du carter (GZ) est solidaire en rotation avec le carter de la boîte de vitesses (GG) ou est réalisée en une seule pièce avec le carter de la boîte de vitesses (GG).

18. Transmission automatique à plusieurs étages selon la revendication 16, **caractérisée en ce que** le premier pignon cylindrique (STR1) de l'étage à pignons cylindriques (STST) ou le premier pignon à chaîne (KTR1) de l'entraînement par chaîne est logé au niveau d'une paroi intermédiaire du carter (GZ) ou au niveau d'une plaque d'appui (LAG), celle-ci étant disposée axialement entre l'étage à pignons cylindriques (STST) ou l'entraînement par chaîne et un élément de commande (A), sachant que cette paroi intermédiaire du carter (GZ) ou cette plaque d'appui (LAG) est solidaire en rotation avec le carter de la boîte de vitesses (GG) ou qu'elle est réalisée en une seule pièce avec le carter de la boîte de vitesses (GG), ou sachant que la plaque d'appui (LAG) est solidaire en rotation avec la paroi du carter fixée au carter de la boîte de vitesses (GW).

19. Transmission automatique à plusieurs étages selon la revendication 16, 17 ou 18, **caractérisée en ce que** le planétaire (S03) du troisième train épicycloïdal (RS3) ou un arbre planétaire (SOW3) lié activement au planétaire (S03) du troisième train épicycloïdal (RS3) ou un moyeu de l'élément d'entrée (120) du premier élément de commande pénètre centriquement la paroi intermédiaire du carter (GZ) et le premier pignon cylindrique (STR1) de l'étage à pignons cylindriques (STST) ou le premier pignon à chaîne (KTR1) de l'entraînement par chaîne.

20. Transmission automatique à plusieurs étages selon une des revendications 1 à 15, **caractérisée en ce que** est prévu un étage à pignons cylindriques (STST) ou un entraînement par chaîne, par l'intermédiaire duquel la couronne (HO1) du premier train épicycloïdal (RS1) et la nervure (ST3, ST2) du troisième ou du deuxième train épicycloïdal (RS3, RS2), connectée avec cette couronne (HO1), est liée activement à l'arbre de sortie (AB), sachant que un premier pignon cylindrique (STR1) de l'étage à pignons cylindriques (STST) ou un premier pignon à chaîne (KTR1) de l'entraînement par chaîne est adjacent à une paroi extérieure du carter de la boîte de vitesses (GG) ou à un couvercle du carter fixé au carter de la boîte de vitesses.

21. Transmission automatique à plusieurs étages selon la revendication 20, **caractérisée en ce que** le premier pignon cylindrique (STR1) de l'étage à pignons cylindriques (STST) ou le premier pignon à chaîne (KTR1) de l'entraînement par chaîne est logé au niveau de la paroi extérieure du carter de la boîte de vitesses (GG) ou au niveau du couvercle du carter fixé au carter de la boîte de vitesses et/ou sur l'arbre d'entrée (AN).

22. Transmission automatique à plusieurs étages selon la revendication 20 ou 21, **caractérisée en ce que** le premier élément de commande (A) est disposé entre le troisième train épicycloïdal (RS3) et le premier pignon cylindrique (STR1) de l'étage à pignons cylindriques (STST) ou entre le troisième train épicycloïdal (RS3) et le premier pignon à chaîne (KTR1) de l'entraînement par chaîne.

23. Transmission automatique à plusieurs étages selon la revendication 20 ou 21, **caractérisée en ce que** le premier élément de commande (A) est disposé à l'intérieur d'une chambre de cylindre, celle-ci étant formée par le premier pignon à chaîne (KTR1) de l'entraînement par chaîne, sachant que le premier élément de commande (A) est adjacent axialement au troisième train épicycloïdal (RS3).

24. Transmission automatique à plusieurs étages selon la revendication 23, **caractérisée en ce que** un ensemble de disques (100) du premier élément de commande (A) est adjacent axialement au troisième train épicycloïdal (RS3).

25. Transmission automatique à plusieurs étages selon une des revendications 1 à 14, **caractérisée en ce que** l'arbre d'entrée (AN) et l'arbre de sortie (AB) sont disposés coaxialement l'un par rapport à l'autre.

26. Transmission automatique à plusieurs étages selon la revendication 25, **caractérisée en ce que** l'arbre de sortie (AB) lié activement à la couronne (HO1) du premier train épicycloïdal (RS1) pénètre centriquement et dans le sens axial le troisième train épicycloïdal (RS3).

27. Transmission automatique à plusieurs étages selon la revendication 25 ou 26, **caractérisée en ce que** l'arbre de sortie (AB) lié activement à la couronne (HO1) du premier train épicycloïdal (RS1) pénètre centriquement et dans le sens axial une chambre d'embrayage du premier élément de commande (A).

28. Transmission automatique à plusieurs étages selon une des revendications précédentes, **caractérisée en ce que** un porte-disques extérieur du premier élément de commande (A) est intégré dans le carter de la boîte de vitesses (GG) ou dans une paroi du carter fixée au carter de la boîte de vitesses (GW).

29. Transmission automatique à plusieurs étages selon une des revendications précédentes, **caractérisée en ce que** un dispositif d'assistance (110) du premier élément de commande (A) est intégré dans le carter de la boîte de vitesses (GG) ou dans une paroi du carter fixée au carter de la boîte de vitesses (GW).

30. Transmission automatique à plusieurs étages selon une des revendications précédentes,
**caractérisée en ce que**
- le porte-disques (ZYLBE) commun au deuxième et au cinquième élément de commande (B, E) forme une chambre d'embrayage dans laquelle sont disposés l'ensemble de disques (500) du cinquième élément de commande (E) et le dispositif d'assistance (510) du cinquième élément de commande (E),
- au moment de l'actionnement de l'ensemble de disques (200, 500), les dispositifs d'actionnement des dispositifs d'assistance (210, 510) du deuxième et du cinquième élément de commande (B, E) sont opposés,
- les chambres de pression (211, 511) des dispositifs d'assistance (210, 510) du deuxième et du cinquième élément de commande (B, E) sont disposées immédiatement juxtaposées l'une par rapport à l'autre, tout en étant séparées par une surface extérieure du porte-disques (ZYLBE) commun au deuxième et au cinquième élément de commande (B, E) et
- un piston (214) du dispositif d'assistance (210) du deuxième élément de commande (B) recouvre complètement et radialement l'extérieur de l'ensemble de disques (200) du deuxième élément de commande (B) en sens axial et **en ce qu'**il comporte un vérin d'actionnement (216), celui-ci agissant sur cet ensemble de disques (200) à partir du côté de l'ensemble de disques (200) du deuxième élément de commande (B) étant opposé à la chambre de pression (211) du dispositif d'assistance (210) du deuxième élément de commande (B).

31. Transmission automatique à plusieurs étages selon une des revendications précédentes, **caractérisée en ce que** le profil du piston (214) du dispositif d'assistance (210) du deuxième élément de commande (B) est adapté à un profil extérieur du porte-disques (ZYLBE) commun au deuxième et au cinquième élément de commande (B, E).

32. Transmission automatique à plusieurs étages selon une des revendications précédentes, **caractérisée en ce que** le dispositif d'assistance (210) du deuxième élément de commande (B) comporte une chambre de compensation de la pression (212) pour la compensation dynamique de la pression, laquelle est disposée du côté de la chambre de pression (211) du dispositif d'assistance (210) du deuxième élément de commande (B) étant opposé à la chambre de pression (511) du dispositif d'assistance (510) du cinquième élément de commande (E), et **en ce que** le dispositif d'assistance (510) du cinquième élément de commande (E) comporte une chambre de compensation de la pression (512) pour la compensation dynamique de la pression, laquelle est disposée du c ôté de la chambre de pression (511) du dispositif d'assistance (510) du cinquième élément de commande (E) étant opposé à la chambre de pression (211) du dispositif d'assistance (210) du deuxième élément de commande (6).

33. Transmission automatique à plusieurs étages selon une des revendications précédentes, **caractérisée en ce que** le dispositif d'assistance (510) du cinquième élément de commande (E) actionne l'ensemble de disques (500) du cinquième élément de commande (E) axialement dans la direction du premier train épicycloïdal (RS1), et **en ce que** le dispositif d'assistance (210) du deuxième élément de commande (B) actionne l'ensemble de disques (200) du deuxième élément de commande (B) axialement dans la direction opposée au premier train épicycloïdal (RSI).

34. Transmission automatique à plusieurs étages selon une des revendications précédentes, **caractérisée en ce que** le dispositif d'assistance (210) du deuxième élément de commande (B) et/ou le dispositif d'assistance (510) du cinquième élément de commande (E) est logé au niveau de l'arbre d'entrée (AN).

35. Transmission automatique à plusieurs étages selon une des revendications précédentes, **caractérisée en ce que** l'amenée du fluide sous pression (218, 518) à la chambre de pression (211, 511) du deuxième et/ou du cinquième élément de commande (B, E) et/ou l'amenée du lubrifiant (219, 519) à la chambre de compensation de pression (212, 512) du deuxième et/ou du cinquième élément de commande (B, E) s'effectue au moins partiellement par l'intermédiaire d'un moyeu solidaire du carter de la boîte de vitesses (GN).

36. Transmission automatique à plusieurs étages selon une des revendications précédentes, **caractérisée en ce que** le deuxième et le cinquième élément de commande (B, E) peuvent être actionnés d'une façon complètement indépendante l'un de l'autre, et, en particulier, **en ce que** l'actionnement de l'ensemble de disques (200) du deuxième élément de commande (B) n'exerce aucune action mécanique sur l'ensemble de disques (500) du cinquième élément de commande (E) et **en ce que** l'actionnement de l'ensemble de disques (500) du cinquième élément de commande (E) n'exerce aucune action mécanique sur l'ensemble de disques (200) du deuxième élément de commande (B).

37. Transmission automatique à plusieurs étages selon une des revendications 1 à 36, **caractérisée en ce que** lors de l'actionnement de l'élément de commande correspondant (C, D) le dispositif d'actionnement d'un dispositif d'assistance (310) du troisième élément de commande (C) et le dispositif d'actionnement d'un dispositif d'assistance (410) du quatrième élément de commande (D) sont disposés en position opposée.

38. Transmission automatique à plusieurs étages selon une des revendications 1 à 36, **caractérisée en ce que** lors de l'actionnement de l'élément de commande correspondant (C, D) le dispositif d'actionnement d'un dispositif d'assistance (310) du troisième élément de commande (C) et le dispositif d'actionnement d'un dispositif d'assistance (410) du quatrième élément de commande (D) sont disposés dans la même direction.

39. Transmission automatique à plusieurs étages selon une des revendications précédentes, **caractérisée en ce que** au moins un des deux dispositifs d'assistance (310, 410) du troisième et du quatrième élément de commande (C, D) est disposé axialement entre les ensembles de disques (300, 400) du troisième et du quatrième élément de commande (C, D).

40. Transmission automatique à plusieurs étages selon une des revendications précédentes, **caractérisée en ce que** par la fermeture sélective des éléments de commande (A à E) il est possible d'engager au moins six vitesses de marche avant de telle façon que, pour le passage d'un rapport au rapport immédiatement supérieur ou au rapport immédiatement inférieur, des éléments de commande qui viennent d'être actionnés à chaque fois n'est ouvert qu'un seul élément de commande et fermé un autre élément de commande.

41. Transmission automatique à plusieurs étages selon une des revendications, **caractérisée en ce que** dans la première vitesse de marche avant sont fermés le premier et le quatrième élément de commande (A, D), dans la deuxième vitesse de marche avant sont fermés le premier et le troisième élément de commande (A, C), dans la troisième vitesse de marche avant sont fermés le premier et le deuxième élément de commande (A, B), dans la quatrième vitesse de marche avant sont fermés le premier et le cinquième élément de commande (A, E), dans la cinquième vitesse de marche avant sont fermés le deuxième et le cinquième élément de commande (B, E), dans la sixième vitesse de marche avant sont fermés le troisième et le cinquième élément de commande (C, E), et dans une marche arrière sont fermés le deuxième et le quatrième élément de commande (B, D).
